(19) Europäisches Patentamt / European Patent Office / Office européen des brevets

(11) **EP 4 757 397 A1**

(12) **EUROPEAN PATENT APPLICATION**
published in accordance with Art. 153(4) EPC

(43) Date of publication:
**10.06.2026 Bulletin 2026/24**

(21) Application number: **23948370.4**

(22) Date of filing: **04.08.2023**

(51) International Patent Classification (IPC):
*H04W 24/10* (2009.01)   *H04W 16/28* (2009.01)
*H04W 72/232* (2023.01)

(52) Cooperative Patent Classification (CPC):
**H04W 16/28; H04W 24/10; H04W 72/232**

(86) International application number:
**PCT/JP2023/028619**

(87) International publication number:
**WO 2025/032649 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **NTT DOCOMO, INC.**
**Tokyo 100-6150 (JP)**

(72) Inventors:
• **MATSUMURA, Yuki**
  **Tokyo 100-6150 (JP)**
• **NAGATA, Satoshi**
  **Tokyo 100-6150 (JP)**
• **WANG, Jing**
  **Beijing 100190 (CN)**
• **CHEN, Lan**
  **Beijing 100190 (CN)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57)   A terminal according to one aspect of the present disclosure includes a receiving section that receives a configuration of an enhanced codebook based on an enhanced type 2 codebook for a channel state information (CSI)-reference signal (RS) using more than 32 ports, and a control section that controls, based on the configuration, a report of a precoding matrix indicator (PMI) based on the enhanced codebook.

FIG. 5A

FIG. 5B

## Description

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For future radio communication systems (for example, NR), it is studied that a terminal (User Equipment (UE)) controls transmission and reception processing, based on information related to quasi-co-location (QCL, a Transmission Configuration Indication (TCI) state, a beam).

However, when many periodic/semi-persistent channel state information-reference signals (CSI-RSs) are configured for management of many beams, resource use efficiency is reduced, and reduction in throughput and the like may be caused.

In view of this, the present disclosure has one object to provide a terminal, a radio communication method, and a base station that efficiently use CSI-RS resources.

Solution to Problem

A terminal according to one aspect of the present disclosure includes a receiving section that receives a configuration of an enhanced codebook based on an enhanced type 2 codebook for a channel state information (CSI)-reference signal (RS) using more than 32 ports, and a control section that controls, based on the configuration, a report of a precoding matrix indicator (PMI) based on the enhanced codebook.

Advantageous Effects of Invention

According to one aspect of the present disclosure, CSI-RS resources can be efficiently used.

Brief Description of Drawings

[FIG. 1] FIG. 1 is a diagram to show an example of CSI-RS locations in a slot.
[FIG. 2] FIG. 2A to FIG. 2D are diagrams to show examples of an FD-OCC and a TD-OCC.
[FIG. 3] FIG. 3 is a diagram to show an example of CSI-RS locations for each number of ports.
[FIG. 4] FIG. 4 is a diagram to show an example of mapping of a CSI-RS having 32 ports.
[FIG. 5] FIG. 5A and FIG. 5B are diagrams to show examples of the CSI-RS to which an inter-PRB OCC is applied.

[FIG. 6] FIG. 6A to FIG. 6C are diagrams to show examples of the inter-PRB OCC.

[FIG. 7] FIG. 7A and FIG. 7B are diagrams to show examples of overlapping of a previous-release CSI-RS and a new-release CSI-RS.

[FIG. 8] FIG. 8 is a diagram to show an example of CSI-RS measurement operation of a UE not configured with the inter-PRB OCC.

[FIG. 9] FIG. 9 is a diagram to show an example of the CSI-RS to which an inter-slot OCC is applied.

[FIG. 10] FIG. 10 is a diagram to show an example of legacy (existing) CSI-RS resources and additional CSI-RS resources.

[FIG. 11] FIG. 11 is a diagram to show an example of an additional OCC applied over the legacy CSI-RS resources and the additional CSI-RS resources.

[FIG. 12] FIG. 12 is a diagram to show an example of a case in which at least one of time and frequency is different between the legacy CSI-RS resources and the additional CSI-RS resources.

[FIG. 13] FIG. 13 is a diagram to show an example of a case in which at least one of a sequence and a scramble ID is different between the legacy CSI-RS resources and the additional CSI-RS resources.

[FIG. 14] FIG. 14 shows an example of beam application timing 1.

[FIG. 15] FIG. 15 shows an example of application timing of CSI-RS resources.

[FIG. 16] FIG. 16 shows association between the number of supported CSI-RS ports and a base station antenna layout for a single panel of a legacy specification.

[FIG. 17] FIG. 17 shows association between the number of supported CSI-RS ports and a base station antenna layout for a multi-panel of a legacy specification.

[FIG. 18] FIG. 18 shows an example of a configuration according to option 1 of Embodiment C1.

[FIG. 19] FIG. 19 shows a first example of a configuration according to option 2 of Embodiment C1.

[FIG. 20] FIG. 20 shows a second example of a configuration according to option 2 of Embodiment C1.

[FIG. 21] FIG. 21A and FIG. 21B show examples of the base station antenna layout according to option 2 of Embodiment C1.

[FIG. 22] FIG. 22 shows a first example of a configuration according to option 3 of Embodiment C1.

[FIG. 23] FIG. 23 shows a second example of a configuration according to option 3 of Embodiment C1.

[FIG. 24] FIG. 24A and FIG. 24B show examples of the base station antenna layout according to option 3 of Embodiment C1.

[FIG. 25] FIG. 25 shows an example of an antenna configuration according to Embodiment D1.1.

[FIG. 26] FIG. 26 shows an example of an antenna configuration according to Embodiment D1.2.

[FIG. 27] FIG. 27 shows another example of an antenna configuration according to Embodiment D1.2.

[FIG. 28] FIG. 28 shows an example of parameter combinations for an enhanced type 2 CB.

[FIG. 29] FIG. 29 shows example 1 of parameter combinations according to Embodiment D2.

[FIG. 30] FIG. 30 shows example 2 of parameter combinations according to Embodiment D2.

[FIG. 31] FIG. 31 shows example 3 of parameter combinations according to Embodiment D2.

[FIG. 32] FIG. 32 shows example 4 of parameter combinations according to Embodiment D2.

[FIG. 33] FIG. 33 shows example 1 of a maximum value of a total number of NZCs according to Embodiment D4.

[FIG. 34] FIG. 34 shows an example of example 2-1 of a maximum value of a total number of NZCs according to Embodiment D4.

[FIG. 35] FIG. 35 shows an example of example 2-2 of a maximum value of a total number of NZCs according to Embodiment D4.

[FIG. 36] FIG. 36 shows an example of example 2-3 of a maximum value of a total number of NZCs according to Embodiment D4.

[FIG. 37] FIG. 37 shows an example of parameter combinations for a further enhanced type 2 PS CB.

[FIG. 38] FIG. 38 shows example 1 of parameter combinations according to Embodiment E1.2.

[FIG. 39] FIG. 39 shows example 2 of parameter combinations according to Embodiment E1.2.

[FIG. 40] FIG. 40 shows example 3 of parameter combinations according to Embodiment E1.2.

[FIG. 41] FIG. 41 shows example 1 of a maximum value of a total number of NZCs according to Embodiment E2.

[FIG. 42] FIG. 42 shows example 2-1 of a maximum value of a total number of NZCs according to Embodiment E2.

[FIG. 43] FIG. 43 shows example 2-2 of a maximum value of a total number of NZCs according to Embodiment E2.

[FIG. 44] FIG. 44 shows example 2-3 of a maximum value of a total number of NZCs according to Embodiment E2.

[FIG. 45] FIG. 45 shows parameter combinations for an enhanced type 2 CB for CJT.

[FIG. 46] FIG. 46 shows parameter combinations for a further enhanced type 2 PS CB for CJT.

[FIG. 47] FIG. 47 shows an example of parameter combinations according to Embodiment F2.

[FIG. 48] FIG. 48 shows an example of CSI computation delay requirement 1.

[FIG. 49] FIG. 49 shows an example of CSI computation delay requirement 2.

[FIG. 50] FIG. 50 is a diagram to show an example of a schematic structure of a radio communication system according to one embodiment.

[FIG. 51] FIG. 51 is a diagram to show an example of a structure of a base station according to one embodiment.

[FIG. 52] FIG. 52 is a diagram to show an example of a structure of a user terminal according to one embodiment.

[FIG. 53] FIG. 53 is a diagram to show an example of a hardware structure of the base station and the user terminal according to one embodiment.

[FIG. 54] FIG. 54 is a diagram to show an example of a vehicle according to one embodiment.

Description of Embodiments

(TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (expressed as a signal/channel) in a UE, based on a transmission configuration indication state (TCI state) is under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one parameter of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same.

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

In the present disclosure, a TCI state, an indicated TCI state, a unified TCI state, a TCI state applied to a channel/signal configured to follow a unified TCI state, a TCI state applied to a UE-dedicated PDSCH and a CORESET/PDCCH associated with a USS, and a TCI state applied to a PUCCH and a PUSCH may be interchangeably interpreted.

(CSI Report (or Reporting))

In Rel-15 NR, a terminal (also referred to as a user terminal, a User Equipment (UE), and the like) generates (also referred to as determines, computes, estimates, measures, and the like) channel state information (CSI), based on a reference signal (RS) (or a resource for the RS), and transmits (also referred to as reports, feeds back, and the like) the generated CSI to a network (for example, a base station). The CSI may be transmitted to the base station by using an uplink control channel (for example, a Physical Uplink Control Channel (PUCCH)) or an uplink shared channel (for example, Physical Uplink Shared Channel (PUSCH)), for example.

The RS used for the generation of the CSI may be at least one of a channel state information reference signal (CSI-RS), a synchronization signal/broadcast channel (Synchronization Signal/Physical Broadcast Channel (SS/PBCH)) block, a synchronization signal (SS), a demodulation reference signal (DMRS), and the like, for example.

The CSI-RS may include at least one of a non-zero power (NZP) CSI-RS and CSI-Interference Management (CSI-Interference Measurement) (CSI-IM). The SS/PBCH block is a block including the SS and the PBCH (and a corresponding DMRS), and may be referred to as an SS block (SSB) or the like. The SS may include at least one of a primary synchronization signal (PSS) and a secondary synchronization signal (SSS).

Note that the CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), L1-RSRP (reference signal received power in Layer 1 (Layer 1 Reference Signal Received Power)), L1-RSRQ (Reference Signal Received Quality), an L1-SINR (Signal to Interference plus Noise Ratio), an L1-SNR (Signal to Noise Ratio), and the like.

The UE may receive information related to a CSI report (report configuration information), and may control, based on the report configuration information, CSI reporting. The report configuration information may be, for example, an information element (IE) "CSI-ReportConfig" of radio resource control (RRC).

The report configuration information (for example, the RRC IE "CSI-ReportConfig") may include at least one of the following, for example.

- Information (report type information, for example, an RRC IE "reportConfigType") related to a type of the CSI report
- Information (report quantity information, for example, an RRC IE "reportQuantity") related to one or more quantities (one or more CSI parameters) of the CSI to be reported
- Information (resource information, for example, an RRC IE "CSI-ResourceConfigId") related to the resource for the RS used for generation of the quantity (the CSI parameter)
- Information (frequency domain information, for example, an RRC IE "reportFreqConfiguration") related to the frequency domain being a target of the CSI report

For example, the report type information may indicate a periodic CSI (P-CSI) report, an aperiodic CSI (A-CSI) report, or a semi-persistent (semi-permanent) CSI (SP-CSI) report.

The report quantity information may indicate at least one combination of the above CSI parameters (for example, CRI, RI, PMI, CQI, LI, L1-RSRP, and the like).

The resource information may be an ID of the resource for the RS. The resource for the RS may include, for example, a non-zero power CSI-RS resource or SSB, and a CSI-IM resource (for example, a zero power CSI-RS resource).

The frequency domain information may indicate frequency granularity of the CSI report. The frequency granularity may include, for example, a wideband and a subband. The wideband is the entire CSI reporting band. For example, the wideband may be the entire certain carrier (component carrier (CC), cell, serving cell), or may be the entire bandwidth part (BWP) in a certain carrier. The wideband may be interpreted as CSI reporting band, the entire CSI reporting band, and the like.

The subband may be part of the wideband and constituted of one or more resource blocks (RBs or physical resource blocks (PRBs)). The size of the subband may be determined according to the size of the BWP (the number of PRBs).

The frequency domain information may indicate a PMI of which of the wideband or the subband is to be reported (frequency domain information may include, for example, an RRC IE "pmi-FormatIndicator" used for determination of one of wideband PMI reporting and subband PMI reporting). The UE may determine, based on at least one of the report quantity information and the frequency domain information, frequency granularity of the CSI report (that is, one of the wideband PMI report or the subband PMI report).

When the wideband PMI report is configured (determined), one wideband PMI may be reported for the entire CSI reporting band. On the other hand, when the subband PMI report is configured, single wideband indication $i_1$ may be reported for the entire CSI reporting band, and subband indication (one subband indication) $i_2$ for each of one or more subbands in the entire CSI reporting (for example, subband indication for each subband) may be reported.

The UE performs channel estimation by using a received RS to estimate a channel matrix H. The UE feeds back an index (PMI) determined based on the estimated channel matrix.

The PMI may indicate a precoder matrix (also simply referred to as a precoder) that the UE considers appropriate for the use for downlink (DL) transmission to the UE. Each value of the PMI may correspond to one precoder matrix. A set of values of the PMI may correspond to a different set of precoder matrices referred to as a precoder codebook (also simply referred to as a codebook).

In the spatial domain (space domain), the CSI report may include CSI of one or more types. For example, the CSI may include at least one of a first type (type 1 CSI) used for selection of a single beam, and a second type (type 2 CSI) used for selection of multi-beam. The single beam may be interpreted as a single layer, and the multi-beam may be interpreted as a plurality of beams. The type 1 CSI may not assume multi-user multiple input multiple output (MU-MIMO), and the type 2 CSI may assume multi-user MIMO.

The above codebook may include a codebook for the type 1 CSI (also referred to as a type 1 codebook or the like) and a codebook for the type 2 CSI (also referred to as a type 2 codebook or the like). The type 1 CSI may include type 1 single-panel CSI and type 1 multi-panel CSI, and different codebooks (type 1 single-panel codebook, type 1 multi-panel codebook) may be defined.

In the present disclosure, Type 1 and Type I may be interchangeably interpreted. In the present disclosure, Type 2 and Type II may be interchangeably interpreted.

An uplink control information (UCI) type may include at least one of a Hybrid Automatic Repeat reQuest ACKnowledgement (HARQ-ACK), a scheduling request (SR), and CSI. UCI may be delivered on a PUCCH, or may be delivered on a PUSCH.

In Rel-15 NR, the UCI can include one CSI part for wideband PMI feedback. CSI report #n includes, if reported, PMI wideband information.

In Rel-15 NR, the UCI can include two CSI parts for subband PMI feedback. CSI part 1 includes wideband PMI information. CSI part 2 includes one piece of wideband PMI information and some pieces of subband PMI information. CSI part 1 and CSI part 2 are separately coded.

In Rel-15 NR, the UE is configured with N (N ≥ 1) report settings for CSI report configuration and M (M ≥ 1) resource settings for CSI resource configuration, by a higher layer. For example, the CSI report configuration (CSI-ReportConfig) includes a resource setting for channel measurement (resourcesForChannelMeasurement), a CSI-IM resource setting for interference (csi-IM-ResourceForInterference), an NZP-CSI-RS setting for interference (nzp-CSI-RS-ResourceForInterference), a report quantity (reportQuantity), and the like. Each of the resource setting for channel measurement, the CSI-IM resource setting for interference, and the NZP-CSI-RS setting for interference is associated with a CSI resource configuration (CSI-ResourceConfig, CSI-ResourceConfigId). The CSI resource configuration includes a list of CSI-RS resource sets (csi-RS-ResourceSetList, for example, NZP-CSI-RS resource set or CSI-IM resource set).

For enabling, for both of FR1 and FR2, more dynamic channel/interference hypotheses for NCJT, assessment and specifications of CSI reporting for DL transmission with at least one of multi-TRP and multi-panel are under study.

(Codebook Configuration)

The UE is configured with a codebook (CB)-related parameter (codebook configuration (CodebookConfig)) by higher layer signaling (RRC signaling). The codebook configuration is included in a CSI report configuration (CSI-ReportConfig) of a higher layer (RRC) parameter.

In the codebook configuration, at least one codebook out of a plurality of codebooks including a type 1 single-panel (typeI-SinglePanel), type 1 multi-panel (typeI-MultiPanel), type 2 (typeII), and type 2 port selection (typeII-PortSelection) is selected.

The codebook parameter includes a parameter related to codebook subset restriction (CBSR) ("...Restriction" in CodebookConfig). Configuration of the CBSR is a bit indicating, for a precoder associated with a CBSR bit, which PMI report is allowed ("1") and which PMI report is not allowed ("0"). 1 bit of a CBSR bitmap corresponds to one codebook index / antenna port.

(CSI Report Configuration)

CSI report configuration (CSI-ReportConfig) of Rel. 16 includes CSI-RS resources for channel measurement (resourcesForChannelMeasurement (CMRs)), CSI-RS resources for interference measurement (csi-IM-ResourcesFor-Interference (ZP-IMRs), nzp-CSI-RS-ResourcesForInterference (NZP-IMRs)), and the like, in addition to a codebook configuration (CodebookConfig). The parameters of CSI-ReportConfig excluding codebookConfig-r16 are also included in CSI report configuration of Rel. 15.

For Rel. 17, enhanced CSI report configuration (CSI-ReportConfig) for multi-TRP CSI measurement/reporting using NCJT is under study. In the CSI report configuration, two CMR groups corresponding to two respective TRPs are configured. CMRs in the CMR groups may be used for measurement of at least one of multi-TRP using NCJT and a single TRP. N CMR pairs for NCJT are configured by RRC signaling. Whether CMRs of a CMR pair are to be used for single TRP measurement may be configured for the UE by RRC signaling.

For CSI reporting associated with multi-TRP/panel NCJT measurement and configured by a single CSI report configuration, support of at least one of options 1 and 2 below is under study.

<Option 1>

The UE is configured to report X (X = 0, 1, 2) CSIs associated with single TRP measurement hypotheses and one CSI associated with NCJT measurement. When X = 2, two CSIs are associated with two different single TRP measurements using CMRs of different CMR groups.

<Option 2>

The UE may be configured to report one CSI associated with the best measurement result of measurement hypotheses for NCJT and a single TRP.

As described above, in Rel. 15/16, CBSR is configured for each codebook configuration for each CSI report configuration. In other words, the CBSR is applied to all the CMRs and the like in corresponding CSI reporting configuration.

Note, however, that there is a possibility that when options 1 and 2 above are applied to multi-TRP CSI report configuration of Rel. 17 by CSI report configuration, configuration of the following measurement is performed.

Option 1 (X = 0): measurement of only CSI for NCJT
Option 1 (X = 1): measurement of CSI for NCJT and CSI for single TRP (one TRP)
Option 1 (X = 2): measurement of CSI for NCJT and CSI for single TRP (two TRPs)
Option 2: measurement of both of CSI for NCJT and CSI for single TRP

A plurality of subbands for CSI report #n indicated and given by a higher layer parameter csi-ReportingBand may be serially numbered in ascending order including the lowest subband of csi-ReportingBand as subband 0.

(PMI/Type 1 Codebook)

As a type 1 (type I) codebook (Rel. 15), a type 1 single-panel codebook and a type 1 multi-panel codebook are defined for a base station panel. In a type 1 single-panel, an antenna model (antenna configuration) of a CSI antenna port array (logical configuration) is defined for $(N_1, N_2)$. The number $P_{CSI-RS}$ of CSI-RS antenna ports is $2N_1N_2$. In type 1 multi-panel, an antenna model of a CSI antenna port array (logical configuration) is defined for the number $P_{CSI-RS}$ of CSI-RS antenna ports and $(N_g, N_1, N_2)$.

In the present disclosure, a type 1 codebook, a type 1 single-panel codebook, and a type 1 multi-panel codebook may be interchangeably interpreted.

- Type 1 Single-Panel Codebook

For Rel-15 type 1 single-panel CSI, a higher layer parameter of a codebook type (subType in type1 in codebookType in CodebookConfig) is set to a type 1 single-panel ('type1-SinglePanel') for the UE. When the number v of layers $\in \{2, 3, 4\}$ is not satisfied, PMI values correspond to three codebook indices $i_{1,1}$, $i_{1,2}$, $i_2$. When the number v of layers $\in \{2, 3, 4\}$ is satisfied, PMI values correspond to four codebook indices $i_{1,1}$, $i_{1,2}$, $i_{1,3}$, $i_2$. When the number v of layers $\in \{2, 3, 4\}$ is not satisfied, composite codebook index $i_1 = [i_{1,1} \ i_{1,2}]$. When the number v of layers $\in \{2, 3, 4\}$ is satisfied, composite codebook index $i_1 = [i_{1,1} \ i_{1,2} \ i_{1,3}]$.

For $P_{CSI-RS}$, supported configurations (value combinations) of $(N_1, N_2)$ and $(O_1, O_2)$ are defined in a specification. $(N_1, N_2)$ indicates the number of two-dimensional (2D) antenna elements, and is configured by a higher layer parameter n1-n2 in moreThanTwo in nrOfAntennaPorts in type1-SinglePanel. n1-n2 is a bitmap parameter of $N_1O_1N_2O_2$ bits. $(O_1, O_2)$ is a 2D over-sampling factor.

The precoding matrix for v = 1 is represented by $W_{l,m,n}^{(v)}$. The precoding matrix for v = 2 is represented by $W_{l,l',m,m',n}^{(v)}$. The precoding matrix for $P_{CSI-RS} < 16$ and v = 3, 4 is represented by $W_{l,l',m,m',n}^{(v)}$. The precoding matrix for $P_{CSI-RS} \geq 16$ and v = 3, 4 is represented by $W_{l,m,p,n}^{(v)}$. The precoding matrix for v = 5, 6 is represented by $W_{l,l',l'',m,m',m'',n}^{(v)}$. The precoding matrix for v = 7, 8 is represented by $W_{l,l',l'',l''',m,m',m'',m''',n}^{(v)}$. l, l', l'', and l''' are determined by $i_{1,1}$ and $k_1$. m, m', m'', and m''' are determined by $i_{1,2}$ and $k_2$. n is determined by $i_2$. p is 0 for the first half of ports and 1 for the latter half of ports, among $P_{CSI-RS}$ ($\geq 16$) ports.

A precoding matrix W can be represented as a product $W_1 W_2$ of two matrices. $W_1$ indicates channel properties of a wideband and a long term, and is represented by the codebook index $i_1$ (for example, $i_{1,1}$ and $i_{1,2}$). $W_2$ indicates channel properties of frequency selectivity (subband) and a short term, and is represented the codebook index $i_2$. $W_1$ may be given by the following expression using a matrix B.

$$W_1 = \begin{bmatrix} B & 0 \\ 0 & B \end{bmatrix} \tag{E1}$$

B indicates L 2D DFT beams, and each beam is over-sampled by ($O_1$, $O_2$).

$\varphi_n$, $\theta_p$, $u_m$, $v_{l,m}$, and $\tilde{v}_{l,m}$ for the precoding matrix are given by the following expression.

$$\varphi_n = e^{j\pi n/2}$$

$$\theta_p = e^{j\pi p/4}$$

$$u_m = \begin{cases} \begin{bmatrix} 1 & e^{j\frac{2\pi m}{O_2 N_2}} & \cdots & e^{j\frac{2\pi m(N_2-1)}{O_2 N_2}} \end{bmatrix} & N_2 > 1 \\ 1 & N_2 = 1 \end{cases}$$

$$v_{l,m} = \begin{bmatrix} u_m & e^{j\frac{2\pi l}{O_1 N_1}} u_m & \cdots & e^{j\frac{2\pi l(N_1-1)}{O_1 N_1}} u_m \end{bmatrix}^T \tag{E2}$$

$$\tilde{v}_{l,m} = \begin{bmatrix} u_m & e^{j\frac{4\pi l}{O_1 N_1}} u_m & \cdots & e^{j\frac{4\pi l(N_1/2-1)}{O_1 N_1}} u_m \end{bmatrix}^T$$

The codebook for a 1-layer CSI report and codebook mode (codebookMode) = 1 includes index $i_{1,1} = l = 0, 1, ..., N_1 O_1 - 1$ corresponding to a beam horizontal component, index $i_{1,2} = m = 0, 1, ..., N_2 O_2 - 1$ corresponding to a beam vertical component, and index $i_2 = n = 0, 1, 2, 3$ corresponding to a subband. The precoding matrix $W_{l,m,n}^{(1)}$ for the 1-layer CSI report using antenna ports 3000 to 2999+$P_{CSI-RS}$ is given by the following expression.

$$W_{l,m,n}^{(1)} = \frac{1}{\sqrt{P_{CSI-RS}}} \begin{bmatrix} v_{l,m} \\ \varphi_n v_{l,m} \end{bmatrix} \tag{E3}$$

Here, $[i_{1,1}, i_{1,2}, i_2] = [l, m, n]$. $v_{l,m}$ is a DFT vector (a spatial domain (SD) vector, a 2D-DFT vector, an SD DFT vector, an SD base vector, an SD beam) having $N_1$ rows and $N_2$ columns, is expressed by $\exp(j2\pi l n_1/O_1 N_1) \times \exp(j2\pi m n_2/O_2 N_2)$, $n_1 = 0, 1, ..., N_1 - 1$, and $n_2 = 0, 1, ..., N_2 - 1$, and is identified by v, l. $v_{l,m}$ indicates one beam. It is a phase difference (co-phasing, inter-polarization phase compensation, phase compensation between polarizations) $\varphi_n = \exp(j\pi n/2)$ between two polarizations (a first polarization and a second polarization, a horizontal polarization and a vertical polarization), and indicates a difference of phase of the second polarization relative to phase of the first polarization. $\theta_p$ indicates phase of the latter half of ports relative to phase of the first half of ports.

- Type 1 Multi-Panel Codebook

For Rel-15 type 1 multi-panel CSI, the higher layer parameter of the codebook type (subType in type1 of codebookType in CodebookConfig) is set to a type 1 multi-panel ('type1-MultiPanel') for the UE. For the Rel-15 type 1 multi-panel CSI, as compared with that for the type 1 single-panel codebook, the number $N_g$ of panels is configured in addition to $N_1$ and $N_2$. As compared with the type 1 single-panel codebook, as an inter-panel phase difference (inter-panel co-phasing, inter-panel phase compensation, phase compensation between panels) (of the wideband), $i_{1,4}$ is additionally reported. The same SD beam (DFT vector $v_{l,m}$, SD base indices l and m) is selected for each panel, and only the inter-panel phase difference is additionally reported.

For $P_{CSI-RS}$, supported configurations (value combinations) of $(N_g, N_1, N_2)$ and $(O_1, O_2)$ are defined in a specification. $(N_1, N_2)$ is configured by ng-n1-n2 in type1-MultiPanel. $i_{1,1} = l = \{0, 1, ..., N_1O_1 - 1\}$ is an over-sampled SD base horizontal component. $i_{1,2} = m = \{0, 1, ..., N_2O_2 - 1\}$ is an over-sampled SD base vertical component. $i_{1,4,q} = p = \{0, 1, 2, 3\}$ for q = 1, ..., $N_g$ - 1 is the number of panels. $i_2 = n = \{0, 1, 2, 3\}$ is the number of beams for each panel.

An antenna configuration parameter for the type 1 multi-panel codebook is ng-n1-n2 ($N_g$, $N_1$, and $N_2$). In existing specifications, up to rank 4 is supported, and rank 5 or higher is not supported.

Each PMI value corresponds to the codebook indices $i_1$ and $i_2$. v is an RI value (number of layers). For v = 1, $i_1$ = $[i_{1,1} \ i_{1,2} \ i_{1,4}]$. For $v \in \{2, 3, 4\}$, $i_1$ = $[i_{1,1} \ i_{1,2} \ i_{1,3} \ i_{1,4}]$.

When the codebook mode is set to 1, for $N_g$ = 2, $i_{1,4}$ = $i_{1,4,1}$. For $N_g$ = 4, $i_{1,4}$ = $[i_{1,4,1} \ i_{1,4,2} \ i_{1,4,3}]$. When the codebook mode is set to 2, $i_{1,4}$ = $[i_{1,4,1} \ i_{1,4,2}]$. $i_{1,4}$ is associated with the number $N_g$ of panels and the codebook mode. Only for $N_g$ = 2, codebook mode 2 is supported. $[i_{1,4,1} \ i_{1,4,2}]$ in codebook mode 2 respectively corresponds to two polarizations. Each of the two values represents a phase difference of the wideband of a second panel (panel 1) relative to a first panel (panel 0) in a corresponding polarization. Only one value of $i_{1,4}$ in $N_g$ = 2 and codebook mode 1 is reported. The one value represents a phase difference of the wideband of the second panel (panel 1) relative to the first panel (panel 0).

When the codebook mode is set to 2, $i_2$ = $[i_{2,0} \ i_{2,1} \ i_{2,2}]$. The number and the value of $i_2$ are associated with the codebook mode, and may be different from the type 1 single-panel codebook. When a subband report is configured, $i_2$ is an index for the subband. When a wideband report is configured, $i_2$ is an index for the wideband. In codebook mode 1, the number and the value of $i_2$ are similar to the type 1 single-panel codebook, and $i_2$ has one value for each subband. In codebook mode 2 ($N_g$ = 2), phase differences of the subband have three values, and represent phase differences between polarizations and between panels.

In codebook mode 2, more phase differences are reported for the sake of more accurate CSI, and thus feedback overhead is larger. Codebook mode 2 is supported only for $N_g$ = 2.

The type 1 multi-panel codebook is based on the type 1 single-panel codebook. In the type 1 multi-panel codebook, the codebook of the first panel (panel 0) follows the type 1 single-panel codebook. Codebooks for other panels apply the same precoder, and have an additional phase difference between a plurality of panels.

$\varphi_n$, $a_p$, $b_p$, $u_m$, and $v_{l,m}$ for the precoding matrix are given by the following expression.

$$\varphi_n = e^{j\pi n/2}$$

$$a_p = e^{j\pi/4}e^{j\pi p/2}$$

$$b_n = e^{-j\pi/4}e^{j\pi n/2}$$

$$u_m = \begin{cases} \begin{bmatrix} 1 & e^{j\frac{2\pi m}{O_2 N_2}} & \cdots & e^{j\frac{2\pi m(N_2-1)}{O_2 N_2}} \end{bmatrix} & N_2 > 1 \\ \\ 1 & N_2 = 1 \end{cases} \qquad (E4)$$

$$v_{l,m} = \begin{bmatrix} u_m & e^{j\frac{2\pi l}{O_1 N_1}}u_m & \cdots & e^{j\frac{2\pi l(N_1-1)}{O_1 N_1}}u_m \end{bmatrix}^T$$

The precoding matrix for a v-layer CSI report using antenna ports 3000 to 2999+$P_{CSI-RS}$ is represented by $W^{(v)}$. The precoding matrix for an i-th layer, the number $N_g$ of panels, and codebook mode X is represented by $W_{l,m,p,n}^{i,N\_g,X}[i_{1,1}, i_{1,2}, i_{1,4}, i_2]$ = [l, m, p, n].

For codebook mode 1 and $N_g$ = {2, 4}, the precoding matrix $W_{l,m,p,n}^{(1)}$ for a 1-layer CSI report is represented by $W_{l,m,p,n}^{1,N\_g,1}$. For codebook mode 1 and $N_g$ = {2, 4}, the precoding matrix $W_{l,l',m,m',p,n}^{(2)}$ for a 2-layer CSI report is represented by (1/sqrt(2)) $[W_{l,m,p,n}^{(1,N\_g,1)} \; W_{l',m',p,n}^{(2,N\_g,1)}]$. Here, $W_{l,m,p,n}^{1,N\_g,1}$ and $W_{l,m,p,n}^{2,N\_g,1}$ for $N_g = \{2, 4\}$ ($W_{l,m,p,n}^{1,2,1}$ and $W_{l,m,p,n}^{2,2,1}$ for $N_g = 2$ and $W_{l,m,p,n}^{1,4,1}$ and $W_{l,m,p,n}^{2,4,1}$ for $N_g = 4$) are given by the following expression.

$$W_{l,m,p,n}^{1,2,1} = \frac{1}{\sqrt{P_{\text{CSI-RS}}}} \begin{bmatrix} v_{l,m} \\ \varphi_n v_{l,m} \\ \varphi_{p_1} v_{l,m} \\ \varphi_n \varphi_{p_1} v_{l,m} \end{bmatrix} \qquad W_{l,m,p,n}^{2,2,1} = \frac{1}{\sqrt{P_{\text{CSI-RS}}}} \begin{bmatrix} v_{l,m} \\ -\varphi_n v_{l,m} \\ \varphi_{p_1} v_{l,m} \\ -\varphi_n \varphi_{p_1} v_{l,m} \end{bmatrix}$$

$$W_{l,m,p,n}^{1,4,1} = \frac{1}{\sqrt{P_{\text{CSI-RS}}}} \begin{bmatrix} v_{l,m} \\ \varphi_n v_{l,m} \\ \varphi_{p_1} v_{l,m} \\ \varphi_n \varphi_{p_1} v_{l,m} \\ \varphi_{p_2} v_{l,m} \\ \varphi_n \varphi_{p_2} v_{l,m} \\ \varphi_{p_3} v_{l,m} \\ \varphi_n \varphi_{p_3} v_{l,m} \end{bmatrix} \qquad W_{l,m,p,n}^{2,4,1} = \frac{1}{\sqrt{P_{\text{CSI-RS}}}} \begin{bmatrix} v_{l,m} \\ -\varphi_n v_{l,m} \\ \varphi_{p_1} v_{l,m} \\ -\varphi_n \varphi_{p_1} v_{l,m} \\ \varphi_{p_2} v_{l,m} \\ -\varphi_n \varphi_{p_2} v_{l,m} \\ \varphi_{p_3} v_{l,m} \\ -\varphi_n \varphi_{p_3} v_{l,m} \end{bmatrix}$$

$$\text{(E5)}$$

Here, $\varphi_n = e^{j\pi n/2}$. For $N_g=2$, $p = p_1$, and for $N_g=4$, $p = [p_1, p_2, p_3]$. $\varphi_{p\_1}$, $\varphi_{p\_2}$, and $\varphi_{p\_3}$ represent the inter-panel phase difference (inter-panel phase compensation). In each precoding matrix, a first row and a second row correspond to the first panel (panel 0), a third row and a fourth row correspond to the second panel (panel 1), a fifth row and a sixth row correspond to a third panel (panel 2), and a seventh row and an eighth row correspond to a fourth panel (panel 3). The same SD beam is selected for all the panels, and thus each row has the same $v_{l,m}$. $\varphi_{p\_1}$ represents a phase difference of the second panel relative to the first panel. $\varphi_{p\_2}$ represents a phase difference of the third panel relative to the first panel. $\varphi_{p\_3}$ represents a phase difference of the fourth panel relative to the first panel.

For codebook mode 2 and $N_g = 2$, the precoding matrix $W_{l,m,p,n}^{(1)}$ for a 1-layer CSI report is represented by $W_{l,m,p,n}^{1,2,1}$. For codebook mode 2 and $N_g = 2$, the precoding matrix $W_{l,l',m,m',p,n}^{(2)}$ for a 2-layer CSI report is represented by (1/sqrt(2)) $[W_{l,m,p,n}^{1,2,2} \; W_{l',m',p,n}^{2,2,2}]$. Here, $W_{l,m,p,n}^{1,2,2}$ and $W_{l,m,p,n}^{2,2,2}$ are given by the following expression.

$$W_{l,m,p,n}^{1,2,2} = \frac{1}{\sqrt{P_{\text{CSI-RS}}}} \begin{bmatrix} v_{l,m} \\ \varphi_{n_0} v_{l,m} \\ a_{p_1} b_{n_1} v_{l,m} \\ a_{p_2} b_{n_2} v_{l,m} \end{bmatrix} \qquad W_{l,m,p,n}^{2,2,2} = \frac{1}{\sqrt{P_{\text{CSI-RS}}}} \begin{bmatrix} v_{l,m} \\ -\varphi_{n_0} v_{l,m} \\ a_{p_1} b_{n_1} v_{l,m} \\ -a_{p_2} b_{n_2} v_{l,m} \end{bmatrix}$$

$$\text{(E6)}$$

In each precoding matrix, a first row and a second row correspond to the first panel (panel 0), and a third row and a fourth row correspond to the second panel (panel 1). The same SD beam is selected for all the panels, and thus each row has the same $v_{l,m}$. $p = [p_1 \; p_1]$, and $n = [n_0, n_1, n_2]$. $a_{p\_1}$ represents a phase difference of the second panel (panel 1) relative to the first panel (panel 0) in the first polarization. $a_{p\_2}$ represents a phase difference of the second panel (panel 1) relative to the first panel (panel 0) in the second polarization. $\varphi_{n\_0}$ represents a phase difference of the second polarization of the first panel relative to the first polarization of the first panel for each subband. $b_{n\_1}$ represents a phase difference of the first polarization of the second panel relative to the first polarization of the first panel for each subband. $b_{n\_2}$ represents a phase difference of the second polarization of the second panel relative to the first polarization of the first panel for each subband.

(PMI/Type 2 Codebook)

In the present disclosure, a type 2 codebook, an enhanced type 2 codebook, a type 2 port selection (PS) codebook, an enhanced type 2 PS codebook, a further enhanced type 2 port PS codebook, a codebook for CJT, and a Doppler codebook may be interchangeably interpreted.

- Type 2 Codebook

For a type 2 (type II) codebook (Rel. 15, type 2 CSI), the UE is configured with the higher layer parameter codebookType set to 'typeII'.
In the present disclosure, matrix Z with X rows and Y columns is sometimes expressed as Z(X×Y).
For the type 2 CSI of Rel. 15, the precoding matrix for each subband (SB-wise) is based on the following expression for given layer l.

$$W_1 (N_t \times N_3) = W_1 W_{2,l} \qquad (F1)$$

$N_t$ is the number of antennas/antenna ports. $N_3$ is a total number of precoding (beamforming) matrices (precoders) (number of subbands) indicated by a PMI.
$W_1(N_t \times 2L)$ is 2L DFT vectors (over-sampled DFT vectors), and indicates a selected spatial domain base. $L \in \{2, 4\}$ is the number of beams for each layer. The actual number of beams taking account of two polarizations at one point is 2L. For example, the DFT vectors of L = 2 SD beams may be represented by $b_i$ and $b_j$, respectively.
$W_{2,l}(2L \times N_3)$ is a matrix (LC coefficient matrix) including linear combination coefficients (linear combination (LC) coefficients, subband complex LC coefficients, combination coefficients) for layer l. $W_{2,l}$ indicates beam selection and a phase difference (co-phasing) between two polarizations. For example, the LC coefficients respectively corresponding to L = 2 SD beams $b_i$ and $b_j$ are $c_i$ and $c_j$. For example, a channel vector h is approximated by a linear combination $c_i b_i, + c_j b_j$ of L = 2 SD beams. Feedback overhead is primarily caused by an LC coefficient matrix $W_{2,l}$. The type 2 CSI of Rel. 15 supports only ranks 1 and 2.
In the type 2 CSI, a channel (channel matrix) for a certain user is represented by a linear combination of two polarizations and L SD beams. The type 2 CSI of Rel. 15 supports ranks 1 and 2.

- Enhanced Type 2 Codebook (Rel. 16)

For type 2 CSI (enhanced type 2 codebook) of Rel. 16, the UE is configured with the higher layer parameter codebookType set to 'typeII-r16'.
The type 2 CSI of Rel. 16 reduces overhead related to the LC coefficient matrix $W_{2,l}$ by frequency domain (FD) compression. The type 2 CSI of Rel. 16 supports ranks 3 and 4 in addition to ranks 1 and 2.
In the type 2 CSI of Rel. 16, the precoding matrix $W_1$ for the given layer l is expressed by the following expression.

$$W_1 = W_1 \tilde{W}_1 W_{f,l}^H \qquad (F2)$$

$W_{2,l}$ in the type 2 CSI of Rel. 15 is approximated by $\tilde{W}_l W_{f,l}^H$. The matrix W~ may be expressed by adding "~" above W. $\tilde{W}_l$ may be expressed as $\tilde{W}_{2,l}$. $W_{f,l}^H$ is an adjoint matrix of $W_{f,l}$, and is obtained by the conjugate transpose of $W_{f,l}$.
For a CSI report, the UE may be configured with one of two subband sizes. The subband (CQI subband) may be defined as $N_{PRB}^{SB}$ consecutive PRBs, and may depend on a total number of PRBs in a BWP. The number R of PMI subbands per CQI subband is configured by an RRC IE (numberOfPMI-SubbandsPerCQI-Subband). R controls a total number $N_3$ of precoding matrices indicated by a PMI, as a function of the number of subbands configured in csi-ReportingBand, a subband size configured by subbandSize, and a total number of PRBs in a BWP.
$W_1(N_t \times 2L)$ indicates 2L DFT vectors. To represent the matrix, a plurality of indices of SD bases and two-dimensional over-sampling factors are reported.
$\tilde{W}_l(2L \times M_v)$ is an LC coefficient matrix. To represent the matrix, up to $K_0$ non-zero coefficients (NZCs, non-zero amplitude LC coefficients) are reported. The report includes two parts: a bitmap indicating an NZC location, and a quantized NZC.

$W_{f,l}(N_3 \times M_v)$ is $M_v$ DFT vectors (frequency domain (FD) DFT vectors, FD base vectors, FD beams) for layer l, and indicates a selected frequency domain base. Each DFT vector uses $N_3$ FD bases (subbands). $N_3$ is a total number of precoding (beamforming) matrices (precoders) (number of subbands) indicated by a PMI as a function of the number of subbands configured in csi-ReportingBand. csi-ReportingBand indicates, when CSI for a certain BWP is reported, contiguous or discontiguous subbands in the BWP. $M_v$ FD DFT vectors are present for each layer. When $N_3 > 19$, $M_v$ FD DFT vectors (FD bases) from an intermediate subset (InS) of size $N_3'(< N_3)$ are selected. When $N_3 \le 19$, $\log_2(C(N_3 - 1, M_v - 1))$ bits are reported. Here, $C(N_3 - 1, M_v - 1)$ represents the number (combinatorial coefficient $C(x, y)$) of combinations to select $M_v - 1$ from $N_3 - 1$, and is also referred to as binomial coefficients.

Response/distribution (frequency response) of a frequency domain indicated by a linear combination of an FD DFT vector and an LC coefficient may be referred to as an FD beam. The FD beam may correspond to a delay profile (time response).

A PMI subband size is given by a CQI subband size / R, and $R \in \{1, 2\}$. In other words, R is a ratio of the CQI subband size to the PMI subband size. The number $M_v$ of FD DFT vectors for given rank v is given by ceil $(p_v \times N_3/R)$. The number $M_v$ of FD DFT vectors is the same for all layers $l \in \{1, 2, 3, 4\}$. $p_v$ is configured by a higher layer.

A plurality of precoding matrices indicated by a PMI are determined from $L + M_v$ vectors.

L SD beams (SD DFT vectors) $v_{m\_1^\wedge(i), m\_2^\wedge(i)}$ for beam index i = 0, 1, ..., L - 1 are identified by $q_1, q_2, n_1$, and $n_2$, and are indicated by $i_{1,1}$ and $i_{1,2}$.

$M_v$ FD DFT vectors are identified by $M_{initial} \in \{-2M_v + 1, -2M_v + 2, ..., 0\}$, $n_{3,l} = [n_{3,l}^{(0)}, ..., n_{3,l}^{(M\_v-1)}]$, and $n_{3,l}^{(f)} \in \{0, 1, ..., N_3 - 1\}$.

In the FD DFT vectors, an element (FD base) for an index t = 0, 1, ..., $N_3$ - 1 and layer l = 1, ..., v of an FD base (subband) is $y_{t,l}^{(f)} = \exp(j2\pi t n_{3,l}^{(f)}/N_3)$. In $M_v$ FD DFT vectors, an FD DFT vector for index f = 0, 1, ..., $M_v$ - 1 of the FD DFT vector is $[y_{0,l}^{(f)}, y_{1,l}^{(f)}, ..., y_{N\_3-1,l}^{(f)}]^T$.

Each row of $W_{2,l}$ indicates channel frequency response of a specific SD beam. When the SD beam has high directivity, a channel tap per beam is limited (power delay profile becomes sparse in the time domain). As a result, channel frequency response for each SD beam has high correlation (becomes close to a flat form in the frequency domain). In this case, the channel frequency response can be approximated by linear combination of a small number of FD DFT vectors. For example, when $M_v = 2$, by using FD DFT vectors $f_2$ and $f_q$ and LC coefficients $d_1^0$ and $d_2^0$, frequency response associated with SD beam $b_0$ is approximated by $d_1^0 f_2 +, d_2^0 f_q$.

$M_v$ dominant FD DFT vectors are selected. With $M_v << N_3$, overhead of $W^\sim_l$ is much smaller than overhead of $W_{2,l}$. All or some of the $M_v$ FD DFT vectors are used to approximate frequency response of each SD beam. A bitmap is used to report only an FD DFT vector selected for each SD beam. If no bitmap is reported, all the FD DFT vectors are selected for each SD beam. In this case, NZCs of all the FD DFT vectors are reported for each SD beam. The number of NZCs in one layer $K_l^{NZ} \le K_0 = \text{ceil} (\beta \times 2LM_v)$, and the number of NZCs over all the layers $K^{NZ} \le 2K_0 = \text{ceil}(\beta \times 2LM_v)$. $\beta$ is configured by a higher layer.

In the enhanced type 2 codebook of Rel. 16, the values of L, $\beta$, and $p_v$ (codebook parameter combination, parameter combination) are determined by a higher layer parameter paramCombination-r16 (parameter combination configuration).

In the present disclosure, a combination of codebook parameters, a codebook parameter combination, a parameter combination, and a parameter combination configuration may be interchangeably interpreted.

Type 2 CSI feedback on a PUSCH in Rel. 16 includes two parts. CSI part 1 has a fixed payload size, and is used to identify the number of information bits in CSI part 2. A size of part 2 is variable (UCI size depends on the number of NZCs that is not recognized by the base station). In CSI part 1, the UE reports the number of NZCs that determines the size of CSI part 2. After receiving CSI part 1, the base station recognizes the size of CSI part 2.

In enhanced type 2 CSI feedback of Rel. 16, CSI part 1 includes an RI (if reported), a CQI, and an indicator of a total number of non-zero amplitude coefficients over a plurality of layers for enhanced type 2 CSI. The RI (if reported), the CQI, and the indicator of the total number of non-zero amplitude coefficients over a plurality of layers as fields of part 1 are separately coded. CSI part 2 includes a PMI of enhanced type 2 CSI. Parts 1 and 2 are separately coded. CSI part 2 (PMI) includes at least one of an over-sampling factor, an index of an SD base corresponding to each SD beam, an index $M_{initial}$ of an initial FD DFT vector (start offset) of a selected DFT window, an FD base selected for each layer, an NZC (amplitude and phase) for each layer, a strongest (maximum strength, maximum amplitude) coefficient indicator (SCI) for each layer, and amplitude of the strongest coefficient for each layer/each polarization.

A plurality of PMI indices (PMI values, codebook indices) associated with different pieces of CSI part 2 information may follow the following for the l-th layer.

- $i_{1,1}$: Rotation factor $[q_1 q_2]$ in two-dimensional over-sampling. $q_1 \in \{0, 1, ..., O_1 - 1\}$ and $q_2 \in \{0, 1, ..., O_2 - 1\}$. The beam index in each (SD) beam group is selected, and is reported/indicated by $i_{1,1}$.
- $i_{1,2}$: Plurality of indices of SD bases corresponding to respective SD beams. $i_{1,2} \in \{0, 1, ..., C(N_1N_2, L) - 1\}$. L beam groups are selected from $N_1N_2$ (SD) beam groups, and are reported/indicated by $i_{1,2}$.

- $i_{1,5}$: Codebook indicator. Index of an FD base of a selected DFT window. $i_{1,5} \in \{0, 1, ..., 2M_v - 1\}$.
- $i_{1,6,l}$: Codebook indicator. FD base selected for the l-th layer. When $N_3 \leq 19$, $i_{1,6,l} \in \{0, 1, ..., C(N_3 - 1, M_v - 1) - 1\}$. When $N_3 > 19$, $i_{1,6,l} \in \{0, 1, ..., C(2M_v - 1, M_v - 1) - 1\}$.
- $i_{1,7,l}$: Bitmap indicator for the l-th layer. Non-zero bits in the bitmap identify which coefficient out of $i_{2,4,l}$ and $i_{2,5,l}$ is to be reported. $i_{1,7,l} = [k_{l,0}^{(3)} ... k_{l,M\_v-1}^{(3)}]$, $k_{l,f}^{(3)} = [k_{l,0,f}^{(3)} ... k_{l,M\_v-1,f}^{(3)}]$, and $k_{l,i,f}^{(3)} \in \{0, 1\}$.
- $i_{1,8,l}$: Strongest coefficient indicator for the l-th layer (maximum element $k_{l,i,f}^{(2)}$ in the amplitude coefficient indicator) .
- $i_{2,3,l}$: Amplitude coefficient indicator (of both polarizations) of a coefficient (of the wideband) of the l-th layer. $i_{2,3,l} = [k_{l,0}^{(1)} k_{l,1}^{(1)}]$.
- $i_{2,4,l}$: Amplitude coefficient indicator of a reported coefficient (of the subband) of the l-th layer. $i_{2,4,l} = [k_{l,0}^{(2)} ... k_{l,M\_v-1}^{(2)}]$.
- $i_{2,5,l}$: Phase coefficient indicator of a reported coefficient (of the subband) of the l-th layer. $i_{2,5,l} = [c_{l,0,f} ... c_{l,M\_v-1,f}]$.

$f_l^* \in \{0, 1, ..., M_v - 1\}$ is an index of $i_{2,4,l}$, and $i_l^* \in \{0, 1, ..., 2L - 1\}$ is an index of $k_{l,f\_l^{*}}^{(2)}$. $f_l^*$ and $i_l^*$ identify the strongest coefficient for layer l = 1, ..., v, i.e., an element $k_{l,i\_l^*,f\_l^*}^{(2)}$ of $i_{2,4,l}$ for layer l. A codebook index $n_{3,l}$ is remapped to $n_{3,l}^{(f)} = (n_{3,l}^{(f)} - n_{3,l}^{(f\_l^{*})})$ mod $N_3$ with respect to $n_{3,l}^{(f\_l^{*})}$, and is $n_{3,l}^{(f\_l^{*})} = 0$ after the remapping. The index f is remapped to f = (f - f_l^*) mod $M_v$ with respect to $f_l^*$, and is $f_l^* = 0$ (l = 1, ..., v) after the remapping. $i_{2,4,l}$, $i_{2,5,l}$, and $i_{1,7,l}$ respectively represent the amplitude coefficient, the phase coefficient, and the bitmap after the remapping. The strongest coefficient of layer l identified by $i_{1,8,l} \in \{0, 1, ..., 2L - 1\}$ is given as $i_{1,8,l} = \Sigma_{i=0}^{i\_1^{*}} k_{l,i,0}^{(3)} - 1$ for v = 1 and given as $i_{1,8,l} = i_l^*$ for $1 < v \leq 4$.

Each reported LC coefficient (complex coefficient) in $\tilde{W}_l$ is separately quantized amplitude and phase.

- Amplitude Quantization

Polarization-specific reference amplitude is 16-level quantization using a table defined in a specification (mapping of elements of amplitude coefficient indicator $i_{2,3,l}$: mapping from amplitude coefficient indicator element $k_{l,p}^{(1)}$ to amplitude coefficient $p_{l,p}^{(1)}$). According to the table, $p_l^{(1)} = [p_{l,0}^{(1)} p_{l,1}^{(1)}]$ is quantized to $[k_{l,0}^{(1)} k_{l,1}^{(1)}]$ and $k_{l,p}^{(1)} \in \{0, ..., 15\}$. All the other coefficients are 8-level quantization using a table defined in a specification (mapping of elements of amplitude coefficient indicator $i_{2,4,l}$: mapping from amplitude coefficient indicator element $k_{l,i,f}^{(2)}$ to amplitude coefficient $p_{l,i,f}^{(2)}$). According to the table, $p_l^{(2)} = [p_{l,0}^{(2)} ... p_{l,M\_v-1}^{(2)}]$ and $p_{l,f}^{(2)} = [p_{l,0,f}^{(2)} ... p_{l,2L-1,f}^{(2)}]$ are quantized to $k_{l,f}^{(2)} = [k_{l,0,f}^{(2)} ... k_{l,2L-1,f}^{(2)}]$ and $k_{l,i,f}^{(2)} \in \{0, ..., 7\}$.

- Phase Quantization

Elements (amplitude coefficient indicator elements) of an amplitude coefficient indicator $i_{2,5,l}$ $[c_{l,0} ... c_{l,M\_v-1}]$ are reported by the UE (by using 4 bits). All the phase coefficients are quantized by using 16-PSK. The phase coefficients in quantity $\varphi_{l,i,f} = exp(j2\pi c_{l,i,f}/16)$ for a phase difference are quantized to $c_{l,f} = [c_{l,0,f} ... c_{l,2L-1,f}]$ and $c_{l,i,fi} \in \{0, ..., 15\}$.

An amplitude coefficient indicator element $k_{l,floor(i\_l^{*}/L)}^{(1)} = 15$ (maximum value), an amplitude coefficient indicator element $k_{l,i\_l^{*},0}^{(2)} = 7$ (maximum value), and a phase coefficient indicator element $c_{l,i\_l^{*},0}^{(2)} = 0$ (minimum value), which correspond to the strongest coefficient of layer l. For l = 1, ..., v, $k_{l,floor(i\_l^{*}/L)}^{(1)}$, $k_{l,i\_l^{*},0}^{(2)}$, and $c_{l,i\_l^{*},0}^{(2)} = 0$ are not reported.

$i_{1,5}$ and $i_{1,6,l}$ are PMI indices for FD base reporting. $i_{1,5}$ is reported only when $N_3 > 19$.

The precoding matrix $W^{(v)}$ represented by a codebook for a v ( = 1 to 4)-layer CSI report using 3000 to 2999+$P_{CSI-RS}$ is based on the precoding matrix $W^l$ for layer l ( = 1 to v). The precoding matrix $W^l$ is expressed by the following expression.

$$W^l_{q_1,q_2,n_1,n_2,n_{3,l},p_l^{(1)},p_l^{(2)},i_{2,5,l},t}$$

$$= \frac{1}{\sqrt{N_1 N_2 \gamma_{t,l}}} \begin{bmatrix} \sum_{i=0}^{L-1} v_{m_1^{(i)},m_2^{(i)}} p_{l,0}^{(1)} \sum_{f=0}^{M_v-1} y_{t,l}^{(f)} p_{l,i,f}^{(2)} \varphi_{l,i,f} \\ \sum_{i=0}^{L-1} v_{m_1^{(i)},m_2^{(i)}} p_{l,1}^{(1)} \sum_{f=0}^{M_v-1} y_{t,l}^{(f)} p_{l,i+L,f}^{(2)} \varphi_{l,i+L,f} \end{bmatrix}, l = 1,2,3,4,$$

$$\gamma_{t,l} = \sum_{i=0}^{2L-1} \left( p_{l,\lfloor \frac{i}{L} \rfloor}^{(1)} \right)^2 \left| \sum_{f=0}^{M_v-1} y_{t,l}^{(f)} p_{l,i,f}^{(2)} \varphi_{l,i,f} \right|^2$$

$$(G1)$$

Here, beam index $i = 0, 1, ..., L - 1$, $m_1^{(i)} = O_1 n_1^{(i)} + q_1$, $m_2^{(i)} = O_2 n_2^{(i)} + q_2$, $n_1^{(i)} \in \{0, 1, ..., N_1 - 1\}$, and $n_2^{(i)} \in \{0, 1, ..., N_2 - 1\}$. $n_1^{(i)}$ and $n_2^{(i)}$ are SD bases for indicating an SD beam $i$. $v_{m\_1^{(i)}, m\_2^{(i)}}$ is a DFT vector indicating an SD beam. $p_{l,0}^{(1)}$ indicates a wideband amplitude coefficient. $p_{l,i,f}^{(2)}$ indicates a subband amplitude coefficient. $\varphi_{l,i,f}$ indicates a phase coefficient. In this manner, the codebook for each layer includes the strongest coefficient for each polarization, the amplitude coefficient for each SD beam for each FD beam for each polarization, and the phase coefficient for each SD beam for each FD beam for each polarization.

As grouping of CSI parts 2, for a given CSI report, PMI information is grouped into three groups (groups 0 to 2). This is important for a case where CSI omission is performed. Each reported element of indices $i_{2,4,l}$, $i_{2,5,l}$, and $i_{1,7,l}$ is associated with a specific priority rule. Groups 0 to 2 follow the following.

- Group 0: indices $i_{1,1}$, $i_{1,2}$ and $i_{1,8,l}$ ($l = 1, ..., v$)
- Group 1: highest (higher) $v2LM_v$-floor($K^{NZ}/2$) priority elements in index $i_{1,5}$ (if reported) and indices $i_{1,6,l}$ and $i_{1,7,l}$ (if reported), highest (higher) ceil ($K^{NZ}/2$)-v priority elements in $i_{2,3,l}$ and $i_{2,4,l}$, and highest (higher) ceil ($K^{NZ}/2$)-v priority elements in $i_{2,5,l}$ ($l = 1, ..., v$)
- Group 2: lowest (lower) floor ($K^{NZ}/2$) priority elements in $i_{1,7,l}$, lowest (lower) floor ($K^{NZ}/2$) priority elements in $i_{2,4,l}$, and lowest (lower) floor ($K^{NZ}/2$) priority elements in $i_{2,5,l}$ ($l = 1, ..., v$)

In the type 1 CSI, an SD beam indicated by using an SD DFT vector is transmitted to the UE. In type 2 CSI, L SD beams are linearly coupled and transmitted to the UE. Each SD beam can be associated with a plurality of FD DFT vectors (FD beams, FD bases, frequency responses). For corresponding SD beams, channel frequency response can be obtained by using linear combination of FD DFT vectors for the SD beams. The channel frequency response corresponds to the power delay profile.

- Type 2 Port Selection Codebook

For type 2 port selection (PS) CSI (type 2 PS codebook) of Rel. 15, the UE is configured with the higher layer parameter codebookType set to 'typeII-PortSelection'.

In the type 2 port selection CSI of Rel. 15, the UE does not need to derive SD beams in consideration of SD DFT vectors as in the type 2 CSI. The base station transmits CSI-RSs by using K CSI-RS ports beamformed in consideration of a set of SD beams. The UE selects/identifies the best L ($\leq$K) CSI-RS ports for each polarization, and reports indices of these ports in $W_1$. The type 2 PS CSI of Rel. 15 supports ranks 1 and 2.

- Enhanced Type 2 Port Selection Codebook (Rel. 16)

For type 2 PS CSI (enhanced type 2 PS codebook) of Rel. 16, the UE is configured with the higher layer parameter codebookType set to 'typeII-PortSelection-r16'.

Operation of the type 2 PS CSI of Rel. 16 is similar to that of the type 2 CSI of Rel. 16, except for selection of the SD beams. The type 2 PS CSI of Rel. 15 supports ranks 1 to 4.

The precoding matrix $W_1$ for precoder generation for each subband (subband (SB)-wise) for layer $l \in \{1, 2, 3, 4\}$ is expressed by the following expression.

$$W_1(N_t \times N_3) = QW_1 W^{\sim}_l W_{f,l}{}^H \qquad (H1)$$

Here, $Q(N_t \times K)$ indicates K SD beams used for CSI-RS beamforming. $W_1(K \times 2L)$ is a block diagonal matrix. $W^{\sim}_l$ $(2L \times M)$ is an LC coefficient matrix. $W_{f,l}(N_3 \times M)$ is a matrix including M vectors (FD base vectors), and each vector includes $N_3$ FD bases. K is configured by a higher layer. L is configured by a higher layer. $P_{CSI\text{-}RS} \in \{4, 8, 12, 16, 24, 32\}$. When $P_{CSI\text{-}RS} > 4$, $L \in \{2,3,4\}$.

In the type 2 PS CSI of Rel. 15/16, each CSI-RS port #i is associated with an SD beam $b_i$.

The type 2 PS CSI of Rel. 16 has the number of FD base vectors reduced from $N_3$ to $M_v$ ($M_v << N_3$) similarly to the type 2 CSI of Rel. 16, and has thereby reduced overhead compared to the type 2 PS CSI of Rel. 15.

- Further Enhanced Type 2 Port Selection Codebook (Rel. 17)

For type 2 PS CSI/codebook (further enhanced type 2 PS codebook) of Rel. 17, the UE is configured with the higher layer parameter codebookType set to 'typeII-PortSelection-r17'.

In the type 2 PS CSI of Rel. 17, each CSI-RS port #i is associated with an SD-FD beam pair (pair of SD beam $b_i$ and FD beam $f_{i,j}$ (where j is a frequency index)) in place of an SD beam. In this example, ports 3 and 4 are associated with the same SD beam and are associated with different FD beams.

Frequency selectivity of channel frequency response observed by the UE based on an SD beam-FD beam pair can be reduced by delay pre-compensation more than frequency selectivity of channel frequency response observed by the UE based on an SD beam.

A primary scenario for the type 2 PS codebook of Rel. 17 is FDD. Channel reciprocity based on SRS measurement is incomplete (angles between a UL beam and a DL beam may be different, a UL frequency and a DL frequency are different in FDD, and effective antenna intervals are different in the UL frequency and the DL frequency). However, the base station can obtain/select some pieces of partial information (dominant angles and delays (SD beams and FD beams)). By using SRS measurement by the base station in addition to CSI reporting, the base station can obtain CSI for determination of a DL MIMO precoder. In this case, some CSI reports may be omitted to reduce CSI overhead.

In parameter combinations L, $\beta$, and $p_v$ for the Rel-16 type 2 codebook, L is the number of SD beams. $p_v$ is a parameter for calculation of number $M_v = \text{ceil}(p_v \times N_3/R)$, which is the number of FD base vectors for rank v. $\beta$ is a parameter for calculation of a maximum number of NZCs.

In the further enhanced type 2 PS codebook of Rel. 17, the values of $\alpha$, M, and $\beta$ (codebook parameter combination, parameter combination) are determined by a higher layer parameter paramCombination-r17 (codebook parameter configuration). In parameter combinations $\alpha$, M, and $\beta$ for the further enhanced type 2 PS codebook of Rel. 17, $\alpha$ is a parameter for calculation of number $K_1 = \alpha P_{CSI\text{-}RS}$, which is the number of selected CSI-RS ports in the PS codebook. M is the number of FD base vectors. $\beta$ is a parameter for calculation of a maximum number of NZCs. The precoding matrix indicated by the PMI is determined from L+M vectors. Here, $L = K_1/2$, and $K_1 = \alpha P_{CSI\text{-}RS}$.

Based on L vectors $v_{m^\wedge(i)}$ (i = 0, 1, ..., L - 1), $K_1$ ports are selected from $P_{CSI\text{-}RS}$ ports. The vector $v_{m^\wedge(i)}$ is identified by $m = [m^{(0)} ... [m^{(L-1)}]$ and $m^{(i)} \in \{0, 1, ..., P_{CSI\text{-}RS/2} - 1\}$. $m^{(i)}$ is reported/indicated by the index $i_{1,2} \in \{0, 1, ..., C(P_{CSI\text{-}RS}/2, L) - 1\}$.

In the further enhanced type 2 PS CSI of Rel. 17, each CSI-RS port is beamformed by using an SD beam and an FD beam. Each port is associated with an SD-FD beam pair.

The precoding matrix $W_1$ for the given layer l is expressed by the following expression.

$$W_1(K \times N_3) = W_1 W^{\sim}_l W_{f,l}{}^H \qquad (H2)$$

For $W_1(K \times 2L)$, each matrix block is formed by L columns of a $K \times K$ identity matrix. The base station transmits K beamformed CSI-RS ports. Each port is associated with an SD-FD beam pair. The UE selects L ports from K ports, and reports an index indicating the selected ports to the base station as a part of the PMI. Note that, in Rel. 16, each port is associated with an SD beam.

$W^{\sim}_l(2L \times M_v)$ is a matrix including combination coefficients (subband complex LC coefficients). Up to $K_0$ NZCs are reported. The report includes two parts: a bitmap indicating an NZC location, and a quantized NZC.

In the further enhanced type 2 PS CSI of Rel. 17, $K_l{}^{NZ} = \Sigma_{i=0}{}^{k1-1} \Sigma_{f=0}{}^{M-1} k_{l,i,f}{}^{(3)} \leq K_0$ is the number of non-zero coefficients in layer l = 1, ..., v, and $K^{NZ} = \Sigma_{l=1}{}^{v} K_l{}^{NZ} \leq 2K_0$ is the total number of non-zero coefficients. If $v \leq 2$ and $K^{NZ} = K_1 Mv$, $i_{1,7,l}$ for layer l = 1, ..., v (bitmap indicator for the l-th layer) is not reported. In other words, when the total number of reported NZCs is equal to the maximum number of $K_1 Mv$ and $v \leq 2$, the report of the bitmap indicating the location of the NZCs is omitted. Note that, in Rel. 16, the bitmap of the NZC location is always reported.

$W_{f,l}(N_3 \times M_v)$ is a matrix including $M_v$ ($M_v$ = 1 or 2) FD base vectors for each layer. Each vector includes $N_3$ FD bases (FD-DFT bases). The base station may remove $W_{f,l}$. When $M_v$ = 1, $W_{f,l}$ is off, and no additional FD base vectors are reported. When $M_v$ = 2, $W_{f,l}$ is on, and $M_v$ additional FD base vectors are reported. When $M_v$ = 2, FD base window size $N \in$ {2, 4} is configured by a higher layer parameter (valueOfN). Note that, in Rel. 16, $W_{f,l}$ is always reported.

(JT)

Joint transmission (JT) may mean simultaneous data transmission from a plurality of points (for example, TRPs) to a single UE.

Rel. 17 supports non-coherent joint transmission (NCJT) from two TRPs. PDSCHs from the two TRPs may be independently precoded and independently decoded. Frequency resources may be nonoverlapping, partially overlapping (partial-overlapping), or fully overlapping (full-overlapping). When the overlap occurs, a PDSCH from one TRP interferes with a PDSCH from another TRP.

In Rel. 18, support of coherent joint transmission (CJT, mTRP CJT) using up to four TRPs has been under study. Data from four TRPs may be coherently precoded and transmitted to the UE on the same time-frequency resource. For example, the same precoding matrix may be used in consideration of channels from four TRPs. "Coherent" may mean that phases of a plurality of received signals have a certain relationship with each other. Signal quality may be improved by using 4-TRP joint precoding, and there may be no interference between the four TRPs. The data may receive only interference outside the four TRPs.

(NCJT CSI/Type 1 Codebook)

In Rel. 17, a scenario allowing for application of an NCJT CSI report is single-DCI-based MTRP NCJT with the type 1 single-panel codebook. For NCJT CSI measurement, in single CSI-ReportConfig, two CMR groups with each channnel measurement resource (CMR) from one TRP can be configured. One CSI report mode can be configured from two modes.

By RRC signaling, CSI-ReportConfig for Rel-17 non-coherent joint transmission (NCJT) CSI configures a CMR and a CSI report mode (csi-ReportMode).

Two CMR groups with $K_s = K_1 + K_2$ CMRs are configured for the UE. $2 \leq K_s \leq 8$ holds. $K_s$ CMRs correspond to the NZP-CSI-RS resource set for channel measurement. $K_1$ and $K_2$ are each the number of CMRs in two CMR groups. From selection out of all possible pairs, N (N sets of) CMR pairs (resource pairs) are configured by a higher layer. N = 1 and $K_s$ = 2 are supported. Support of $N_{max}$ = 2 is an optional feature of the UE. Support of $K_{S,max}$ = X is an optional feature of the UE. Each CMR can include up to 32 CSI-RS ports, depending on a UE capability. Each CMR pair is associated with one CRI value.

The bitmap with RRC signaling indicates one CMR from each CMR group, and thereby indicates N (N = 1, 2) CMR pairs actually used for NCJT measurement. The UE measures single TRP CSI for TRP 1 and single TRP CSI for TRP 2 by using the CMRs in two CMR groups, and measures NCJT CSI by using N CMR pairs.

The UE selects one or more CSIs to be reported, based on the mode (CSI report mode) configured by csi-ReportMode. csi-ReportMode indicates one of two modes (NCJT CSI modes) of the following modes 1 and 2.

- Mode 1

The UE may be configured to report X CSIs associated with a single-TRP measurement hypothesis and one CSI associated with an NCJT measurement hypothesis. X = 0, 1, 2. When X = 2, two CSIs are associated with two different single-TRP measurement hypotheses with a plurality of CMRs from a plurality of different CMR groups. Support of X = 1, 2 is an optional feature of the UE for the UE supporting option 1.

- Mode 2

The UE is configured to report one CSI associated with the best one out of NCJT and single-TRP measurement hypotheses.

In mode 1, the UE reports X+1 CSIs as a total number, including X (X = 0, 1, 2) single TRP CSIs and one NCJT CSI. In mode 2, the UE reports one best CSI (one CSI) out of all the single TRP CSIs and one NCJT CSI.

In one CSI report, up to two single TRP CSIs and one NCJT CSI can be reported (mode 1 with X = 2). The NCJT CSI includes one CRI, two RIs (with one joint RI index), two PMIs, two LIs, and one CQI (four layers or less). The single TRP CSI is the same as existing CSI, and includes one CRI, one RI/PMI/LI, and one or two CQIs (eight layers or less, one CQI for each CW).

For the following some cases, new mapping orders (tables) of a plurality of fields in one CSI report are defined.

- Mapping order of wideband CSI for mode 1 with X = 0. The wideband CSI is supported only for mode 1 with X = 0, that is, the NCJT CSI.
- Mapping order of CSI part 1 for modes 1 and 2.
- Mapping order of a CSI part 2 wideband for modes 1 and 2.
- Mapping order of a CSI part 2 subband for modes 1 and 2.

(CJT CSI/Type 2 Codebook)

In an ideal case (where the four TRPs are collocated (assumed to be located at the same position)), joint estimation of aggregated channel matrix H can be performed and joint precoding matrix V can be fed back. However, there is a case where large-scale path losses of four paths are significantly different from each other. Joint precoding matrix V based on a constant module codebook is not exact. In this case, feedback per TRP and an inter-TRP coefficient can be consistent with each other by a type 2 codebook of existing NR.

For CJT with up to four TRPs in FR1, selection of four TRPs may be semi-static. Thus, the selection and configuration of four CMRs (four CSI-RS resources) for channel measurement may also be semi-static. Dynamic indication of four TRPs from a list of CSI-RS resources is also available, but is unlikely.

Path losses from the respective four TRPs to the UE are different from each other. Thus, it is difficult to perform the dynamic indication only by reporting one aggregated CSI indicating a joint channel matrix.

In consideration of operation for fallback to NCJT (that is, a single TRP), CSI per TRP (that is, single-TRP CSI such as NCJT CSI of Rel. 17) may also be considered.

Based on the assumption of ideal backhaul, synchronization, and the same number of antenna ports over a plurality of TRPs, CSI acquisition for coherent joint transmission (CJT) for FR1 and up to four TRPs is under study. For a CJT multi-TRP for FDD, improvement of the enhanced (Rel-16) type 2 codebook and the further enhanced (Rel-17) type 2 PS codebook is under study.

$W_1$ (matrix indicating SD DFT vectors)/$W_f$ (matrix indicating FD DFT vectors) for respective TRPs may be the same or different from each other. $W_l$(NZCs) for the respective TRPs may be different from each other. $W_1/W_f/W_l$ for the respective TRPs may be selected jointly or individually. It is preferable that different scenarios with different options are present for designs of $W_1/W_f/W_l$. $W_\varphi$ may be reported as an individual content, or may be reported in $W_l$. These used policies relate to an arrangement scenario (for example, intra-site multi-TRP or inter-site multi-TRP).

For example, a precoding matrix for 4-TRP CJT CSI (codebook) may be indicated by $W_1/W_f/W_l$ for the respective TRPs. $W_1$ for the respective TRPs may be the same or different from each other, and may be selected jointly or individually. $W_l$ for the respective TRPs may be different from each other, and may be selected jointly or individually. $W_f$ for the respective TRPs may be the same or different from each other, and may be selected jointly or individually.

There are two codebook mode configurations for FD base selection. In mode 1, an $i_{1,9}$ report is necessary in order to indicate an FD base offset for a j-th selected CSI-RS resource for j = 2, ..., N. In mode 2, the $i_{1,9}$ report is not necessary. All the CSI-RS resources have the same FD base selection.

- Mode 1 is SD/FD base selection for each TRP/each TRP group. It permits independent FD base selection over N TRPs/TRP groups. For example, the codebook structure is given by the following expression. Here, N is the number of TRPs or TRP groups.

$$\begin{bmatrix} W_{1,1} \widetilde{W}_{2,1} W_{f,1}^H \\ \vdots \\ W_{1,N} \widetilde{W}_{2,N} W_{f,N}^H \end{bmatrix} \tag{J1}$$

- Mode 2 is SD base selection for each TRP/each TRP group (port group or resource) and joint/common FD base selection (over N TRPs/TRP groups). For example, the codebook structure is given by the following expression. Here, N is the number of TRPs or TRP groups.

$$\begin{bmatrix} W_{1,1} \widetilde{W}_{2,1} W_f^H \\ \vdots \\ W_{1,N} \widetilde{W}_{2,N} W_f^H \end{bmatrix} \tag{J2}$$

In these two modes, detailed designs, such as parameter combination, base selection, TRP (group) selection,

reference amplitude, and $W_2$ quantization, may be made common.

For an enhanced type 2 codebook for CJT (enhanced Type II codebook for CJT, Rel-18 type 2 CSI for CJT), the UE may be configured with the higher layer parameter codebookType set to 'typeII-CJT-r18'. For a further enhanced type 2 PS codebook for CJT (further enhanced Type II port selection codebook for CJT, Rel-18 type 2 PS CSI for CJT), the UE may be configured with the higher layer parameter codebookType set to 'typeII-CJT-PortSelection-r18'.

The UE can be configured with $N_{TRP} \in \{1, 2, 3, 4\}$ CSI-RS resources in the resource set for channel measurement.

In the enhanced type 2 codebook for CJT, $N_L \in \{1, 2, 4\}$ combination sets with the value of $\{L_1, ..., L_{N\_TRP}\}$ are configured by a higher layer parameter paramCombination-CJT-L-r18. The value of $N_L$ is configured by a higher layer parameter numberOfSDCombinations.

In the further enhanced type 2 PS codebook for CJT, $N_L \in \{1, 2, 4\}$ combination sets with the value of $\{\alpha_1, ..., \alpha_{N\_TRP}\}$ are configured by a higher layer parameter paramCombination-CJT-PS-alpha-r18. The value of $N_L$ is configured by a higher layer parameter numberOfSDCombinations-PS.

The UE may be configured with a higher layer parameter restrictedCMR-Selection. If restrictedCMR-Selection is configured, the number N of selected CSI-RS resources is $N_{TRP}$. Otherwise, the UE expects to select N CSI-RS resources for $1 \le N \le N_{TRP}$, and the selection is reported using a bitmap of $N_{TRP}$ bits.

In selection/reporting of an SD beam, selection/reporting of an SD beam for each CSI-RS resource is applied.

In the enhanced type 2 codebook for CJT, the precoding matrix indicated by the PMI is determined from $\Sigma_{j=1}^{N} L_{\sigma\_j} + M_v$ vectors. Here, $\{\sigma_1, ..., \sigma_N\}$ is indices of N CSI-RS resources selected in ascending order to satisfy $1 \le \sigma_1 < ... < \sigma_N \le N_{TRP}$. $N_{TRP}$ may be the number of CSI-RS resources configured for the CSI report, or may be the number of TRPs for CJT. $\{L_{\sigma\_1}, ..., L_{\sigma\_N}\}$ is a corresponding value from selected combinations of $\{L_1, ..., L_{N\_TRP}\}$.

For j = 1, ..., N and i = 0, 1, ..., $L_{\sigma\_j}$ - 1, $L_{\sigma\_j}$ vectors $v_{m\_1,f^\wedge(i),m\_2,f^\wedge(i)}$ corresponding to the j-th selected CSI-RS resource are indicated/reported by $i_{1,1}$ and $i_{1,2}$. Here, $i_{1,1}$ and $i_{1,2}$ are given by the following expression.

$$i_{1,1} = [i_{1,1,1} \ ... \ i_{1,1,N}]$$

$$i_{1,1,j} = [q_{1,j} \ q_{2,j}]$$

$$q_{1,j} \in \{0, 1, ..., O_1 - 1\}$$

$$q_{2,j} \in \{0, 1, ..., O_2 - 1\}$$

$$i_{1,2} = [i_{1,2,1} \ ... \ i_{1,2,N}]$$

$$i_{1,2,j} \in \{0, 1, ..., C(N_1 N_2, L_{\sigma\_j}) - 1\}$$

In the further enhanced type 2 PS codebook for CJT, the precoding matrix indicated by the PMI is determined from $\Sigma_{j=1}^{N} L_{\sigma\_j} + M$ vectors. Here, $\{\sigma_1, ..., \sigma_N\}$ is indices of N CSI-RS resources selected in ascending order to satisfy $1 \le \sigma_1 < ... < \sigma_N \le N_{TRP}$. $L_{\sigma\_j} = K_{1,\sigma\_j}/2$ and $K_{1,\sigma\_j} = \alpha_{\sigma\_j} * P_{CSI-RS}$. $\{\sigma_{\sigma\_1}, ..., \sigma_{\sigma\_N}\}$ is a corresponding value from selected combinations of $\{\alpha_1, ..., \alpha_{N\_TRP}\}$.

For j = 1, ..., N and i = 0, 1, ..., $L_{\sigma\_j}$ - 1, based on $L_{\sigma\_j}$ vectors $v_{m\_j^\wedge(i)}$, $K_{1,\sigma\_j}$ ports are selected from $P_{CSI-RS}$ ports of the j-th selected CSI-RS resource, and are indicated/reported by $i_{1,2}$. Here, $i_{1,2}$ is given by the following expression.

$$i_{1,2} = [i_{1,2,1} \ ... \ i_{1,2,N}]$$

$$i_{1,2,j} \in \{0, 1, ..., C(P_{CSI-RS}, L_{\sigma\_j}) - 1\}$$

In the present disclosure, a codebook for CJT, a type 2 codebook for CJT, an enhanced type 2 codebook for CJT, a Rel-18 type 2 codebook for CJT, typeII-CJT-r18, a further enhanced type 2 PS codebook for CJT, a Rel-18 type 2 PS codebook for CJT, and typeII-CJT-PortSelection-r18' may be interchangeably interpreted.

(Doppler CSI/Type 2 Codebook)

It is studied to enhance/enhance capability of the CSI report for the UE that moves at a high speed/intermediate speed by using time-domain correlation/Doppler-domain (DD) information. For example, studies have been carried out on improvement of the enhanced (Rel-16) type 2 codebook and the further enhanced (Rel-17) type 2 PS codebook and reporting of time domain channel properties (time domain correlation profile) measured via a tracking CSI-RS (tracking RS (TRS)) from the UE without changing spatial domain bases and frequency domain bases.

Channel coherent time (CCT) is dependent upon a maximum Doppler shift. The channel coherent time is time in which the measured channel properties are available or time until the measured channel properties become no longer available (channel aging). The maximum Doppler shift is estimated based on a relative speed between a transmitting device and a receiving device. The channel coherent time $T_c$ is approximated by $1/\Delta f_{max}$. Here, $\Delta f_{max} = v/\lambda$. As the moving speed of the UE is higher, the channel coherent time is shorter. For example, in a carrier frequency of 4.5 GHz, when the moving speed exceeds approximately 25 km/h, the channel coherent time falls below 10 ms. How to address such a high moving speed and a short channel coherent time poses a problem.

To follow the Doppler shift, the TRS is supported. However, the TRS has the following problems.

- The number of ports per CSI-RS resource set is limited to only one. Each CSI-RS resource uses a single port.
- A configurable period is 10 ms or more.
- The CSI report for the TRS is not assumed. There is no report configuration for the P-TRS. Although a report can be configured, the report quantity (reportQuantity) is set only to 'none'. Up to 16 CSI-RS resources are used per CSI-RS resource set.

The TRS is mapped to time domain and frequency domain resources. For measurement of influence due to the Doppler shift, a plurality of RSs in the time domain are required in specific frequency domain resources.

For measurement of influence due to the Doppler shift, using the CMRs is considered. However, the RS used for measurement is dependent upon implementation of the UE.

In quantity of the CSI report, information related to the Doppler shift is not supported. Information for determination of $W = W_1 W_2$ is reported by the UE via a CSI codebook (PMI). Here, $W_1$ is wideband property, and indicates a spatial beam. $W_2$ is subband property, and indicates a coefficient of amplitude/phase for each spatial beam.

Regarding measurement related to the Doppler shift, case 1 in which the UE performs measurement based on the CSI-RS and case 2 in which the base station performs measurement based on the SRS are considered. Regarding determination of influence related to the Doppler shift, case 1-1 in which the UE performs determination based on CSI-RS measurement results, case 1-2 in which the base station performs determination based on CSI-RS measurement results reported by the UE, and case 2-1 in which the base station performs determination based on SRS measurement results are considered.

A CSI-RS measurement window and a CSI reporting window are under study. In the CSI-RS measurement window, one or more CSI-RS occasions may be measured. A reported CSI may be associated with the CSI reporting window.

The length (number of DD/TD bases) of the Doppler-domain (DD)/time-domain (TD) base vectors (DFT base vectors) may be represented by $N_4$, assuming the CSI report in slot n. In the CSI measurement window of slot[k, k + W_{meas} - 1], one or more CSI occasions for computation of the CSI report may be measured. Here, k may be a slot index, and $W_{meas}$ may be a measurement window length (the number of slots). The CSI occasion may be configured in CSI-ReportConfig. The CSI reporting window of slot[l, l + W_{CSI} - 1] may be associated with the CSI report in the slot n. Here, l may be a slot index, and $W_{CSI}$ may be a reporting window length (the number of slots). The position of a CSI reference resource may be represented by $n_{ref}$.

Duration of the CSI reporting window is $W_{CSI} = dN_4$. d and $N_4$ are determined by a CMR configuration. A starting point of the CSI reporting window is slot l. l = (n - N_{CSI,ref}) may hold. l = (n + δ) may hold. δ = {0, 2} may hold, or δ = {0, 1, 2} may hold.

d slots may be duration in DD units.

When the UE-side prediction is assumed, it is supported that the UE predicts CSI/channel after slot l, and the base station configures the position of the slot l (from a plurality of candidate values) via higher layer signaling. A plurality of candidates of the slot l position include existing CSI reference resource positions (n - N_{CSI,ref}) and (n + δ). Here, δ > 0. The existing CSI reference resource in existing operation, i.e., (n - N_{CSI,ref}), is reused to indicate the position of the last CSI-RS occasion used/repurposed for the CSI report.

For the parameter δ, additional value 2 is supported.

$N_4$ is configured by the base station via higher layer signaling.

In $N_4 = 1$, the DD base may be the same (identity). There may not be DD compression. The codebook structure in this case may be the following expression, for example.

$$W = W_1 \widetilde{W_2}\left(W_f\right)^H \tag{J3}$$

In $N_4 > 1$, the Doppler-domain orthogonal DFT bases may be selected in common for all the SD/FD bases. The codebook structure in this case may be the following expression, for example.

$$W = W_1 \widetilde{W_2}\left(W_f \otimes W_d\right)^H \tag{J4}$$

Only $Q > 1$ indicating the number of selected Doppler-domain (DD) base vectors is permitted. Detailed designs of the SD/FD bases, including an associated UCI parameter, follow existing specifications.

For an enhanced type 2 codebook for a predicted PMI (enhanced Type II codebook for predicted PMI, Rel-18 type 2 CSI for a predicted PMI), the UE may be configured with the higher layer parameter codebookType set to 'typeII-Doppler-r18'. For a further enhanced type 2 PS codebook for a predicted PMI (further enhanced Type II port selection codebook for predicted PMI, Rel-18 type 2 PS CSI for a predicted PMI), the UE may be configured with the higher layer parameter codebookType set to 'typeII-Doppler-PortSelection-r18'.

In the present disclosure, a Doppler codebook, a Doppler type 2 codebook, an enhanced type 2 codebook for a predicted PMI, Rel-18 type 2 CSI codebook for a predicted PMI, typeII-Doppler-r18, a further enhanced type 2 PS codebook for a predicted PMI, a Rel-18 type 2 PS codebook for a predicted PMI, and typeII-Doppler-PortSelection-r18 may be interchangeably interpreted.

(TDCP Report)

Reporting of time domain channel properties (TDCP) from the UE is under study.

For CSI-ReportConfig with report quantity (higher layer parameter reportQuantity) set to 'tdcp', a higher layer parameter $Y \geq 1$, and delays $\{D_1, ..., D_Y\}$, TDCP amplitude $k_{TDCP} = [k_1 ... k_Y]$ corresponding to Y delays is reported. Here, $k_i \in \{0, ..., 15\}$. For i = 1, ..., Y, a corresponding amplitude value is obtained from $1 - a_i$. Mapping from $k_i$ to $a_i$ is defined in a specification.

When a higher layer parameter phase is configured for $Y > 1$, TDCP phase $c_{TDCP} = [c_1 ... c_Y]$ is reported. Here, $c_i \in \{0, ..., 15\}$. A corresponding phase value is given by $\exp(j2\pi c_i/16)$.

(CSI Processing Criteria: Physical Layer Procedure for Data/Physical Downlink Shared Channel-Related Procedure/ UE Procedure for Report of CSI/CSI Framework)

The UE reports/indicates the number of supported simultaneous CSI computations (maximum number of simultaneous CSI computations) $N_{CPU}$ by using the following capability information. $N_{CPU}$ implies the number of CSI processing units (CPUs).

- simultaneousCSI-ReportsPerCC in csi-ReportFramework in MIMO-ParametersPerBand. MIMO-ParametersPerBand is used to transmit MIMO-related parameters specific to a certain band. csi-ReportFramework indicates whether the UE supports a CSI report framework. simultaneousCSI-ReportsPerCC indicates the number of CSI reports in which the UE can simultaneously measure and process reference signals in one CC of a band for which the capability is provided. The CSI report includes periodic, semi-persistent, and aperiodic CSI and any latency class and codebook type. The CSI report in simultaneousCSI-ReportsPerCC includes a beam report and a CSI report.
- simultaneousCSI-ReportsAllCC in CA-ParametersNR. simultaneousCSI-ReportsAllCC indicates whether the UE supports the CSI report framework, and the number of CSI reports that the UE can simultaneously process across all CCs (in a case of NR-DC, a master cell group (MCG) and a secondary cell group (SCG)). The CSI report includes periodic, semi-persistent, and aperiodic CSI and any latency class and codebook type. The CSI report in simultaneousCSI-ReportsAllCC includes a beam report and a CSI report. The parameter is further limited by simultaneousCSI-ReportsPerCC and Phy-ParametersFRX-Diff in MIMO-ParametersPerBand for each band in a given band combination.

When the UE supports $N_{CPU}$ simultaneous CSI computations, the UE includes $N_{CPU}$ CPUs for processing of the CSI report. When L CPUs are occupied for computation of the CSI report in one given OFDM symbol, the UE includes $N_{CPU}-L$ unoccupied CPUs. In the same OFDM symbol in which $N_{CPU}-L$ CPUs are unoccupied, when N CSI reports start occupying respective CPUs and correspond to $O_{CPU}^{(n)}$ (the number of CPUs consumed for CSI report n) of each CSI report n = 0, ..., N-1 in N CSI reports, the UE is not required to update (compute, process) the N-M required CSI reports from the lowest priority (highest priority value $Pri_{iCSI}(y, k, c, s)$) according to the priority rule. Here, $0 \leq M \leq N$ is the maximum value by which $\Sigma_{n=0}^{M-1} O_{CPU}^{(n)} \leq N_{CPU}-L$ holds .

The UE does not assume to be configured with an A-CSI trigger state including more than $N_{CPU}$ report settings. Processing of the CSI report occupies some CPUs in some symbols as in the following processings 1, 2, a, and 3. The processing of the CSI report consumes zero, one, or more CPUs ($O_{CPU}$, the number of CPUs consumed) (CPU occupation rule).

- Processing 1

In a case in which the CSI report with CSI-ReportConfig with a higher layer parameter reportQuantity set to 'none' and CSI-RS-ResourceSet with a higher layer parameter trs-Info is configured, $O_{CPU} = 0$.

- Processing 2 (Beam Management)

In the CSI report with CSI-ReportConfig with the higher layer parameter reportQuantity set to 'cri-RSRP', 'ssb-Index-RSRP', 'cri-SINR', 'ssb-Index-SINR', 'cri-RSRP-Capability[Set]Index', 'ssb-Index-RSRP-Capability[Set]Index', 'cri-SINR-Capability[Set]Index', 'ssb-Index-SINR-Capability[Set]Index', or 'none' (when CSI-RS-ResourceSet with the higher layer parameter trs-Info is not configured), $O_{CPU} = 1$.

- Processing a (TDCP Report)

For the CSI report using CSI-ReportConfig with the higher layer parameter reportQuantity set to 'tdcp' and the number of delays Y configured by the higher layer parameter Y, $O_{CPU} = (Y + 1)$. Here, the value of $X \geq 1$ is reported by a UE capability.

- Processing 3

In the CSI report with CSI-ReportConfig with the higher layer parameter reportQuantity set to 'cri-RI-PMI-CQI', 'cri-RI-i1', 'cri-RI-i1-CQI', 'cri-RI-CQI', or 'cri-RI-LI-PMI-CQI', $O_{CPU}$ follows the following processing 3-x.

-- Processing 3-1 (Case in which UE Can Use UE Capability at Maximum)

When $\max\{\mu_{PDCCH}, P_{CSI-RS}, \mu_{UL}\} \leq 3$, and the CSI report without transmission of the PUSCH with at least one of a transport block and a HARQ-ACK is aperiodically triggered when L = 0 CPUs are occupied, the CSI corresponds to single CSI with wideband frequency-granularity and four or less CSI-RS ports in a single resource without the CRI report, codebookType is set to 'type1-SinglePanel', and reportQuantity is configured to 'cri-RI-CQI', $O_{CPU} = N_{CPU}$. $\mu_{PDCCH}$ is a subcarrier spacing (SCS) configuration of a PDCCH. $P_{CSI-RS}$ is an SCS configuration of a CSI-RS. $\mu_{UL}$ is an SCS configuration of a UL BWP in which the CSI report is transmitted.

-- Processing 3-2 (Case of NCJT CSI)

When CSI-ReportConfig with codebookType set to 'type1-SinglePanel' is configured, and the CSI-RS resource set for channel measurement corresponding thereto is configured with two resource groups and N resource pairs, $O_{CPU} = X \cdot N + M$. Here, X is the number of CPUs occupied by CMR pairs according to a UE capability. A UE capability mTRP-CSI-numCPU-r17 indicates the number of CPUs occupied by CMR pairs for NCJT CSI hypotheses. For $M_1$ resources and $M_2$ resources associated with the CRI value for resource group 1 with $K_1$ resources and resource group 2 with $K_2$ resources in the NZP CSI-RS resource set for channel measurement with $K_S = K_1 + K_2$ resources, $M = M_1 + M_2$.

-- Processing 3-3 (Case of CJT CSI)

When CSI-ReportConfig with the higher layer parameter reportQuantity set to 'cri-RI-PMI-CQI' and codebookType set to 'typeII-CJT-r18' or 'typeII-CJT-PortSelection-r18' is configured, and its corresponding NZP-CSI-RS-ResourceSet for channel measurement with $1 < N_{TRP} \leq 4$ resources is configured, $O_{CPU} = X \cdot N_{TRP}$. Here, the value of $X \geq 1$ is reported by a UE capability.

-- Processing 3-4 (Case of Doppler CSI)

When CSI-ReportConfig with the higher layer parameter reportQuantity set to 'cri-RI-PMI-CQI' and codebook-

Type set to 'typeII-Doppler-r18' or 'typeII-Doppler-PortSelection-r18' is configured, $O_{CPU}$ follows the following processing 3-4-x.

--- Processing 3-4-1

When its corresponding CSI-RS resource set for channel measurement is aperiodic, and is configured with K CSI-RS resources, $O_{CPU} = Y_1 \cdot K$. Here, $Y_1 \geq 1$ is reported by a UE capability.

--- Processing 3-4-2

When its corresponding CSI-RS resource set for channel measurement is periodic or semi-persistent, and is configured with a single CSI-RS resource, $O_{CPU} = 4$ for $N_4 = 1$, and $O_{CPU} = Y_2 \cdot N_4 \geq 4$ for $N_4 > 1$. Here, $N_4$ is configured by a higher layer parameter N4, and $Y_2 \geq 1$ is reported by a UE capability.

-- Processing 3-5

In other cases, $O_{CPU} = K_S$. $K_S$ is the number of CSI-RS resources in the CSI-RS resource set for channel measurement.
In the CSI report with CSI-ReportConfig with the higher layer parameter reportQuantity not configured to 'none', one or more CPUs are occupied for the following plurality of OFDM symbols (CPU occupation duration).

- The P-CSI report or the SP-CSI report occupies one or more CPUs from a first symbol of one earliest resource in resources prior to corresponding CSI reference resources of the occasion of each last CSI-RS/CSI-IM/SSB in a plurality of CSI-RS/CSI-IM/SSB resources for channel or interference measurement to the last symbol of the PUSCH/PUCCH on which the report is transmitted and configured (CPU occupation duration 1). The P-CSI report or the SP-CSI report excludes a first SP-CSI report on the PUSCH after the PDCCH for triggering the report. The time in which the P-CSI report or the SP-CSI report occupies one or more CPUs may be referred to as CPU occupation duration 1.
- The A-CSI report occupies one or more CPUs from a first symbol after the PDCCH for triggering the CSI report to the last symbol of the PUSCH/PUCCH on which the report is transmitted and configured (CPU occupation duration 2). When the PDCCH reception includes two corresponding PDCCH candidates from two search space sets, for determination of the CPU occupation duration, the PDCCH candidate that ends later out of the two PDCCH candidates is used. The time in which the A-CSI report occupies one or more CPUs may be referred to as CPU occupation duration 2.
- A first SP-CSI report on the PUSCH after a PDCCH trigger occupies one or more CPUs from a first symbol after the PDCCH to the last symbol of the PUSCH on which the report is transmitted and scheduled (CPU occupation duration 3). When the PDCCH reception includes two corresponding PDCCH candidates from two search space sets, for determination of the CPU occupation duration, the PDCCH candidate that ends later out of the two PDCCH candidates is used. The time in which the SP-CSI report occupies one or more CPUs may be referred to as CPU occupation duration 3.

In any slot, the UE does not assume to include more active CSI-RS ports or active CSI-RS resources than the reported number as the capability in an active BWP. The NZP CSI-RS resources are active in duration of time (active duration of time, active duration) defined as follows.

- The duration of time for the A-CSI-RS starts from the end of the PDCCH including the request and ends at the end of the PUSCH including and scheduled with the report associated with the A-CSI-RS.
- The duration of time for the SP-CSI-RS starts from the end of time at which an activation command is applied and ends at the end of time at which a deactivation command is applied.
- The duration of time for the P-CSI-RS starts when the P-CSI-RS is configured by higher layer signaling and ends when the P-CSI-RS configuration is released.

If CSI-RS resources are referred to by N CSI report settings, the CSI-RS resources and the CSI-RS ports in the CSI-RS resource are counted N times.
The P-CSI-RS is always counted as an active CSI-RS, regardless of whether it is received on the OFDM symbol.
The UE reports UE capability information (codebookParameter) related to the CSI report codebook per band.
codebookParameter indicates the codebook (type) and corresponding parameters supported by the UE. Reporting of parameters corresponding to the type 1 single panel is mandatory. Reporting of parameters corresponding to the type 1 multi-panel, type 2, and type 2 port selection is optional. The parameters may include at least one of maxNumberTxPortsPerResource, maxNumberResourcesPerBand, and totalNumberTxPortsPerBand. maxNumberTx-PortsPerResource indicates the maximum number of transmission ports in one resource. maxNumberResourcesPer-Band indicates the maximum number of resources simultaneously used across all CCs in one band. totalNumberTx-PortsPerBand indicates the maximum number of transmission ports simultaneously used across all CCs in one band.

In the present disclosure, CPU occupation, the number of occupation CPUs, the number of CPUs, $O_{CPU}$, and the number of CPUs consumed may be interchangeably interpreted.

(CSI Reference Resource)

CSI reference resources for the serving cell are defined as follows.

- In the frequency domain, the CSI reference resources are defined by a group of a plurality of DL PRBs corresponding to a band with which derived CSI is associated.
- In the time domain, the CSI reference resources are defined by a single DL slot n - $n_{CSI\_ref}$ - $K_{offset} \cdot 2^{\mu\_DL}/2^{\mu\_Koffset}$. Here, $K_{offset}$ is a parameter configured by a higher layer, and $\mu\_K_{offset}$ is a subcarrier spacing configuration for Koffset and has a value of 0 in FR1. $\mu\_DL$ is a subcarrier spacing configuration for the DL.

-- In a P/SP-CSI report, if a single CSI-RS/SSB for channel measurement is configured, $n_{CSI\_ref}$ is such a minimum value of $4 \cdot 2^{\mu\_DL}$ or greater that it corresponds to an active DL slot. If a plurality of CSI-RSs/SSBs for channel measurement are configured, $n_{CSI\_ref}$ is such a minimum value of $5 \cdot 2^{\mu\_DL}$ or greater that it corresponds to an active DL slot.

-- In an AP-CSI report, if the UE is indicated by DCI to report CSI in the same slot as a CSI request, for $n_{CSI\_ref}$, there are reference resources in the same active DL slot as the corresponding CSI request, otherwise $n_{CSI\_ref}$ is such a minimum value of floor $(Z'/N_{symb}^{slot})$ or greater that the slot $n_{CSI\_ref}$ corresponds to an active DL slot. Here, Z' corresponds to a delay requirement. $N_{symb}^{slot}$ is the number of symbols in the slot.

-- When a P or SP CSI-RS/CSI-IM or SSB is used for measurement of a channel/interference, the UE is not expected to measure a channel/interference related to the CSI-RS/CSI-IM/SSB in which the last OFDM symbol is received prior to Z' symbols before transmission time of the first OFDM symbol of the AP-CSI report.

When a slot in the serving cell at least includes a DL or flexible symbol configured by a higher layer, and the slot is not present in a measurement gap configured for the UE, the slot is considered as an active DL slot.

(UE CSI Computation Time: Physical Layer Procedure for Data/Physical Downlink Shared Channel-Related Procedure)

When a CSI request field on DCI triggers a CSI report on a PUSCH, and the following condition holds, the UE provides an active CSI report for an n-th triggered report:

- A first uplink symbol carrying one or more corresponding CSI reports and having effects of timing advance does not start earlier than a symbol $Z_{ref}$ (starts at or later than the symbol $Z_{ref}$), and
- A first uplink symbol carrying an n-th CSI report and having effects of timing advance does not start earlier than a symbol $Z'_{ref}(n)$ (starts at or later than the symbol $Z'_{ref}(n)$).

$Z_{ref}$ is a subsequent uplink symbol after the end of the last symbol of the PDCCH triggering the one or more CSI reports, and its cyclic prefix (CP) is defined as a symbol starting at $T_{proc,CSI} = (Z)(2048 + 144) \cdot \kappa 2^{-\mu} \cdot T_c + T_{switch}$. $Z'_{ref}$ is, when the A-CSI-RS is used for channel measurement of the n-th triggered CSI report, a subsequent uplink symbol after the end of the last symbol of the latest time among the following times, and its CP is defined as a symbol starting at $T'_{proc,CSI} = (Z')(2048 + 144) \cdot \mu 2^{-\mu} \cdot T_C$.

- A-CSI-RS resource for channel measurement,
- A-CSI-IM used for interference measurement, and
- A-NZP-CSI-RS for channel measurement.

$T_{switch}$ is defined in a specification, and is applied only when $Z_1$ is applied.

When PDCCH reception includes two corresponding PDCCH candidates from two search space sets, a PDCCH candidate that ends later in time out of the two PDCCH candidates is used for determination of the last symbol of the PDCCH triggering the CSI report.

Z, Z', and $\mu$ are defined as follows.

Z = max(Z(m)) for m = 0, ..., M - 1. Z' = max(Z'(m)) for m = 0, ..., M - 1. Here, M is the number of updated CSI reports. (Z(m), Z'(m)) corresponds to an m-th updated CSI report, and is defined as follows. Here, CSI computation delay requirement 1 indicates $(Z_1, Z'_1)$ [symbols] for $\mu \in \{0, 1, 2, 3\}$, and CSI computation delay requirement 2 indicates $(Z_1, Z'_1)$, $(Z_2, Z'_2)$, and $(Z_3, Z'_3)$ [symbols] for $\mu \in \{0, 1, 2, 3, 4, 5, 6\}$.

- When $\max\{\mu_{PDCCH}, \mu_{CSI-RS}, \mu_{UL}\} \leq 3$, L = 0 CPUs are occupied, the CSI to be transmitted is single CSI and corresponds to wideband frequency granularity, the CSI corresponds to up to four CSI-RS ports in a single resource without a CRI report, CodebookType is set to 'typeI-SinglePanel' or reportQuantity is set to 'cri-RI-CQI', and the CSI is triggered without the PUSCH with a transport block, a HARQ-ACK, or both, (Z(m), Z'(m)) is defined as $(Z_1, Z'_1)$ in CSI computation delay requirement 1.
- When the CSI to be transmitted corresponds to wideband frequency granularity, the CSI corresponds to up to four CSI-RS ports in a single resource without a CRI report, and CodebookType is set to 'typeI-SinglePanel' or reportQuantity is set to 'cri-RI-CQI', (Z(m), Z'(m)) is defined as $(Z_1, Z'_1)$ in CSI computation delay requirement 2.
- When the CSI to be transmitted corresponds to wideband frequency granularity, and reportQuantity is set to 'ssb-Index-SINR', 'cri-SINR', 'ssb-Index-SINR-Index', or 'cri-SINR-Index', (Z(m), Z'(m)) is defined as $(Z_1, Z'_1)$ in CSI computation delay requirement 2.
- When reportQuantity is set to 'cri-RSRP', 'ssb-Index-RSRP', 'cri-RSRP-Index', or 'ssb-Index-RSRP-Index', $X_\mu$ follows a capability beamReportTiming reported by the UE, and $KB_l$ follows a capability beamSwitchTiming reported by the UE, (Z(m), Z'(m)) is defined as $(Z_3, Z'_3)$ in CSI computation delay requirement 2.
- When codebookType is set to 'typeII-CJT-r18' or 'typeII-CJT-PortSelection-r18', and corresponding NZP-CSI-RS-ResourceSet for channel measurement is configured with $1 < N_{TRP} \leq 4$ resources, (Z(m), Z'(m)) is defined as $(Z_2, Z'_2)$ or $(Z_2 + r, Z'_2 + r)$ in accordance with the capability reported by the UE, using $(Z_2, Z'_2)$ in CSI computation delay requirement 2.
- When the CSI report is configured with $N_4 = 1$, codebookType is set to 'typeII-Doppler-r18' or 'typeII-Doppler-PortSelection-r18', and corresponding NZP-CSI-RS-ResourceSet for channel measurement has K CSI-RS resources and is aperiodic, (Z(m), Z'(m)) is defined as $(Z_2 + 14(K - 1)m, Z'_2)$, using $(Z_2, Z'_2)$ in CSI computation delay requirement 2.
- When the CSI report is configured with $N_4 = 1$, codebookType is set to 'typeII-Doppler-r18' or 'typeII-Doppler-PortSelection-r18', and corresponding NZP-CSI-RS-ResourceSet for channel measurement has a single CSI-RS resource and is periodic or semi-persistent, (Z(m), Z'(m)) is defined as $(Z_2 + w, Z'_2)$, using $(Z_2, Z'_2)$ in CSI computation delay requirement 2.
- When the CSI report is configured with $N_4 > 1$, codebookType is set to 'typeII-Doppler-r18' or 'typeII-Doppler-PortSelection-r18', and corresponding NZP-CSI-RS-ResourceSet for channel measurement has K CSI-RS resources and is aperiodic, (Z(m), Z'(m)) is defined as $(Z_2 + 14(K - 1)m, Z'_2)$ or $(Z_2 + 14(K - 1)m + r, Z'_2 + r)$ in accordance with the capability reported by the UE, using $(Z_2, Z'_2)$ in CSI computation delay requirement 2.
- When the CSI report is configured with $N_4 > 1$, codebookType is set to 'typeII-Doppler-r18' or 'typeII-Doppler-PortSelection-r18', and corresponding NZP-CSI-RS-ResourceSet for channel measurement has a single CSI-RS resource and is periodic or semi-persistent, (Z(m), Z'(m)) is defined as $(Z_2 + w, Z'_2)$ in accordance with the capability reported by the UE, using $(Z_2, Z'_2)$ in CSI computation delay requirement 2. It is defined as $(Z_2 + 14(K - 1)m, Z'_2)$ or $(Z_2 + 14(K - 1)m + r, Z'_2 + r)$ in accordance with the capability reported by the UE.
- $\mu$ of CSI computation delay requirements 1 and 2 corresponds to min $(\mu_{PDCCH}, \mu_{CSI-RS}, \mu_{UL})$. Here, $\mu_{PDCCH}$ corresponds to a subcarrier spacing of the PDCCH on which DCI is transmitted. $\mu_{UL}$ corresponds to a subcarrier spacing of the PUSCH on which the CSI report is to be transmitted. $\mu_{CSI-RS}$ corresponds to a minimum subcarrier spacing of the A-CSI-RS triggered by DCI.

In improvement of the Rel-18 type 2 codebook for a CJT multi-TRP, the following is under study: for $N_{TRP} = 1$, (Z, Z') reuses an existing (Z, Z') value, for $N_{TRP} > 1$, two UE capabilities are introduced, for capability 1, (Z, Z') reuses an existing (Z, Z') value, for capability 2, (Z, Z') is an existing (Z, Z') value + r, and the value of r > 0 may depend on a configured $N_{TRP}$ value.

In the present disclosure, $Z_{ref}$, $Z_{ref}(n)$, Z, Z', Z(m), Z'(m), and the number of symbols from the end of the last symbol of a PDCCH triggering a CSI report to a symbol in which UL transmission of the CSI report can be started may be interchangeably interpreted.

(CSI-RS)

In Rel. 15, a CSI-RS is used as a DL RS for at least one of channel state information (CSI) acquisition, beam management (BM), beam failure recovery (BFR), and fine tracking of time and frequency, for example. The CSI-RS supports 1, 2, 4, 8, 12, 16, 24, and 32 ports (antenna ports, CSI-RS ports). The CSI-RS supports periodic, semi-persistent, and aperiodic transmission. In order to adjust overhead and CSI estimation accuracy, frequency density of the CSI-RS can be configured.

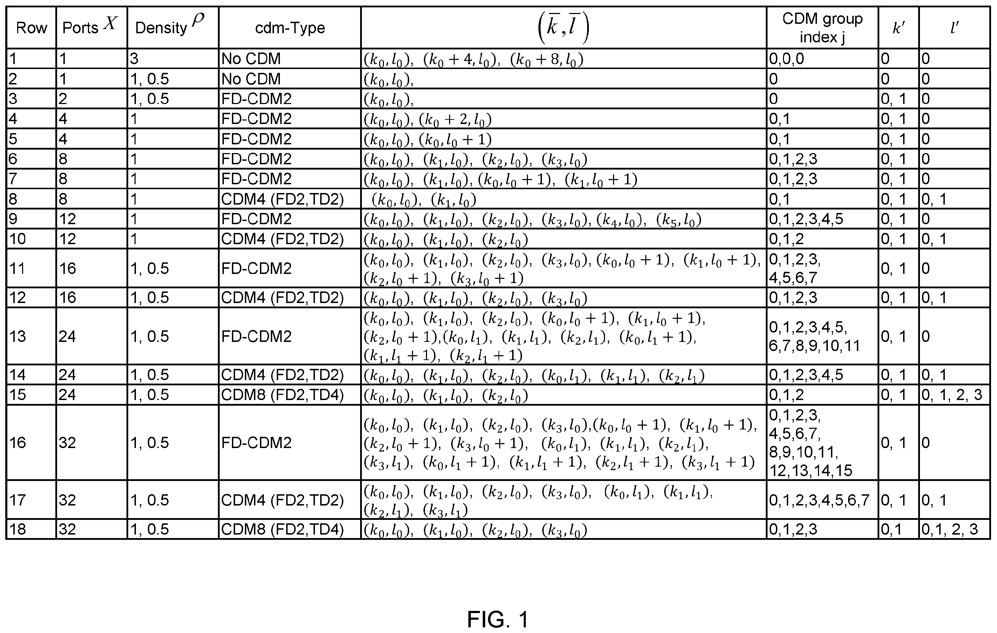

FIG. 1 is a diagram to show an example of CSI-RS locations in a slot. Rows of the table indicate a row number, the number of ports, density of the frequency domain, a CDM type, time and frequency (time/frequency) locations (locations of component resources (k bar, l bar)), a code division multiplexing (CDM) group index, and resource locations in component resources ((REs, symbols), (k', l')). Here, the time/frequency locations are locations of time and frequency resources (component resources) of the CSI-RS corresponding to one port. k bar is a notation with an overline attached over "k". k bar indicates a start resource element (RE) index of a component resource, and l bar indicates a start symbol (OFDM symbol) index of the component resource.

Examples of a CDM group include no CDM (without CDM, N/A), FD-CDM2, CDM4, and CDM8. In FD-CDM2, the CSI-RS having two ports is multiplexed on the same time and frequency by multiplying a frequency domain (FD)-orthogonal cover code (OCC) having a length of 2 in units of REs (FD2). In CDM4, the CSI-RS having four ports is multiplexed on the same time and frequency by multiplying an FD-OCC having a length of 2 and a time domain (TD)-OCC having a length of 2 in units of REs and units of symbols (FD2TD2). In CDM8, the CSI-RS having eight ports is multiplexed on the same time and frequency by multiplying an FD-OCC having a length of 2 and a TD-OCC having a length of 4 in units of REs and units of symbols (FD2TD4).

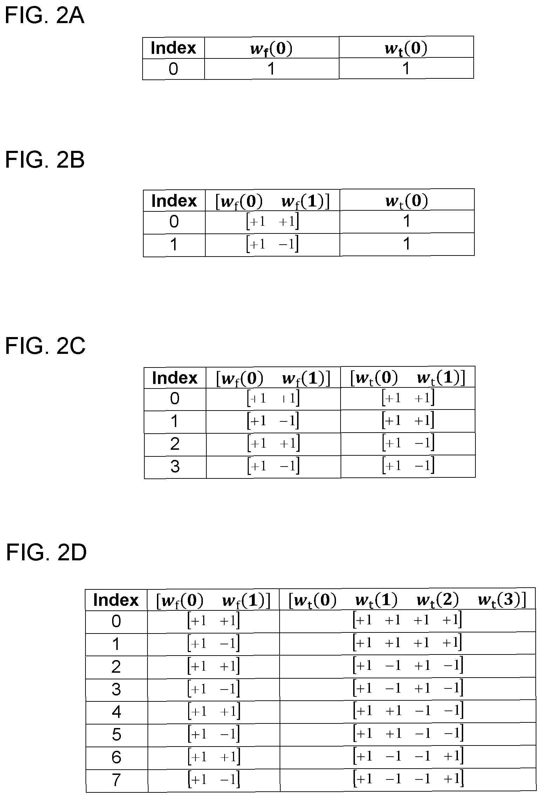

FIG. 2A to FIG. 2D are diagrams to show examples of the FD-OCC and the TD-OCC. A sequence of the FD-OCC is represented by $w_f(k')$, and a sequence of the TD-OCC is represented by $wt(k')$. FIG. 2A shows a case in which the CDM type is no CDM. FIG. 2B shows a case in which the CDM type is FD-CDM2. FIG. 2C shows a case in which the CDM type is CDM4. FIG. 2D shows a case in which the CDM type is CDM8.

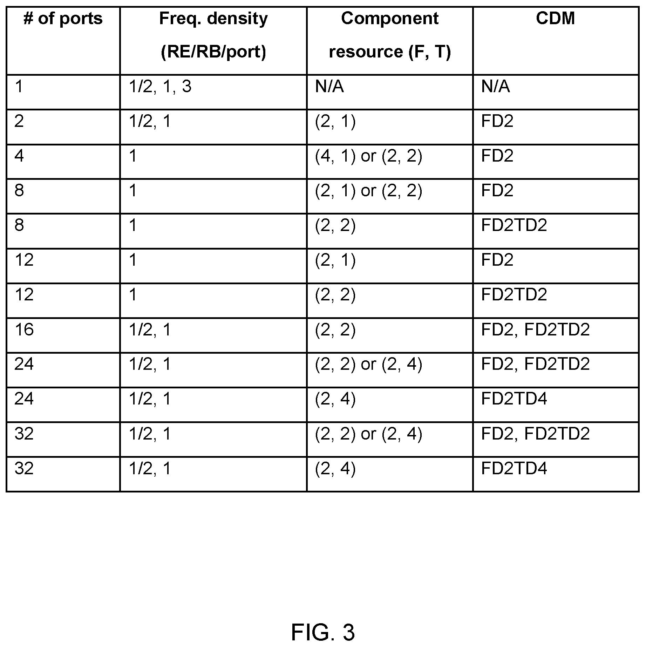

FIG. 3 is a diagram to show an example of CSI-RS locations for each number of ports, based on FIG. 1. The figure shows frequency density, a component resource size (a size in the frequency direction [REs], a size in the time direction [symbols]), and a CDM type for each number of ports.

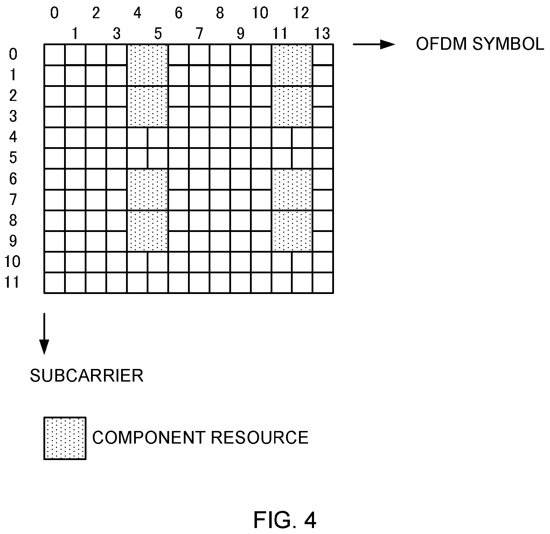

For example, FIG. 4 shows an example of resource element (RE) mapping of the CSI-RS with the number of ports being configured to 32 and the component resource size being configured to two subcarriers × two symbols (row index 17 of FIG. 1). When four of the component resources of two subcarriers × two symbols are multiplexed (frequency division multiplexed (FDMed)) in the frequency domain and two of the component resources are multiplexed (time division multiplexed (TDMed)) in the time domain in the frequency domain and the time domain of one physical resource block (PRB) × one slot, 4 × 2 component resources are mapped. Furthermore, when the CSI-RS in each component resource is multiplied by the FD-OCC having a length of two subcarriers and the TD-OCC having a length of two symbols, four CSI-RSs are multiplexed (code division multiplexed (CDMed)) (CDM4, FD2TD2). Thus, the CSI-RS having 32 ports are transmitted in a resource of one PRB × one slot.

When the maximum number of ports of the CSI-RS, which is 32, is larger than the maximum number of layers, which is 8, the UE can measure more channel states, and measurement accuracy can be enhanced.

In Rel. 19 or later versions, massive MIMO using more than 32 ports is under study.

(Study)

The following some items to be studied are considered.

<Study 1>

For more than 32 CSI-RS ports, a base station antenna layout and a configuration are not sufficiently studied.

<Study 2>

For more than 32 CSI-RS ports, types of supported codebooks/CSI are not sufficiently studied.

Unless such items to be studied are made clear, reduction in communication quality/throughput may be caused.

In view of this, the inventors of the present invention came up with the idea of a method for a configuration/report for a larger number of CSI-RS ports.

Embodiments according to the present disclosure will be described in detail with reference to the drawings as follows. Note that the embodiments (for example, the cases) described below may each be used individually, or at least two of them may be combined to be applied.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like. In the present disclosure, RRC signaling, an RRC IE, an RRC parameter, and a higher layer parameter may be interchangeably interpreted.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, $a_b$, a_b, and a notation in which b is attached to a at the lower right may be interchangeably interpreted. In the present disclosure, $a^c$, a^c, and a notation in which c is attached to a at the upper right may be interchangeably interpreted. In the present disclosure, $a_b^c$, a_b^c, and a notation in which b is attached to a at the lower right and c is attached thereto at the upper right may be interchangeably interpreted. In the present disclosure, ceil(x) and a ceiling function may be interchangeably interpreted. In the present disclosure, floor(x) and a floor function may be interchangeably interpreted. In the present disclosure, sqrt(x) and a square root may be interchangeably interpreted. In the present disclosure, $\tilde{x}$ may be expressed by adding "~" above x, or may be referred to as x tilde. In the present disclosure, $\bar{x}$ may be expressed by adding "-" above x, or may be referred to as x bar.

In the present disclosure, the following abbreviations may be used.

- time division multiplexing: TDM
- time-division-multiplexed: TDMed
- frequency division multiplexing: FDM
- frequency-division multiplexed: FDMed

In the present disclosure, a port, a CSI-RS port, and an antenna port may be interchangeably interpreted. In the present disclosure, a CSI-RS resource, a CSI-RS configuration, and a time and frequency resource for a CSI-RS may be interchangeably interpreted.

In the present disclosure, a beam, an SD beam, a spatial domain index, $(i_{1,1}, i_{1,2})$, (1, m), precoding, a precoder, quasi co-location (QCL) assumption, a QCL relationship, a transmission configuration indicator (TCI) state, a spatial domain filter, a spatial domain reception filter, a spatial domain transmission filter, a reference signal (RS), and a spatial reception parameter may be interchangeably interpreted.

In the present disclosure, an existing CSI-RS resource and a Rel-15 CSI-RS resource may be interchangeably interpreted. An additional CSI-RS resource, a CSI-RS resource absent in Rel. 15, and a CSI-RS resource added in a new release may be interchangeably interpreted.

In the present disclosure, application of an OCC to a CSI-RS and multiplication of a CSI-RS by an OCC may be interchangeably interpreted. In the present disclosure, application of an OCC to a receive signal, multiplication of a receive signal by an inter-PRB OCC, and division of a receive signal by an inter-PRB OCC may be interchangeably interpreted.

In the present disclosure, a CSI-RS using more than 32 ports, an enhanced CSI-RS, and an enhanced CSI-RS port may be interchangeably interpreted. In the present disclosure, a CSI-RS using 32 or less ports, an existing CSI-RS, and an existing CSI-RS port may be interchangeably interpreted.

In the present disclosure, an antenna configuration, a (base station) antenna layout, and at least one of $\{N_1, N_2, N_g, N_{g1}, N_{g2}\}$ may be interchangeably interpreted.

In the present disclosure, a codebook, a codebook structure, a codebook design, a precoding matrix, a relationship of a precoding matrix and a codebook index, a CSI report, and a PMI may be interchangeably interpreted.

(Radio Communication Method)

<Embodiment A1>

<<Inter-PRB OCC>>

An OCC (a frequency domain OCC, an inter-PRB OCC) over a plurality of PRBs may be applied to the CSI-RS.

Each value (element) in the inter-PRB OCC may be applied for each PRB. Each value in the inter-PRB OCC may be applied for each of more than one PRB. Each value in the inter-PRB OCC may be applied for each precoding resource block group (PRG).

The PRG may be consecutive PRBs to which the same DL precoding is applied. The UE may assume that the same precoding is applied to consecutive DL allocations of a plurality of PRBs in the PRG.

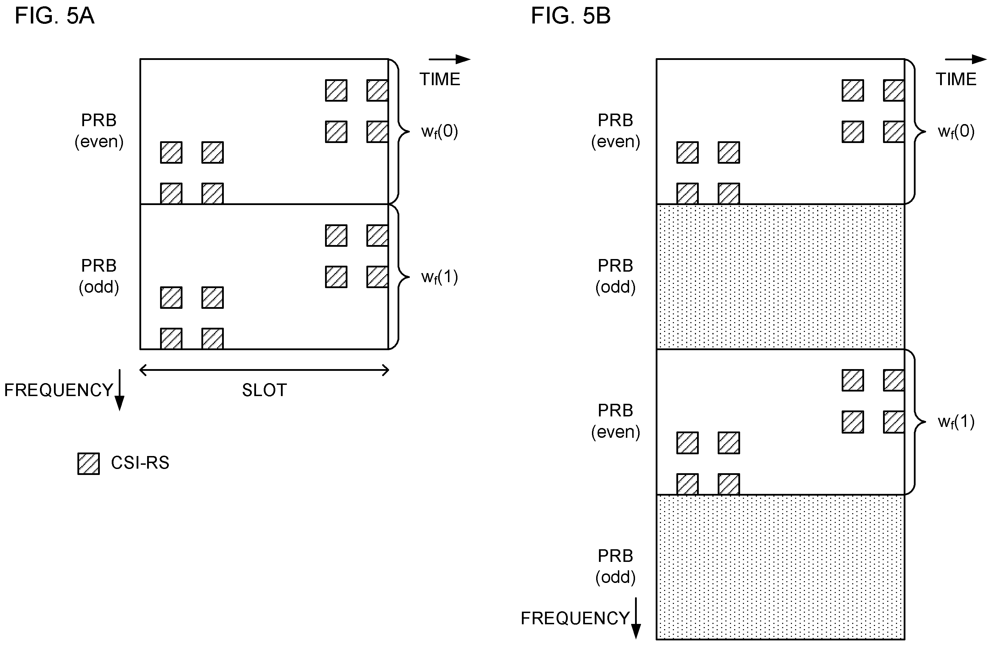

The inter-PRB OCC may be applied to consecutive PRBs. For example, as shown in FIG. 5A, the inter-PRB OCC having a length of 2 may be applied to PRB #0 and PRB #1.

The inter-PRB OCC may be applied to non-consecutive PRBs. The non-consecutive PRBs may be PRBs having even-numbered PRB indices out of a plurality of PRBs configured for CSI-RS resources, may be PRBs having odd-numbered PRB indices out of a plurality of PRBs configured for CSI-RS resources, may be PRBs having intervals of a certain number of PRBs out of a plurality of PRBs configured for CSI-RS resources, may have a Comb configuration for a plurality of PRBs configured for CSI-RS resources, or may be defined in order from the lowest PRB (PRB having the smallest index) or the highest PRB (PRB having the largest index) out of a plurality of PRBs configured for CSI-RS resources.

For example, as shown in FIG. 5B, the inter-PRB OCC $[w_f(0)\, w_f(1)]$ having a length of 2 may be applied to PRB #0 and PRB #2 having even-numbered PRB indices. $[w_f(0)\, w_f(1)]$ may be [+1 +1] or [+1 -1].

When the CSI-RS is mapped only to the PRB of an odd-numbered PRB index or the PRB of an even-numbered PRB index, the inter-PRB OCC need not be applied. When the CSI-RS is mapped only to the PRB of an odd-numbered PRB index or the PRB of an even-numbered PRB index, the inter-PRB OCC may be applied.

An association (for example, a table) between OCC index i and a value of the inter-PRB OCC may be defined for an inter-PRB OCC length. Each value of the inter-PRB OCC may be defined using a cyclic shift $\alpha$ (for example, $\exp(j\alpha \cdot m)$, $\exp(j2\pi\varphi(m)/N)$, or the like).

When the inter-PRB OCC length is 2, the inter-PRB OCC may be a time domain OCC (double symbol OCC) of Rel. 15. The inter-PRB OCC may be defined using cyclic shift $\alpha = \{0, \pi\}$.

When the inter-PRB OCC length is 4, the inter-PRB OCC may be defined by a table, or may be defined using a cyclic shift. The inter-PRB OCC may be defined using cyclic shift $\alpha = \{0, n/2, n, 3\pi/2\}$.

When the inter-PRB OCC length is 3, the inter-PRB OCC may be defined using cyclic shift $\alpha = \{0, \pi/3, 2\pi/3\}$, or may be defined by a table including a value obtained from the cyclic shift. The cyclic shift $\alpha$ may be $\{0, -\pi/3, -2\pi/3\}$.

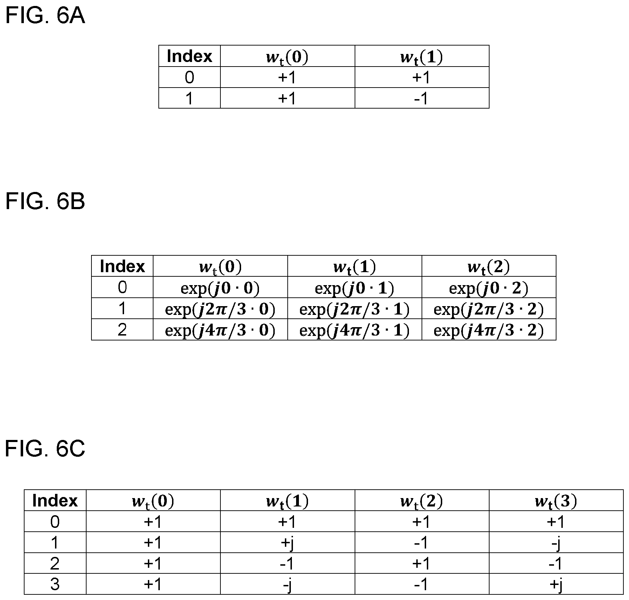

For example, based on the table of FIG. 6A, the CSI-RS to which the inter-PRB OCC [+1 +1] having OCC index = 0 is applied is the same as the CSI-RS to which the inter-PRB OCC is not applied, and is thus received and measured through the same operation as Rel. 15, and is received by a Rel-15 UE and a new-release UE. The CSI-RS to which the inter-PRB OCC [+1 -1] having OCC index = 1 is applied is received and measured only by the new-release UE.

For example, based on the table of FIG. 6B, the CSI-RS to which the inter-PRB OCC $[\exp(j0 \cdot 0)\, \exp(j0 \cdot 1)\, \exp(j0 \cdot 2)]$ (the same as [+1 +1 +1]) having OCC index = 0 is applied is the same as the CSI-RS to which the inter-PRB OCC is not applied, and is thus received and measured through the same operation as Rel. 15, and is received by a Rel-15 UE and a new-release UE. The CSI-RS to which the inter-PRB OCC having OCC index = 1 and 2 is applied is received and measured only by the new-release UE.

For example, based on the table of FIG. 6C, the CSI-RS to which the inter-PRB OCC [+1 +1 +1 +1] having OCC index = 0 is applied is the same as the CSI-RS to which the inter-PRB OCC is not applied, and is thus received and measured through the same operation as Rel. 15, and is received by a Rel-15 UE and a new-release UE. The CSI-RS to which the inter-PRB OCC having OCC index = 1, 2, and 3 is applied is received and measured only by the new-release UE.

<<UE Operation>>

The UE (for example, the new-release UE) supporting the inter-PRB OCC may measure the CSI-RS obtained by multiplying each PRB by the value in the inter-PRB OCC and adding (in-phase combining) a plurality of obtained multiplication results.

The UE (for example, the previous-release UE) not supporting the inter-PRB OCC or not configured with the inter-PRB OCC may measure the CSI-RS obtained by adding a receive signal of each PRB of a plurality of PRBs.

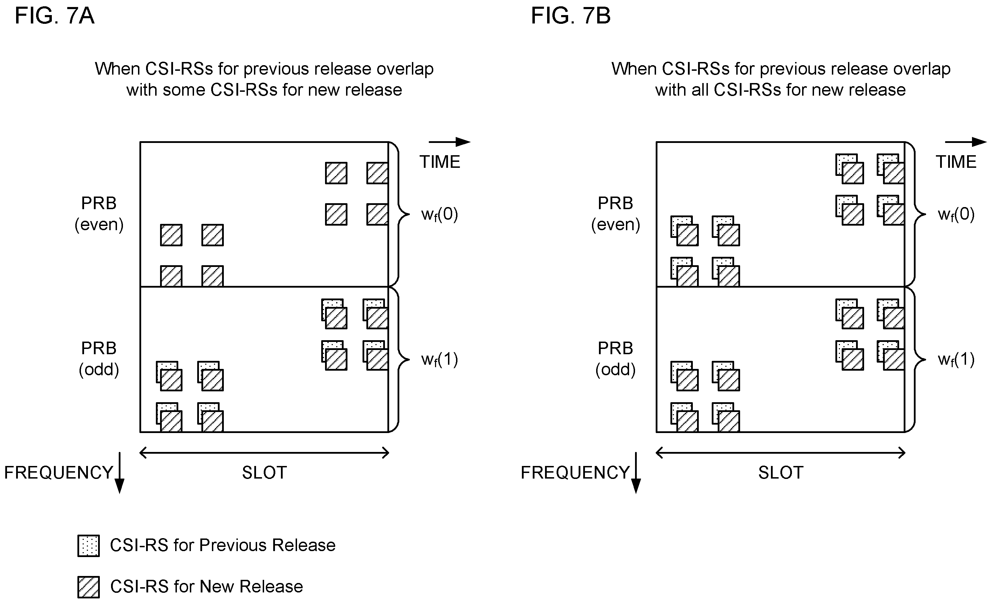

The UE need not assume that only some overlap between time and frequency resources of the CSI-RS to which the inter-PRB OCC is applied and time and frequency resources of the CSI-RS of another UE. For example, as shown in FIG. 7A, the UE need not assume a case in which a new-release CSI-RS is mapped to PRBs #0 and 1 and the inter-PRB OCC is applied and a previous-release CSI-RS is mapped to PRB #1. In such a case, the new-release CSI-RS and the previous-release CSI-RS are not orthogonal to each other (cannot be separated by the UE).

All the time and frequency resources of the CSI-RS to which the inter-PRB OCC is applied and all the time and frequency resources of the CSI-RS of another UE may overlap. For example, as shown in FIG. 7B, the new-release CSI-RS may be mapped to PRBs #0 and 1 and the inter-PRB OCC may be applied, and the previous-release CSI-RS may be mapped to PRBs #0 and 1. In such a case, the new-release CSI-RS and the previous-release CSI-RS are orthogonal to each other (can be separated by the UE).

A transmission bandwidth (number of PRBs) of the CSI-RS may be a multiple of the inter-PRB OCC length. The UE may assume that the transmission bandwidth (number of PRBs) of the CSI-RS is a multiple of the inter-PRB OCC length. The UE may measure the CSI-RS by applying the inter-PRB OCC over a bandwidth of a multiple of the inter-PRB OCC length.

By adding a receive signal of each PRB over a multiple of the inter-PRB OCC length, the previous-release UE can measure only the CSI-RS to which the inter-PRB OCC is not applied (corresponding to the inter-PRB OCC having a value of all + 1), and can remove the CSI-RS corresponding to another inter-PRB OCC.

When the transmission bandwidth of the CSI-RS is not a multiple of the inter-PRB OCC length, the UE may measure only a bandwidth of a multiple of the inter-PRB OCC length of the CSI-RS, and need not measure the rest of the band. For example, when the inter-PRB OCC length is 2, the UE may apply the inter-PRB OCC to a receive signal of CSI-RS resources for measurement for every two PRBs (may apply a value corresponding to the inter-PRB OCC to a receive signal of each of two PRBs). The UE need not measure the rest of the band smaller than two PRBs.

Even in the case of FIG. 7B described above, the previous-release UE may not be able to appropriately measure the CSI-RS unless the previous-release UE knows the inter-PRB OCC length, and the new-release CSI-RS may become interference.

When there is no channel variation for a plurality of CSI-RSs transmitted using the same precoding, measurement accuracy of the CSI-RS enhances by performing in-phase combining on those CSI-RSs.

The previous-release UE may perform in-phase combining on receive signals (complex numbers) of the CSI-RS for each PRB in the PRG. Owing to the operation, even if the previous-release UE does not know that the inter-PRB OCC is applied, the previous-release UE can measure the CSI-RS through the same reception operation as the case in which the inter-PRB OCC of all + 1 is applied. Therefore, the previous-release CSI-RS and the new-release CSI-RS are orthogonalized.

The inter-PRB OCC length may be the number of PRBs in the PRG. The CSI-RS may be mapped to all the PRBs in the PRG, and the inter-PRB OCC may be applied.

The inter-PRB OCC length may be the number of PRBs to which the CSI-RS of the PRG is mapped. For example, it is assumed that one PRG corresponds to four PRBs, the CSI-RS is mapped to two PRBs in the PRG, and the inter-PRB OCC length is 2. In this case, by performing in-phase combining on receive signals of the CSI-RSs in the PRG and measuring the CSI-RSs, even if the previous-release UE does not know that the inter-PRB OCC is applied, the previous-release UE performs reception operation corresponding to the case of applying the inter-RB OCC [+1 +1]. Consequently, the previous-release UE can measure the previous-release CSI-RS with reduced interference of the new-release CSI-RS. In this case, because the new-release UE knows that the inter-PRB OCC is applied, the new-release UE applies the inter-PRB OCC [+1 -1], and performs in-phase combining on receive signals of the CSI-RSs in the PRG and measures the CSI-RSs. Consequently, the new-release UE can measure the new-release CSI-RS with reduced interference of the previous-release CSI-RS.

When the number of PRBs in the PRG is not a multiple of the inter-PRB OCC length, the UE may measure only a bandwidth of a multiple of the inter-PRB OCC length of the PRG, and need not measure the rest of the band.

{Measurement of Entire Resource Range}

In the same time and frequency resources as the CSI-RS to which the inter-PRB OCC is applied or the CSI-RS to which the inter-PRB OCC is not applied, the CSI-RS to which the inter-PRB OCC is applied may be transmitted to another UE. The UE may receive the CSI-RS in a resource range (for example, a band) to which the inter-PRB OCC may be applied, and thereby measure the CSI-RS corresponding to a specific inter-PRB OCC.

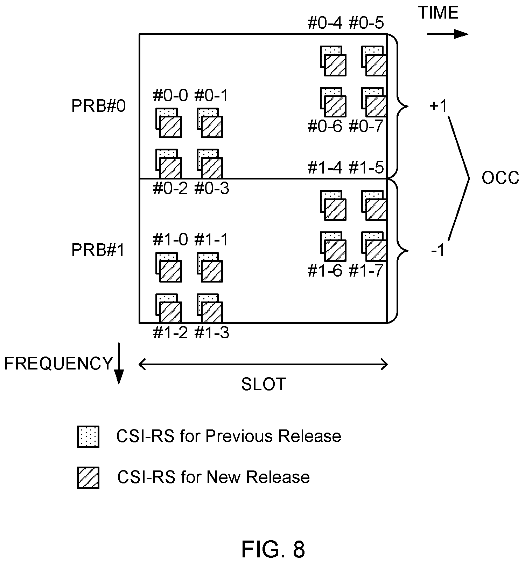

In the example of FIG. 8, CSI-RS #0-0 in PRB #0 and CSI-RS #1-0 in PRB #1 are mapped to the same location in the same slot in each PRB, and have the same CSI-RS sequence (transmit signal sequence).

The UE configured with CSI-RS resources to which the inter-PRB OCC (for example, [+1 +1]) having a value of all + 1 is applied or the UE configured with CSI-RS resources to which the inter-PRB OCC is not applied may measure the CSI-RS in each PRB without using the inter-PRB OCC, unless the CSI-RS of another UE multiplexed on time and frequency resources of the CSI-RS is transmitted.

If the inter-PRB OCC may be applied, the UE cannot accurately measure the CSI-RS in each PRB unless the UE knows the inter-PRB OCC.

In the resource range to which the inter-PRB OCC may be applied, the UE may apply a specific inter-PRB OCC having a value of all + 1 to entire receive signals in the resource range, and thereby measure the CSI-RS corresponding to the specific inter-PRB OCC.

The resource range to which the inter-PRB OCC may be applied may be defined in a specification, or may be configured for the UE by higher layer signaling. The resource range may be indicated in units of two PRBs (a pair of an even-numbered PRB index and an odd-numbered PRB index), in units of three PRBs, or in units of four PRBs. The UE may determine the resource range to which the inter-PRB OCC is applied, based on the band (PRBs) of the configured CSI-RS resources.

The UE may be notified of whether or not the inter-PRB OCC is applied by at least one of higher layer signaling, a MAC CE, and DCI. The UE may switch the reception operation according to the notification. For example, the UE notified that the inter-PRB OCC is not applied (or that the CSI-RS for another UE is not multiplexed on the time and frequency resources of the CSI-RS) may measure the CSI-RS in each of at least one PRB in the resource range, or may perform in-phase combining on a plurality of PRBs in the CSI-RS resources. For example, the UE notified that the inter-PRB OCC is applied (or that the CSI-RS for another UE is multiplexed on the time and frequency resources of the CSI-RS) may identify the inter-PRB OCC based on receive signals of all the PRBs, and measure the CSI-RS to which the identified inter-PRB OCC is applied.

According to the present embodiment, by applying the inter-PRB OCC to the CSI-RS over a plurality of PRBs, the number of CSI-RSs (ports) to be orthogonalized (multiplexed) can be increased.

<Embodiment A2>

<<Inter-Time Field OCC>>

An OCC (a time domain OCC, an inter-time field OCC) over a plurality of time fields in the time domain may be applied to the CSI-RS. Each value (element) in the inter-time field OCC may be applied for each time field (period). The time field may be any one of a subframe, a slot, a sub-slot, a mini-slot, and a symbol. The time field may be longer than a symbol.

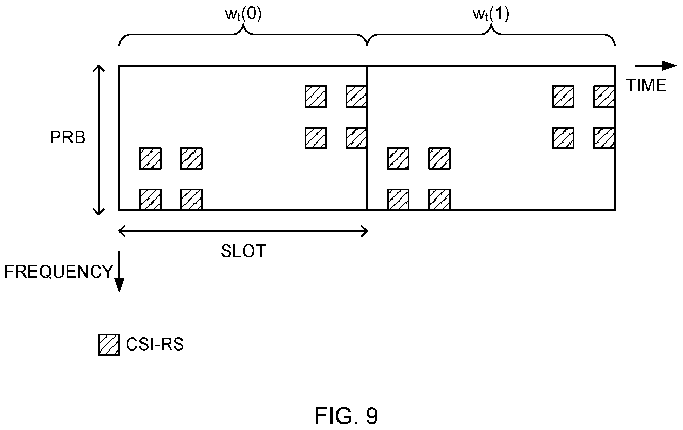

The inter-time field OCC may be applied to consecutive time fields. For example, as shown in FIG. 9, the time field may be a slot, and an inter-slot OCC $[w_t(0)\, w_t(1)]$ having a length of 2 may be applied to slot #0 and slot #1. $[w_t(0)\, w_t(1)]$ may be [+1 +1] or [+1 -1].

Regarding the inter-time field OCC, similarly to the inter-PRB OCC of Embodiment A1, an association (for example, a table) between OCC index i and a value of the inter-time field OCC may be defined for each inter-time field OCC length. Each value of the inter-time field OCC may be defined using a cyclic shift $\alpha$ (for example, $\exp(j\alpha \cdot m)$, $\exp(j2\pi\varphi(m)/N)$, or the like). When the OCC length is 2, each value of the inter-time field OCC may be defined using cyclic shift $\alpha = \{0, \pi\}$. When the OCC length is 3, the OCC may be defined using cyclic shift $\alpha = \{0, \pi/3, 2\pi/3\}$, or may be defined by a table including a value obtained from the cyclic shift. The cyclic shift $\alpha$ may be $\{0, -\pi/3, -2\pi/3\}$. When the OCC length is 4, the OCC may be defined by a table, or may be defined using cyclic shift $\alpha = \{0, \pi/2, \pi, 3\pi/2\}$. Similarly to the case in which the OCC length is 3, the order of the values of the cyclic shift $\alpha$ may be interchanged.

The inter-time field OCC may be applied to non-consecutive time fields. The non-consecutive time fields may be a plurality of time fields having even-numbered indices out of a period configured for CSI-RS resources, may be a plurality of time fields having odd-numbered indices out of a period configured for CSI-RS resources, may be a plurality of time fields having intervals of a certain number of time fields out of a period configured for CSI-RS resources, or may be defined in order from the first time field (having the smallest index) or the last time field (having the largest index) out of a period configured for CSI-RS resources.

When the CSI-RS is mapped only to the time field of an odd-numbered index or the time field of an even-numbered index, the inter-time field OCC need not be applied. When the CSI-RS is mapped only to the time field of an odd-numbered index or the time field of an even-numbered index, the inter-time field OCC may be applied. In this case, orthogonality other than the inter-time field OCC can be maintained, and reduction of measurement quality can be prevented.

The inter-time field OCC length may be the number of time fields (for example, slots) in an application period (for example, a radio frame) including a given number of time fields.

A case is considered in which, when sequence hopping of the CSI-RS is performed in the application period, orthogonality among a plurality of inter-time field OCCs multiplexed in the application period collapses. In view of this, sequence hopping may be stopped in the resource range to which the inter-time field OCC may be applied.

The CSI-RS sequence may be a pseudo-random sequence (a pseudo-noise (PN) sequence, for example, a Gold sequence, a Gold sequence having a length of 31, an M-sequence). In Rel. 15, an initial value $c_{init}$ used for determination of the CSI-RS sequence is based on a slot index and a symbol index.

When the inter-time field OCC (inter-slot OCC) is applied among slots over the application period, sequence hopping in the application period may be stopped ($c_{init}$ of the first or last symbol may be applied to all the symbols in the application period).

$c_{init}$ is configured to be specific to the UE, and thus the network (for example, the base station) may configure a scramble ID (for example, scramblingID) for $c_{init}$ for the UE by higher layer signaling so that sequence hopping is not performed in the application period.

<<UE Operation>>

The UE (for example, the new-release UE) supporting the inter-time field OCC may measure the CSI-RS obtained by multiplying each time field by the value in the inter-time field OCC and adding (in-phase combining) obtained multiplication results.

The UE (for example, the previous-release UE) not supporting the inter-time field OCC or not configured with the inter-time field OCC may measure the CSI-RS obtained by adding a receive signal of each time field of a plurality of time fields.

The UE need not assume that time and frequency resources of the CSI-RS to which the inter-time field OCC is applied overlap with some of the time and frequency resources of the CSI-RS of another UE.

All the time and frequency resources of the CSI-RS to which the inter-time field OCC is applied and all the time and frequency resources of the CSI-RS of another UE may overlap.

Duration (number of time fields) of the CSI-RS may be a multiple of the inter-time field OCC length.

By adding a receive signal of each time field over a multiple of the inter-time field OCC length, the previous-release UE can measure only the CSI-RS to which the inter-time field OCC is not applied (corresponding to the inter-time field OCC having a value of all + 1), and can remove the CSI-RS corresponding to another inter-time field OCC.

When a transmission bandwidth of the CSI-RS is not a multiple of the inter-time field OCC length, the UE may measure only a period of a multiple of the inter-time field OCC length of the CSI-RS, and need not measure the rest of the period.

{Measurement of Entire Resource Range}

In the same time and frequency resources as the CSI-RS to which the inter-time field OCC is applied or the CSI-RS to which the inter-time field OCC is not applied, the CSI-RS to which the inter-time field OCC is applied may be transmitted to another UE. The UE may receive the CSI-RS in a resource range (for example, a period) to which the inter-time field OCC may be applied, and thereby measure the CSI-RS corresponding to a specific inter-time field OCC.

The UE configured with CSI-RS resources to which the inter-time field OCC (for example, [+1 +1]) having a value of all + 1 is applied or the UE configured with CSI-RS resources to which the inter-time field OCC is not applied may measure the CSI-RS in each time field without using the inter-time field OCC, unless the CSI-RS of another UE multiplexed on time and frequency resources of the CSI-RS is transmitted.

If the inter-time field OCC may be applied, the UE cannot accurately measure the CSI-RS in each time field unless the UE knows the inter-time field OCC.

In the resource range to which the inter-time field OCC may be applied, the UE may apply a specific inter-time field OCC having a value of all + 1 to entire receive signals in the resource range, and thereby measure the CSI-RS corresponding to the specific inter-time field OCC.

The resource range to which the inter-time field OCC may be applied may be defined in a specification, or may be configured for the UE by higher layer signaling. The resource range may be indicated in units of two time fields (a pair of an even-numbered time field index and an odd-numbered time field index), in units of three time fields, or in units of four time fields. The UE may determine the resource range to which the inter-time field OCC is applied, based on the duration (number of symbols) of the configured CSI-RS resources.

The UE may be notified of whether or not the inter-time field OCC is applied by at least one of higher layer signaling, a MAC CE, and DCI. The UE may switch the reception operation according to the notification. For example, the UE notified that the inter-time field OCC is not applied (or that the CSI-RS for another UE is not multiplexed on the time and frequency resources of the CSI-RS) may measure the CSI-RS in each of at least one time field in the resource range, or may perform in-phase combining on a plurality of time fields in the CSI-RS resources. For example, the UE notified that the inter-time field OCC is applied (or that the CSI-RS for another UE is multiplexed on the time and frequency resources of the CSI-RS) may identify the inter-time field OCC based on receive signals of all the time fields, and measure the CSI-RS to which the identified inter-time field OCC is applied.

According to the present embodiment, by applying the inter-time field OCC to the CSI-RS over a plurality of time fields, the number of CSI-RSs (ports) to be orthogonalized (multiplexed) can be increased.

<Embodiment A3>

Rel. 15 supports up to 32 CSI-RS ports by using 32 resources (REs, subcarriers $\times$ symbols) in one PRB. The number of CSI-RS ports may be increased by increasing the time and frequency resources per PRB.

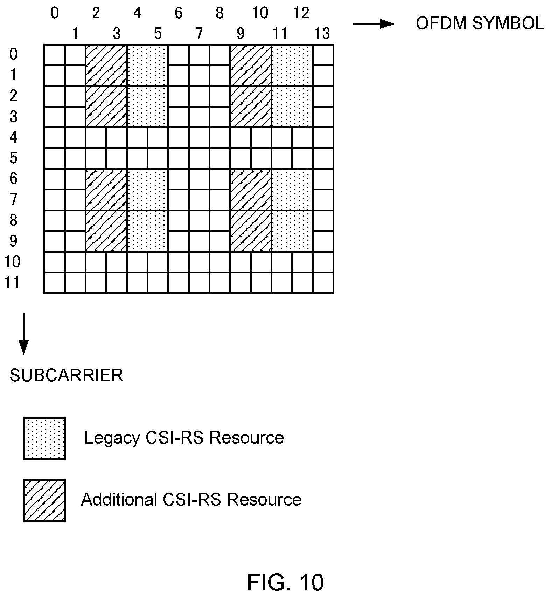

The UE may receive the CSI-RS by using at least one resource (time and frequency resource) not used for a Rel-15 CSI-RS (existing CSI-RS resources). As shown in FIG. 10, for the existing CSI-RS resources, new CSI-RS resources (additional CSI-RS resources) may be defined in symbols #2, #3, #9, and #10. Consequently, CSI-RS resources of 64 REs can be used in one PRB, and can be associated with 64 ports.

For the additional CSI-RS resources, at least one of the time domain OCC and the frequency domain OCC may be applied.

In order to maintain compatibility with Rel. 15, after at least one of the time domain OCC and the frequency domain OCC of Rel. 15 is applied to the CSI-RS, at least one (additional OCC) of an additional time domain OCC and frequency domain OCC may be applied.

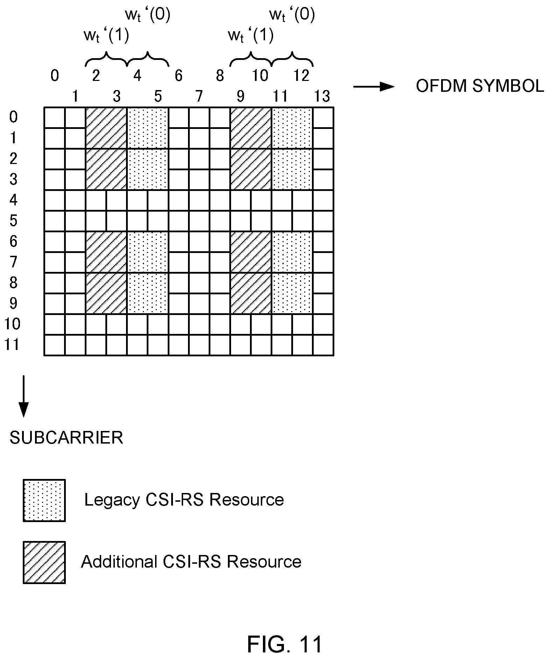

For example, as shown in FIG. 11, after at least one of the time domain OCC and the frequency domain OCC of Rel. 15 is applied to the existing CSI-RS resources and the additional CSI-RS resources in FIG. 10, an additional time domain OCC $w_t'(m)$ is applied. $[w_t'(0)\ w_t'(1)]$ may be [+1 +1] or [+1 -1]. Each value of the additional time domain OCC may be applied every two symbols.

In this example, $w_t'(0)$ is applied to symbols #4 and #5, $w_t'(1)$ is applied to symbols #2 and #3, $w_t'(0)$ is applied to symbols #11 and #12, and $w_t'(1)$ is applied to symbols #9 and #10.

The first value (for example, $w_t'(0)$) of the additional OCC is always +1, and the value of the CSI-RS does not change even when the additional OCC is applied, and thus the first value (for example, $w_t'(0)$) of the additional OCC may be applied to the existing CSI-RS resources, and a value (for example, $w_t'(1)$) subsequent to the first value of the additional OCC may be applied to the additional CSI-RS resources. Consequently, the previous-release UE can measure the CSI-RS, and can increase the number of ports of the new-release CSI-RS.

$[w_t'(0)\ w_t'(1)]$ may be applied in order from a large symbol index to a small symbol index, or may be applied in order from a small symbol index to a large symbol index. For example, $w_t'(0)$ may be applied to symbols #2 and #3, and $w_t'(1)$ may be applied to symbols #4 and #5.

According to the present embodiment, the time and frequency resources of the CSI-RS can be increased, and the number of CSI-RS ports can be increased.

<Embodiment A4>

In Rel. 15, the UE does not assume that the REs of the CSI-RS are the same as the REs of the DMRS. Consequently, flexibility of the configuration of at least one of the CSI-RS and the DMRS decreases.

The CSI-RS may be punctured.

In the present disclosure, puncturing the CSI-RS, the CSI-RS not being mapped to some of time and frequency resources of the CSI-RS, and not transmitting a part of the CSI-RS may be interchangeably interpreted.

In resources to which the CSI-RS is not mapped due to puncture for a certain UE, a signal (for example, a CSI-RS) of another UE may be transmitted.

Puncture may be performed in units of time and frequency resources of a certain size (for example, component resources, resources to which the frequency domain OCC is applied, resources to which the time domain OCC is applied).

Regarding the CSI-RS, the CSI-RS may be transmitted, based on at least one of the following CSI-RS resource control methods 1 to 3.

<<CSI-RS Resource Control Method 1>>

An NZP-CSI-RS may be punctured in a configured zero power (ZP)-CSI-RS. The NZP-CSI-RS may be mapped to resources out of resources configured for the NZP-CSI-RS, except resources configured for the ZP-CSI-RS.

When at least some of the time and frequency resources of the ZP-CSI-RS and the time and frequency resources of the NZP-CSI-RS overlap, the UE need not receive the NZP-CSI-RS in overlapping REs, need not receive the NZP-CSI-RS in overlapping PRBs, need not receive the ZP-CSI-RS in overlapping REs, need not receive the ZP-CSI-RS in overlapping PRBs, need not assume that the DMRS is configured (or mapped) in overlapping resources, may, when the DMRS is configured (or mapped) in overlapping resources, measure (receive) at least one of the ZP-CSI-RS and the NZP-CSI-RS in the resources, and may, when the DMRS is configured (or mapped) in overlapping resources, measure (receive) the DMRS in the resources.

<<CSI-RS Resource Control Method 2>>

The UE may be notified of a bitmap indicating locations of puncture of the time and frequency resources of the CSI-RS (for example, at least one location in time and frequency). The bitmap may be included in CSI-RS resources. The UE may puncture the CSI-RS at the locations indicated by the bitmap. The UE may puncture the NZP-CSI-RS or may puncture the ZP-CSI-RS at the locations indicated by the bitmap.

Each bit in the bitmap may correspond to an RE (subcarrier), or may correspond to a PRB. The UE need not receive the NZP-CSI-RS in the REs indicated by the bitmap, or need not receive the NZP-CSI-RS in the PRBs indicated by the bitmap. The UE need not receive the ZP-CSI-RS in the REs indicated by the bitmap, or need not receive the ZP-CSI-RS in the PRBs indicated by the bitmap. The DMRS need not be configured (or mapped) in the resources indicated by the bitmap. The UE need not assume that the DMRS is configured (or mapped) in the resources indicated by the bitmap. The DMRS may be configured (or mapped) in the resources indicated by the bitmap, and the UE may receive or measure the DMRS in the resources indicated by the bitmap.

<<CSI-RS Resource Control Method 3>>

When the CSI-RS is punctured based on CSI-RS resource control method 1 or 2, the PDSCH need not be transmitted (need not be mapped at the locations of puncture) in the resources to which the CSI-RS is not mapped due to puncture.

In the resources to which the CSI-RS is not mapped due to puncture, the PDSCH may be rate-matched or punctured. The UE may assume that the PDSCH is rate-matched or punctured in the resources.

In the resources to which the CSI-RS is not mapped due to puncture, the PDSCH need not be rate-matched or punctured. The UE may assume that the PDSCH is not rate-matched or punctured in the resources. In the resources to which the CSI-RS is not mapped due to puncture, the PDSCH may be transmitted (the PDSCH may be mapped in the resources).

The UE may be notified of the locations at which the PDSCH is rate-matched or punctured. The locations at which the PDSCH is rate-matched or punctured may be notified as antenna port information, may be notified as a CDM group of the CSI-RS, or may be notified as a subcarrier number (for example, $k_0$) and a symbol number (for example, $l_0$).

According to the present embodiment, when the CSI-RS is appropriately punctured and the resources to which the CSI-RS is not mapped due to puncture are appropriately processed, flexibility of the configuration of the CSI-RS can be enhanced.

<Embodiment A5>

A plurality of groups of CSI-RS resources (CSI-RS resource groups) may be associated with different groups of CSI-RS ports (CSI-RS port groups).

The plurality of CSI-RS resource groups may be grouped by at least one of the following CSI-RS resource grouping methods 1 and 2.

<<CSI-RS Resource Grouping Method 1>>

Resources of at least one of time and frequency for the CSI-RS may be different among the plurality of CSI-RS resource groups.

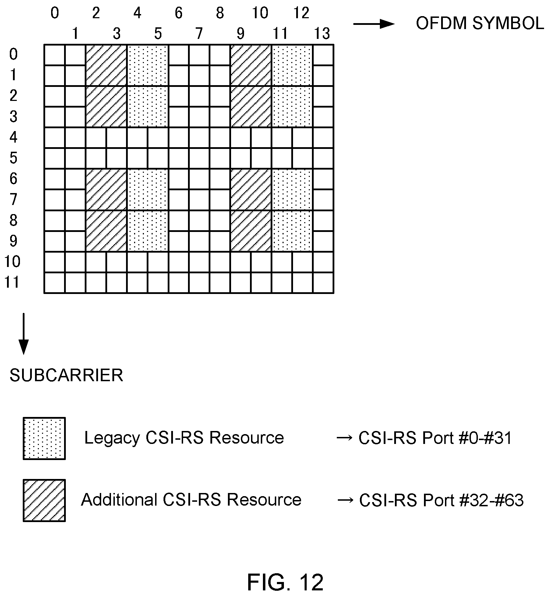

The plurality of CSI-RS resource groups may be multiplexed on each other by at least one of FDM and TDM. For example, as shown in FIG. 12, CSI-RS resource groups #0 and #1 may be TDMed. CSI-RS resource group #0 may be associated with a group of CSI-RS ports #0 to #31, and CSI-RS resource group #1 may be associated with a group of CSI-RS ports #32 to #63. CSI-RS resource group #0 may correspond to the existing CSI-RS resources, and CSI-RS resource group #1 may correspond to the additional CSI-RS resources.

In the table as in FIG. 1, entries (rows) including a group of additional CSI-RS resources may be added. In the table, entries indicating the number of ports being larger than 32 may be added.

In the table indicating the existing CSI-RS resources and the additional CSI-RS resources, the additional CSI-RS resources may be added to both of entries indicating the number of ports equal to or less than 32 (low-order number of ports) and entries indicating the number of ports larger than 32 (high-order number of ports), or the additional CSI-RS resources may be added only to the entries indicating the high-order number of ports.

The UE may be configured with the additional CSI-RS resources by higher layer signaling. The UE may be configured with the existing CSI-RS resources by higher layer signaling, and determine the additional CSI-RS resources by using an offset of at least one of time and frequency. For example, in the example of FIG. 12 described above, the UE may determine the additional CSI-RS resources by adding an offset of -2 symbols to the existing CSI-RS resources in the time direction.

The plurality of CSI-RS resource groups are orthogonalized by the time and frequency resources, and therefore the UE can perform reception without using new OCCs, and can enhance compatibility with the previous-release UE.

<<CSI-RS Resource Grouping Method 2>>

At least one of the CSI-RS sequence and the scramble ID for the initial value $c_{init}$ used for determination of the CSI-RS sequence may be different among the plurality of CSI-RS resource groups.

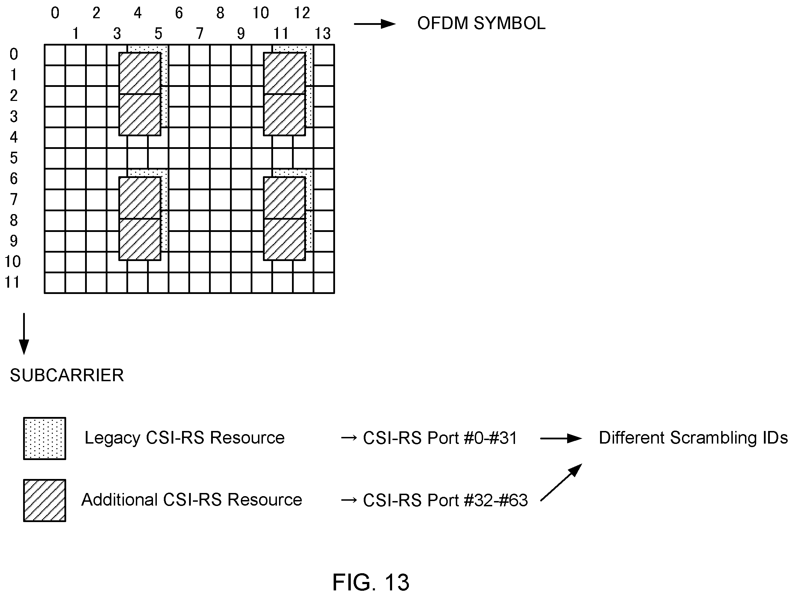

For example, as shown in FIG. 13, CSI-RS resource groups #0 and #1 may be associated with different scramble IDs. CSI-RS resource group #0 may be associated with a group of CSI-RS ports #0 to #31, and CSI-RS resource group #1 may be associated with a group of CSI-RS ports #32 to #63. CSI-RS resource group #0 may correspond to the existing CSI-RS resources, and CSI-RS resource group #1 may correspond to the additional CSI-RS resources.

Association between at least one of the CSI-RS sequence and the scramble ID and at least one of the CSI-RS resources and the CSI-RS ports may be defined in a specification. For example, the CSI-RS of ports #0 to #X-1 may be determined based on a table (for example, FIG. 1) indicating the existing CSI-RS resources and $c_{init}$ defined in a previous release, and the CSI-RS of ports #X to #2X-1 may be determined based on the table and a deformation $c_{init}$ defined in a new release.

$c_{init}$ and the deformation $c_{init}$ may be based on different higher layer parameters (for example, different scramble IDs, scramblingID and scramblingID_2).

The UE may be configured with a scramble ID for $c_{init}$ (for example, different scramblingID), and calculate the deformation $c_{init}$ based on the scramble ID by using different operation from $c_{init}$. For example, the UE may calculate the deformation $c_{init}$ by using a value, which is obtained by adding a specific value to the configured scramble ID, for a $c_{init}$ calculation expression as the scramble ID for the deformation $c_{init}$. The specific value may be a cell ID or the like. The UE may calculate the deformation $c_{init}$ by adding the specific value to the configured scramble ID and performing modulo operation.

In the table indicating the existing CSI-RS resources and the additional CSI-RS resources, the additional CSI-RS resources may be added to both of entries indicating the number of ports equal to or less than 32 (low-order number of ports) and entries indicating the number of ports larger than 32 (high-order number of ports), or the additional CSI-RS resources may be added only to the entries indicating the high-order number of ports.

The CSI-RS sequence (pseudo-random sequence) has low correlation with other sequences, and thus all or some of the time and frequency resources (for example, the existing CSI-RS resources) of the CSI-RS associated with low port numbers (for example, numbers smaller than the half of the number of ports) and the time and frequency resources (for example, the additional CSI-RS resources) of the CSI-RS associated with high port numbers (for example, numbers equal to or larger than the half of the number of ports) may overlap.

The UE may be configured with the additional CSI-RS resources by higher layer signaling. The UE may be configured with the existing CSI-RS resources by higher layer signaling, and determine the additional CSI-RS resources by using an offset of at least one of time and frequency. For example, in the example of FIG. 13 described above, the UE may determine time and frequency resources of an additional CSI-RS by adding an offset of zero symbols to the existing CSI-RS resources in the time direction and adding an offset of zero PRBs thereto in the frequency direction. The UE may assume that the additional CSI-RS resources fully overlap with the existing CSI-RS resources in time and frequency.

The plurality of CSI-RS resource groups are distinguished by the CSI-RS sequence, and therefore the UE can perform reception without using new OCCs, and can enhance compatibility with the previous-release UE. Even when the CSI-RS sequence (pseudo-random sequence) is not completely orthogonal, interference between ports can be reduced by applying different precoding (beams) to the ports.

<Study B>

It may be difficult to share the same CSI-RS resources between an existing CSI-RS (of up to 32 ports of Rel. 15 to Rel. 18, for example) and a new CSI-RS (of more than 32 ports of Rel. 19, for example). The existing UE cannot de-spread a new TD-OCC/FD-OCC, and thus the base station needs to configure a dedicated set of CSI-RS resources for the existing (for example, Rel-15 to Rel-18) UE and the new (for example, Rel-19) UE. This causes CSI-RS overhead. When reduction of the CSI-RS overhead is intended, enhancement in performance of more than 32 CSI-RS ports may be limited.

<Embodiment B1>

A plurality of different CSI-RS resources may use different CSI-RS ports, without introduction of more than 32 ports to the same CSI-RS resources (time and frequency resources). A plurality of CSI-RS resources may be aggregated for the new UE.

For example, two CSI-RS resources may be configured, a first CSI-RS resource may be associated with CSI-RS ports #0 to #31, and a second CSI-RS resource may be associated with CSI-RS ports #32 to #63. In this case, it is easier to share the CSI-RS resources between the existing UE and the new UE. For example, only the first CSI-RS resource may be configured for the existing UE, and both of the first CSI-RS resource and the second CSI-RS resource may be configured for the new UE.

According to the present embodiment, through a change in definition of CSI-RS port mapping, more than 32 CSI-RS ports can be defined, and influence on specifications can be reduced.

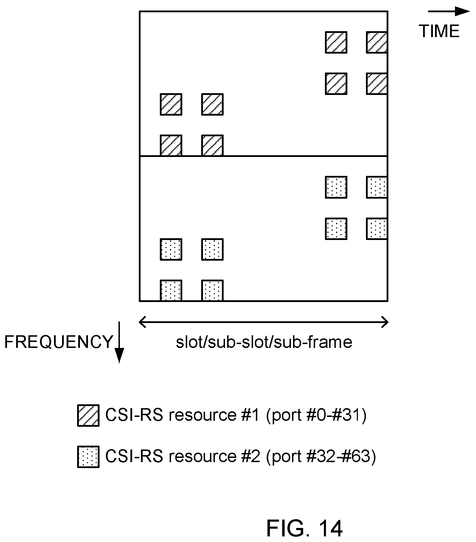

As in the example of FIG. 14, FDMed CSI-RS resource #1 and CSI-RS resource #2 may be configured, CSI-RS resource #1 may be associated with CSI-RS ports #0 to #31, and CSI-RS resource #2 may be associated with CSI-RS ports #32 to #63.

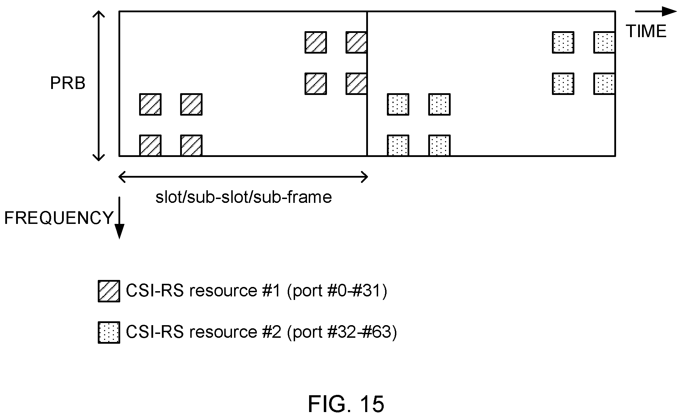

As in the example of FIG. 15, TDMed CSI-RS resource #1 and CSI-RS resource #2 may be configured, CSI-RS resource #1 may be associated with CSI-RS ports #0 to #31, and CSI-RS resource #2 may be associated with CSI-RS ports #32 to #63.

The size of a time resource of each CSI-RS resource may be a slot/sub-slot/subframe. The size of a frequency resource of each CSI-RS resource may be PRB/$2^N$ consecutive PRBs (N = -2, -1, 1, 2, ...).

A method of mapping more than 32 CSI-RS ports across a plurality of CSI-RS resources may follow at least one of the following some Embodiments B1-X.

<<Embodiment B1-1>>

When the UE is configured with a higher layer parameter for enabling more than 32 CSI-RS ports and the UE is configured with x CSI-RS ports and y CSI-RS resources, the UE may map the CSI-RS ports according to at least one of the following some rules. x may be equal to or less than 32.

- A first resource out of y CSI-RS resources (or a CSI-RS resource set) is mapped to CSI-RS ports #0 to #x-1.
- A second resource out of y CSI-RS resources (or a CSI-RS resource set) is mapped to CSI-RS ports #x to #2x-1.
- A third resource out of y CSI-RS resources (or a CSI-RS resource set) is mapped to CSI-RS ports #2x to #3x-1.
- An i-th resource out of y CSI-RS resources (or a CSI-RS resource set) is mapped to CSI-RS ports #(i-1)x to #ix-1. The i-th resource may be a CSI-RS resource corresponding to an i-th time resource (for example, slot), or may be a CSI-RS resource corresponding to an i-th frequency resource (for example, PRB).

<<Embodiment B1-2>>

A plurality of aggregated CSI-RS resources may be associated with more than 32 CSI-RS ports. Each CSI-RS resource may be associated with 32 or less CSI-RS ports. The plurality of CSI-RS resources for aggregation may follow at least one restriction of the following some options.

- Option 1: The number of CSI-RS resources for aggregation is M. For example, M may be 2.
- Option 2: The number of ports associated with each CSI-RS resource for aggregation is fixed to N, or is larger than O (equal to or larger than O). For example, N may be 32. For example, O may be 16.
- Option 3: The plurality of CSI-RS resources for aggregation are configured in the same CSI-RS resource set or CSI-RS resource group.
- Option 4: The plurality of CSI-RS resources for aggregation have the same configuration of at least one of density, the number of ports, time operation configuration, frequency resource allocation, time resource allocation, QCL assumption, a scrambling ID, and a new scrambling ID. The time operation configuration may indicate P, SP, or AP. The frequency resource allocation may be at a wideband level, or may be at an RB level. The wideband level may be the number of PRBs and a starting PRB. The time resource allocation may be at a slot level. The QCL assumption may be an associated SSB. The plurality of CSI-RS resources for aggregation may have different configurations of at least one of time resource allocation, frequency resource allocation, and a scrambling ID.
- Option 5: The plurality of CSI-RS resources for aggregation may be present in M or less consecutive slots, or may be present in consecutive/comb frequency resources.
- Example: M = 2 CSI-RS resources may be aggregated, and associated with 64 CSI-RS ports. Each CSI-RS resource may be associated with 32 CSI-RS ports. The two CSI-RS resources are present in the same CSI-RS resource set or CSI-RS resource group, have the same frequency resource allocation, and are respectively allocated to two consecutive slots.

<<Embodiment B1-3>>

In a plurality of aggregated CSI-RS resources having more than 32 ports, some parameters may be additionally configured, or may overwrite existing parameters. For example, such some parameters may be at least one of density, a new scrambling ID, the number of PRBs, and a starting PRB. In order to reduce complexity of UE measurement, density lower than existing density may be configured.

<Base Station Antenna Layout>

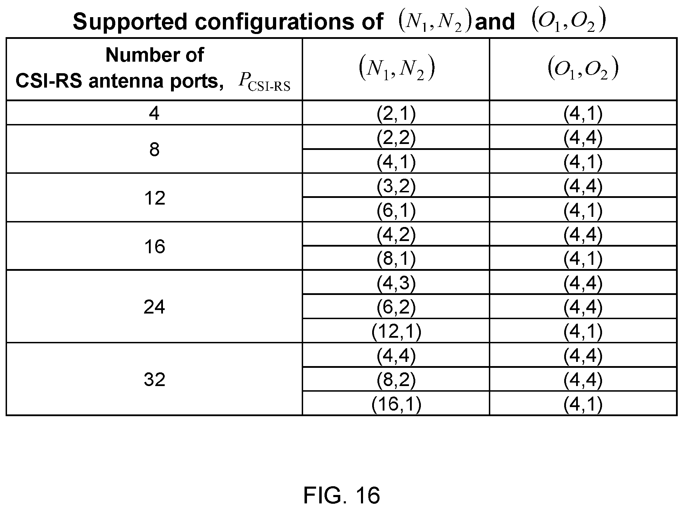

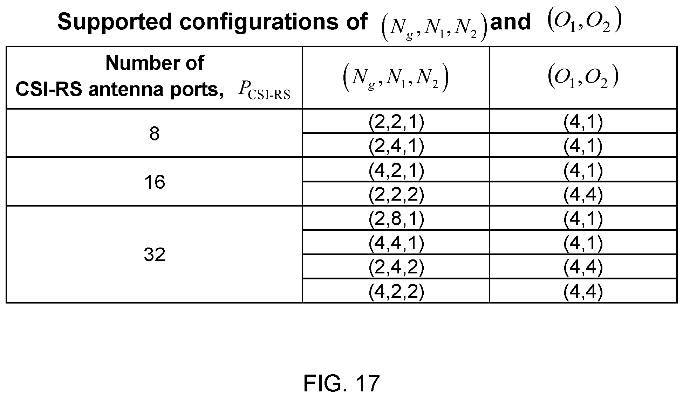

FIG. 16 shows association (table) between the number of supported CSI-RS ports and the base station antenna layout (configurations of ($N_1$, $N_2$) and ($O_1$, $O_2$)) for a single panel of an existing specification. FIG. 17 shows association (table) between the number of supported CSI-RS ports and the base station antenna layout (configurations of $(N_g, N_1, N_2)$ and $(O_1, O_2)$) for a multi-panel of an existing specification.

<Configuration/Measurement/Report of CSI>

The UE may acquire CSI by measuring CSI-RS (resources) using ports to which at least one embodiment of Embodiment A1 to Embodiment A5 and Embodiment B1 is applied. Configuration/report of the CSI may follow at least one of the following some embodiments.

<Embodiment C1>

The present embodiment relates to Study 1 described above.
A new antenna layout and configuration for the CSI-RS using more than 32 ports may follow at least one of the following some options.

- Option 1

New $(N_1, N_2)$ and new $(O_1, O_2)$ may be defined in a specification, and configured for the UE. A new row may be added to an existing table. The new row may be used only when the CSI-RS using more than 32 ports for a CSI codebook is configured. A new table different from the existing table may be added. The new table may be used only when the CSI-RS using more than 32 ports for a CSI codebook is configured, otherwise the existing table may be used.

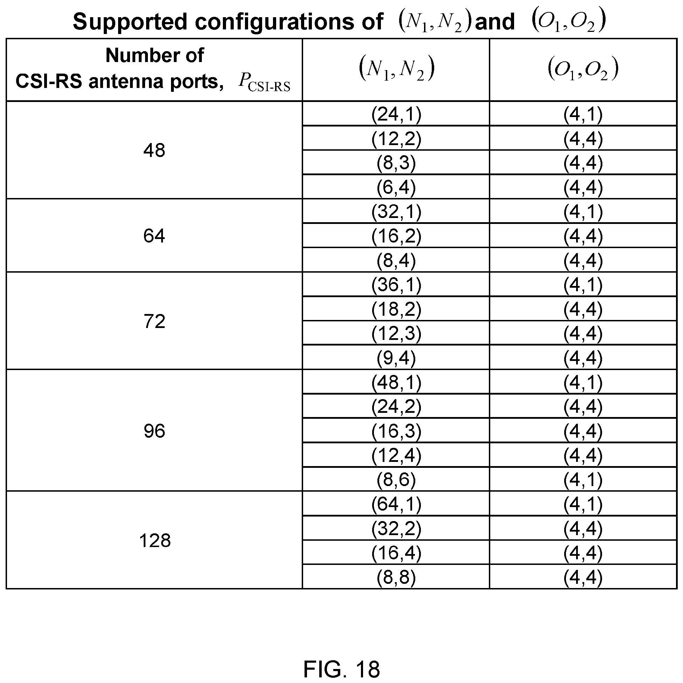

FIG. 18 shows an example of a configuration according to option 1 of Embodiment C1. At least one row in the table may be supported. The table shows a plurality of combinations (rows) of the number (> 32) of CSI-RS ports, $(N_1, N_2)$, and $(O_1, O_2)$.

- Option 2

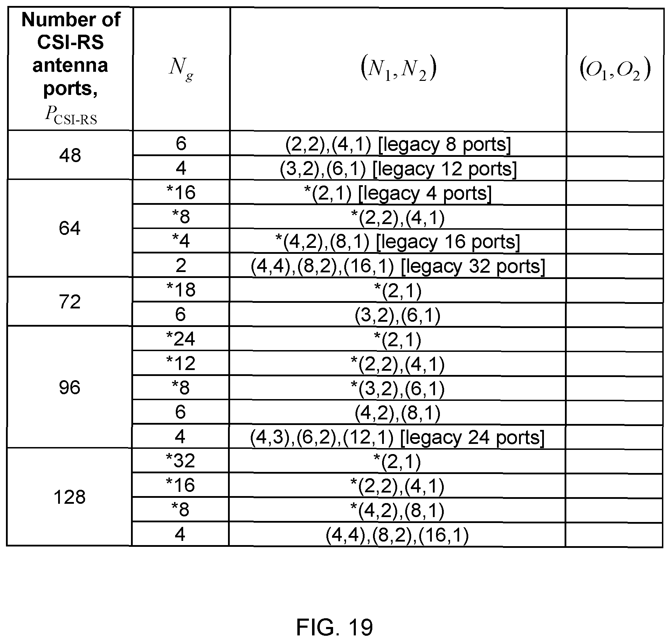

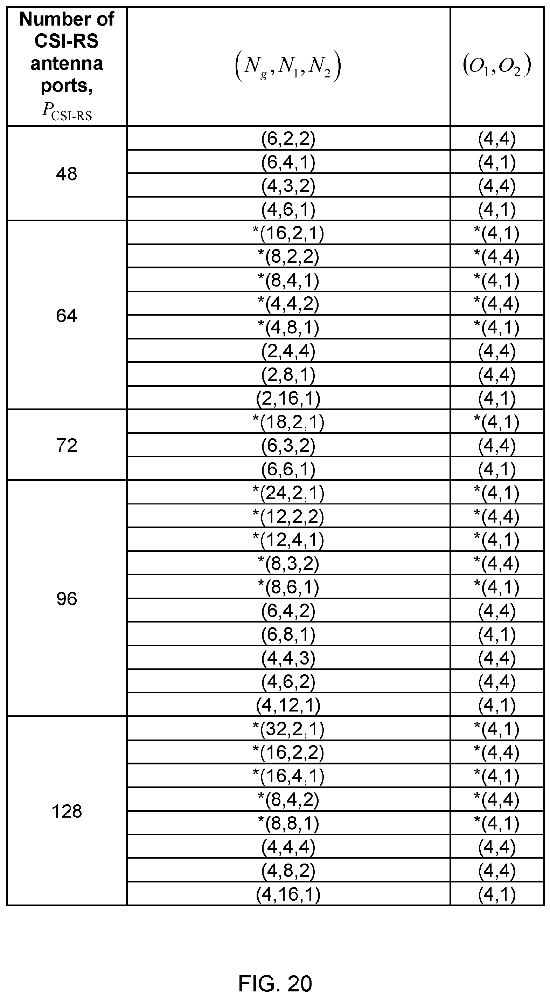

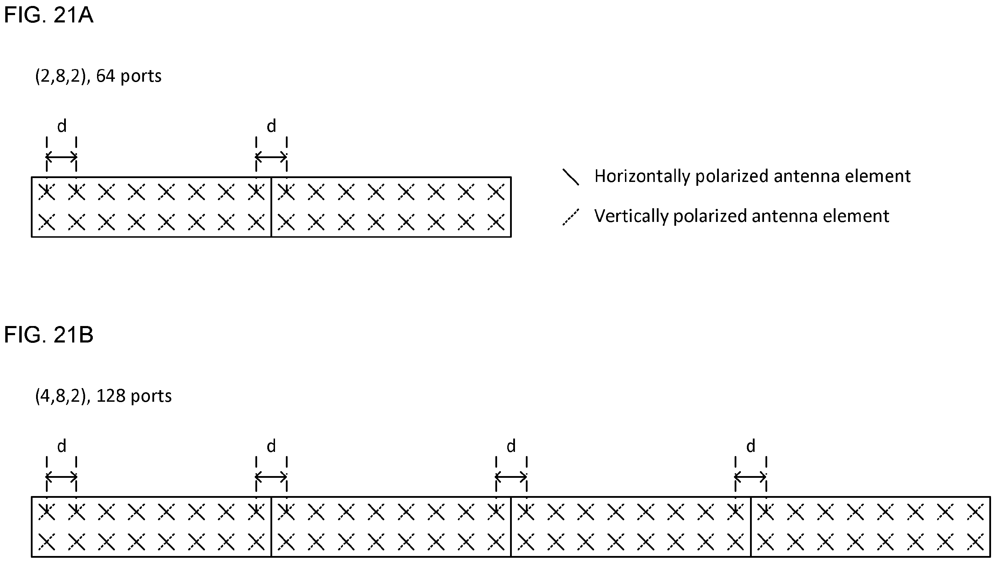

(Similarly to the configuration for a multi-panel), a new parameter ng indicating $N_g$ to be combined with at least one value of existing $(N_1, N_2)$ and existing $(O_1, O_2)$ may be added to the configuration. The new configuration may be defined in a specification, and configured for the UE.
$N_g$ may be configured as a parameter separate from the $(N_1, N_2)$ configuration. For example, two parameters ng and n1-n2 respectively indicating $N_g$ and $(N_1, N_2)$ may be configured. FIG. 19 shows a first example of a configuration according to option 2 of Embodiment C1. At least one combination in the table may be supported. The table indicates a plurality of combinations of the number (> 32) of CSI-RS ports, $N_g$, existing $(N_1, N_2)$, and $(O_1, O_2)$. Different $(N_1, N_2)$ may be included in dedicated rows. Similarly to the example of option 1, $(O_1, O_2)$ for different $(N_1, N_2)$ may be different. By reusing/repurposing an existing configuration with many ports for rows of *, rows of * need not be required.
$N_g$ may be configured as a new joint parameter with the $(N_1, N_2)$ configuration. For example, one parameter ng-n1-n2 indicating $(N_g, N_1, N_2)$ may be configured. FIG. 20 shows a second example of a configuration according to option 2 of Embodiment C1. At least one row in the table may be supported. The table shows a plurality of combinations (rows) of the number (> 32) of CSI-RS ports, new $(N_g, N_1, N_2)$, and $(O_1, O_2)$. By reusing/repurposing an existing configuration with many ports for rows of *, rows of * need not be required.
The UE may recognize that only one dimension is extended by the $N_g$ value. As in the example of FIG. 21A, the antenna layout $(N_g, N_1, N_2) = (2, 8, 2)$ for 64 ports may mean an antenna layout $(N_1, N_2) = (8, 2)$ with two in the horizontal direction. As in the example of FIG. 21B, the antenna layout $(N_g, N_1, N_2) = (4, 8, 2)$ for 128 ports may mean an antenna layout $(N_1, N_2) = (8, 2)$ with four in the horizontal direction. In these examples, an interval between two antenna elements adjacent in the horizontal direction or the vertical direction is d.

- Option 3

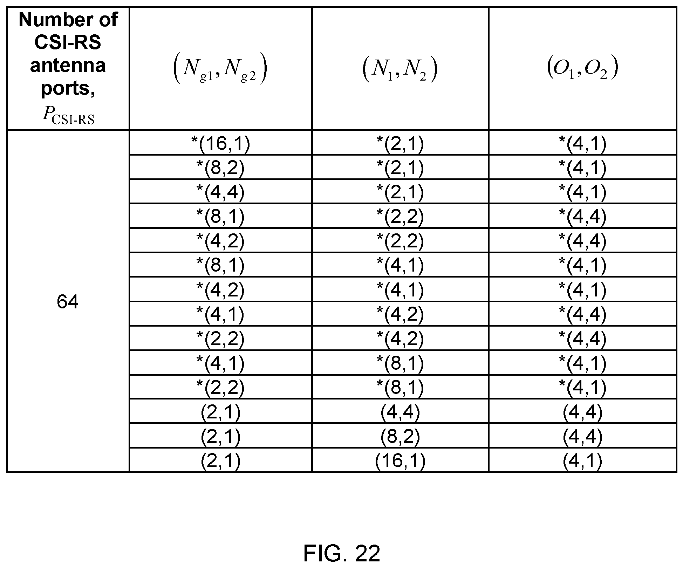

A new parameter ng1-ng2 indicating $(N_{g1}, N_{g2})$ to be combined with at least one value of existing $(N_1, N_2)$ and existing $(O_1, O_2)$ may be added to the configuration. The new configuration may be defined in a specification, and configured for the UE.
$(N_{g1}, N_{g2})$ may be configured as a parameter separate from the $(N_1, N_2)$ configuration. For example, two parameters ng1-ng2 and n1-n2 respectively indicating $(N_{g1}, N_{g2})$ and $(N_1, N_2)$ may be configured. FIG. 22 shows a first example of a configuration according to option 3 of Embodiment C1. At least one combination in the table may be supported. The table indicates a plurality of combinations of the number (> 32) of CSI-RS ports, $(N_{g1}, N_{g2})$, existing $(N_1, N_2)$, and $(O_1, O_2)$. By reusing/repurposing an existing configuration with many ports for rows of *, rows of * need not be required.

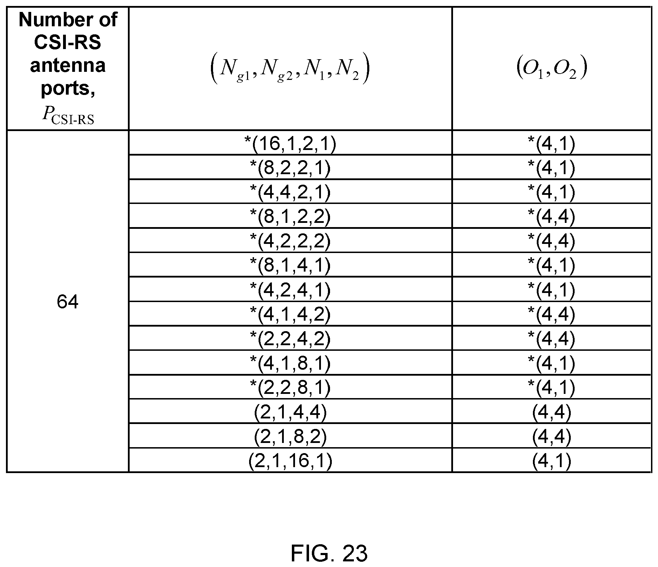

$(N_{g1}, N_{g2})$ may be configured as a new joint parameter with the $(N_1, N_2)$ configuration. For example, one parameter ng1-ng2-n1-n2 indicating $(N_{g1}, N_{g2}, N_1, N_2)$ may be configured. FIG. 23 shows a second example of a configuration according to option 3 of Embodiment C1. At least one row in the table may be supported. The table shows a plurality of combinations (rows) of the number (> 32) of CSI-RS ports, new $(N_{g1}, N_{g2}, N_1, N_2)$, and $(O_1, O_2)$. By reusing/repurposing an existing configuration with many ports for rows of *, rows of * need not be required.

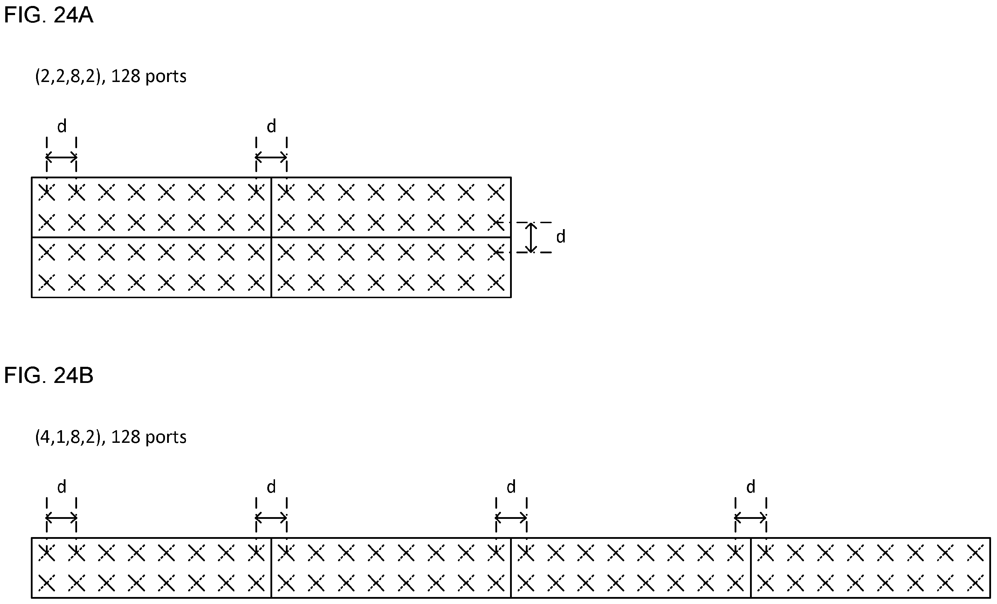

The UE may recognize that two dimensions are extended by the $(N_{g1}, N_{g2})$ value. $Ng_1$ may correspond to $N_1$ (horizontal direction), and $N_{g2}$ may correspond to $N_2$ (vertical direction). As in the example of FIG. 24A, the antenna layout $(N_{g1}, N_{g2}, N_1, N_2) = (2, 2, 8, 2)$ for 128 ports may mean an antenna layout $(N_1, N_2) = (8, 2)$ with two in the horizontal direction and two in the vertical direction. As in the example of FIG. 24B, the antenna layout $(N_{g1}, N_{g2}, N_1, N_2) = (4, 1, 8, 2)$ for 128 ports may mean an antenna layout $(N_1, N_2) = (8, 2)$ with four in the horizontal direction and one in the vertical direction. In these examples, an interval between two antenna elements adjacent in the horizontal direction or the vertical direction is d.

<<Variations>>

The value of $(O_1, O_2)$ for each value of $(N_1, N_2)$ may be defined in a specification, or may be configurable. The value of $(O_1, O_2)$ may follow at least one of the following some alternatives.

- Alternative 1: The value of $(O_1, O_2)$ is common to all the ranks (number of layers).
- Alternative 2: Values of $(O_1, O_2)$ are different for different ranks. For example, $(O_1, O_2)$ has a larger value for a lower rank, and $(O_1, O_2)$ has a smaller value for a higher rank. For example, in $(N_1, N_2) = (16, 2)$, it is $(O_1, O_2) = (4, 4)$ for ranks 1 to 2, and is $(O_1, O_2) = (1, 1)$ for ranks 3 to 8.

According to the present embodiment, the UE can be appropriately configured with the base station antenna layout for the CSI-RS using more than 32 ports.

<Embodiment C2>

The present embodiment relates to Study 2 described above.

Together with the CSI-RS using more than 32 ports, at least one of the following some CSIs/codebooks may be supported, or may be configured.

- Rel-15 type 1 CSI (type 1 single-panel codebook)
- Rel-15 type 1 multi-panel CSI (type 1 multi-panel codebook)
- Rel-15 type 2 CSI (type 2 codebook)
- Rel-15 type 2 PS CSI (type 2 port selection codebook)
- Rel-16 type 2 CSI (enhanced type 2 codebook)
- Rel-16 type 2 PS CSI (enhanced type 2 port selection codebook)
- Rel-17 type 2 PS CSI (further enhanced type 2 port selection codebook)

Only for one or more specific CSI codebooks, the CSI-RS using more than 32 ports may be supported. For example, one or more specific CSI codebooks may be at least one of the type 1 single-panel codebook and the type 1 multi-panel codebook. Consequently, specifications/UE operations can be simplified.

The CSI supporting the CSI-RS using more than 32 ports may be an enhancement of the CSI for CJT (codebook for CJT). The CSI for CJT may be at least one of Rel-18 enhanced type 2 CSI for CJT (enhanced type 2 codebook for CJT) and Rel-18 further enhanced type 2 PS CSI for CJT (further enhanced type 2 PS codebook for CJT). While Rel-18 CSI for CJT may assume a dedicated SD base for each TRP, CSI for CJT that is enhanced for the CSI-RS using more than 32 ports may assume a common SD base across a plurality of TRPs, similarly to mode 2 of the CJT CSI described above. The CSI for the CSI-RS using more than 32 ports may be an enhancement of mode 2 of the CSI for CJT. One of mode 1 of the CSI for CJT and mode 2 of the CSI for CJT for the CSI-RS using more than 32 ports may be configured by a higher layer parameter, or may be switched.

Configured $(N_1, N_2)$ and $(O_1, O_2)$ may be dependent upon a type of codebook/CSI, or may be different depending on a type of codebook/CSI. For example, in the type 1 multi-panel codebook, the configuration of option 2 of Embodiment C1/3 may be applied. For example, in the type 1 single-panel codebook, the configuration of option 1/2/3 of Embodiment C1 may be applied.

According to the present embodiment, the UE can use an appropriate codebook/CSI for the CSI-RS using more than 32 ports.

<Enhanced Type 2 Codebook>

In the enhanced type 2 CB, the PMI value corresponds to the codebook (CB) indices $i_1$ and $i_2$. $i_1$ and $i_2$ are given by the following expressions.

$$i_1 = \{$$

$$[i_{1,1} \; i_{1,2} \; i_{1,5} \; i_{1,6,1} \; i_{1,7,1} \; i_{1,8,1}] \quad v = 1$$

$$[i_{1,1} \; i_{1,2} \; i_{1,5} \; i_{1,6,1} \; i_{1,7,1} \; i_{1,8,1} \; i_{1,6,2} \; i_{1,7,2} \; i_{1,8,2}] \quad v = 2$$

$$[i_{1,1} \; i_{1,2} \; i_{1,5} \; i_{1,6,1} \; i_{1,7,1} \; i_{1,8,1} \; i_{1,6,2} \; i_{1,7,2} \; i_{1,8,2} \; i_{1,6,3} \; i_{1,7,3} \; i_{1,8,3}]$$

$$v = 3$$

$$[i_{1,1} \; i_{1,2} \; i_{1,5} \; i_{1,6,1} \; i_{1,7,1} \; i_{1,8,1} \; i_{1,6,2} \; i_{1,7,2} \; i_{1,8,2} \; i_{1,6,3} \; i_{1,7,3} \; i_{1,8,3}$$

$$i_{1,6,4} \; i_{1,7,4} \; i_{1,8,4}] \quad v = 4$$

$$\}$$

$$i_2 = \{$$

$$[i_{2,3,1} \; i_{2,4,1} \; i_{2,5,1}] \quad v = 1$$

$$[i_{2,3,1} \; i_{2,4,1} \; i_{2,5,1} \; i_{2,3,2} \; i_{2,4,2} \; i_{2,5,2}] \quad v = 2$$

$$[i_{2,3,1} \; i_{2,4,1} \; i_{2,5,1} \; i_{2,3,2} \; i_{2,4,2} \; i_{2,5,2} \; i_{2,3,3} \; i_{2,4,3} \; i_{2,5,3}] \quad v = 3$$

$$[i_{2,3,1} \; i_{2,4,1} \; i_{2,5,1} \; i_{2,3,2} \; i_{2,4,2} \; i_{2,5,2} \; i_{2,3,3} \; i_{2,4,3} \; i_{2,5,3} \; i_{2,3,4} \; i_{2,4,4}$$

$$i_{2,5,4}] \quad v = 4$$

$$\}$$

<Study D0>

For the enhanced CSI-RS (CSI-RS using more than 32 ports), enhancement of the enhanced type 2 CB/further enhanced type 2 PS CB is not sufficiently studied. The present enhancement may be based on at least one of the enhanced (Rel-16) type 2 CB, the further enhanced (Rel-17) type 2 PS CB, and the (Rel-18) CB for CJT.

<Embodiment D0>

A state as to whether to support/apply enhancement of the enhanced type 2 CB for the enhanced CSI-RS may be defined in a specification (corresponding to a UE capability), or may be configured by RRC signaling. The state may be applied according to one of the following some application methods/application targets.

- Application method 1: The state may be applied to a specific rank, or may be applied to all the ranks in common. For example, the state may be defined/configured for ranks 5 to 8, or may be defined/configured for a specific range of ranks. The specific range may be 1 to 4, or may be 1 to 2.
- Application method 2: The state may be applied to a specific number of CSI-RS ports, or may be applied to the entire number of CSI-RS ports in common. For example, the state may be defined/configured for the number of CSI-RS ports being larger than X, or may be defined/configured for the number of CSI-RS ports being smaller than X.
- Application method 3: The state may be applied to a specific antenna configuration (n1-n2, ng-n1-n2, or ng1-ng2-n1-n2), or may be applied to a plurality of antenna configurations in common. For example, the state may be defined/configured for $N_1 \geq X$, may be defined/configured for $N_2 \geq Y$, may be defined/configured for $N_1 \geq N_2$, or may be defined/configured for $N_2 = Y$.
- Application method 4: The state may be applied to a specific parameter combination (paramCombination), or may be applied to all the parameter combinations in common. For example, the state may be defined/configured only for paramCombination with an L value smaller than a specific L value, may be defined/configured only for paramCombination with a $\beta$ value smaller than a specific $\beta$ value, or may be defined/configured only for paramCombination with a

EP 4 757 397 A1

$p_v$ value smaller than a specific $p_v$ value. For example, the specific L value may be 2.

- Application method 5: The state may be applied to a specific number $N_3$ of subbands, or may be applied to a range of all the values of the number of subbands in common. For example, the state may be defined/configured for $N_3 \leq Z$.
- Application method 6: The state may be applied to a specific R value or for each different R value. For example, R may be 1 or 2. For example, the state may be defined/configured only for R = 1.
- Application method 7: The state may follow two or more combinations of the above-mentioned some application methods.

A UE capability related to support of enhancement of the enhanced type 2 CB for the enhanced CSI-RS may be introduced. The UE capability related to support of enhancement of the enhanced type 2 CB for the enhanced CSI-RS may be introduced to the application target in one of application methods 1 to 7 described above.

According to the present embodiment, the UE/base station can appropriately recognize a case of supporting/applying enhancement of the enhanced type 2 CB for the enhanced CSI-RS.

<Study D1>

For ranks 1 to 4, when the existing enhanced type 2 CB is enhanced for support of the enhanced CSI-RS, it is considered that overhead of the SD beam report by $i_{1,2}$ increases due to a larger value of $N_1/N_2$ for the number $\mu_{CSI-RS}$, such as 48, 64, 72, 96, and 128, of CSI-RS ports. As described above, the existing enhanced type 2 CB is based on the antenna configuration n1-n2. The beam index in each (SD) beam group is selected, and is reported/indicated by $i_{1,1}$. L beam groups are selected from $N_1N_2$ (SD) beam groups, and are reported/indicated by $i_{1,2}$.

<Embodiment D1>

<<Embodiment D1.1>>

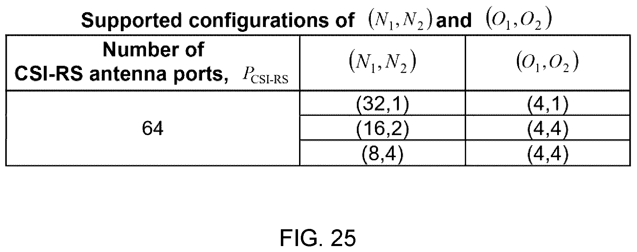

(When the antenna configuration n1-n2 is configured,) for the sake of reduction of overhead of $i_{1,2}$, L reported SD beam groups may be selected not from all of the $N_1N_2$ SD beam groups but from a part or a subgroup of the $N_1N_2$ SD beam groups. For example, the antenna configurations n1-n2 ($N_1$, $N_2$) and ($O_1$, $O_2$) for the number, i.e., 64, of CSI-RS ports may be defined as in FIG. 25.

Selection of the L SD beam groups may follow at least one of the following some alternatives.

- Alternative 1: A part or a subgroup of the SD beam groups for selection may be defined in a specification, or may be configured by an RRC IE. For example, the UE selecting L SD beam groups from first or last $N_1N_2/M$ SD beam groups may be defined in a specification, or may be configured by an RRC IE. For example, M may be 2, or M may be 4. $i_{1,2} \in \{0, 1, ..., C(N_1N_2/M, L) - 1\}$ may hold.
- Alternative 2: The $N_1N_2$ SD beam groups may be divided into M subgroups. The UE may select one subgroup, and report the selected subgroup by a new parameter $i_{1,new}$. $i_{1,new} \in \{0, 1, ..., M - 1\}$ may hold. The size (bit width) of $i_{1,new}$ may be $\log_2 M$. The UE may further report $i_{1,2}$ indicating L SD beam groups from the selected subgroup. $i_{1,2} \in \{0, 1, ..., C(N_1N_2/M, L) - 1\}$ may hold. In alternative 2, the selected SD beams may be reported by three parameters $i_{1,1}$, $i_{1,2}$, and $i_{1,new}$. $i_{1,new}$ may be reported in CSI part 1. $i_{1,new}$ may be common to a plurality of layers.

<<Embodiment D1.2>>

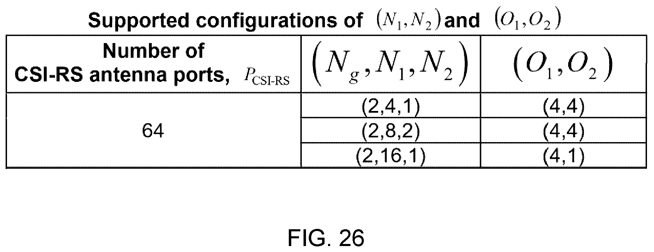

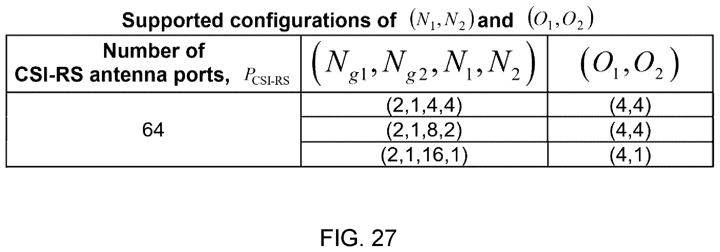

(When the antenna configuration ng-n1-n2 or ng1-ng2-n1-n2 is configured,) for the sake of reduction of $i_{1,2}$, L reported SD beam groups may be selected not from all of the $N_1N_2$ SD beam groups but from a part or a subgroup of the $N_1N_2$ SD beam groups. For example, for the number, i.e., 64, of CSI-RS ports, the antenna configurations ng-n1-n2 ($N_g$, $N_1$, $N_2$) and ($O_1$, $O_2$) may be defined as in FIG. 26. For example, for the number, i.e., 64, of CSI-RS ports, the antenna configurations ng1-ng2-n1-n2 ($N_{g1}$, $N_{g2}$, $N_1$, $N_2$) and ($O_1$, $O_2$) may be defined as in FIG. 27.

It can be considered that subgrouping is performed depending on a panel configuration of $N_g$ or ($N_{g1}$, $N_{g2}$). A part or a subgroup of SD beam groups for selection may correspond to one panel. Selection of L SD beam groups may follow at least one of the following some alternatives.

- Alternative 1: A part or a subgroup of the SD beam groups for selection may be defined in a specification, or may be configured by an RRC IE. For example, the UE selecting L SD beam groups from a first or last panel (selecting the first or last panel and selecting from the panel) may be defined in a specification, or may be configured by an RRC IE. For example, M may be 2, or M may be 4. $i_{1,2} \in \{0, 1, ..., C(N_1N_2, L) - 1\}$ may hold.
- Alternative 2: The UE may report the selected panel by the new parameter $i_{1,new}$. $i_{1,new} \in \{0, 1, ..., N_g - 1\}$ or $i_{1,new} \in \{0,$

1, ..., $N_{g1}N_{g2}$ - 1} may hold. The size (bit width) of $i_{1,new}$ may be $\log_2 N_g$ or $\log_2(N_{g1}N_{g2})$. The UE may further report $i_{1,2}$ indicating L SD beam groups from the selected panel. $i_{1,2} \in \{0, 1, ..., C(N_1N_2, L) - 1\}$ may hold. In alternative 2, the SD beams may be reported by three parameters $i_{1,1}$, $i_{1,2}$, and $i_{1,new}$. In a case in which $(N_{g1}, N_{g2})$ is configured, $i_{1,new}$ may be $[i_{1,new,1} \; i_{1,new,2}]$, $i_{1,new,1} \in \{0, 1, ..., N_{g1} - 1\}$, or $i_{1,new,2} \in \{0, 1, ..., N_{g2} - 1\}$. $i_{1,new}$ may be reported in CSI part 1. $i_{1,new}$ may be common to a plurality of layers.

<<Embodiment D1.3>>

(When the antenna configuration ng-n1-n2 or ng1-ng2-n1-n2 is configured,) existing SD beam group selection (principle/rule) may be reused/repurposed. In the existing SD beam group selection, L reported SD beam groups may be selected from all the SD beam groups. $i_{1,2} \in \{0, 1, ..., C(N_gN_1N_2, L) - 1\}$ or $i_{1,2} \in \{0, 1, ..., C(N_{g1}N_{g2}N_1N_2, L) - 1\}$ may hold. As described above, in new SD beam group selection (principle/rule), L SD beam groups may be selected from a part or a subgroup of SD beam groups.

A state as to whether to reuse the existing SD beam group selection or use the new SD beam group selection may be defined in a specification (corresponding to a UE capability), or may be configured by an RRC IE. The state may be applied according to one of the following some application methods/application targets.

- Application method 1: The state may be applied to a specific rank, or may be applied to all the ranks in common. For example, when a rank is a specific value or lower, the existing SD beam group selection may be reused, whereas when the rank is higher than the specific value, the new SD beam group selection may be used. For example, the specific value may be 4.
- Application method 2: The state may be applied to a specific number of CSI-RS ports, or may be applied to the entire number of CSI-RS ports in common. For example, when the number of CSI-RS ports is a specific value or lower, the existing SD beam group selection may be reused, whereas when the number of CSI-RS ports is higher than the specific value, the new SD beam group selection may be used. For example, the specific value may be 32.
- Application method 3: The state may be applied to a specific antenna configuration (n1-n2, ng-n1-n2, or ng1-ng2-n1-n2), or may be applied to a plurality of antenna configurations in common.
- Application method 4: The state may be applied to a specific parameter combination (paramCombination), or may be applied to all the parameter combinations in common. For example, the state may be defined/configured only for paramCombination with a smaller L value (for example, L = 2), may be defined/configured only for paramCombination with a smaller $\beta$ value, or may be defined/configured only for paramCombination with a smaller $p_v$ value.
- Application method 5: The state may be applied to a specific number $N_3$ of subbands, or may be applied to a range of all the values of the number of subbands in common.
- Application method 6: The state may be applied to a specific R value or for each different R value. For example, R may be 1 or 2.
- Application method 7: The state may follow two or more combinations of the above-mentioned some application methods.

A UE capability related to support of the new SD beam group selection may be introduced. The UE capability related to support of the new SD beam group selection may be introduced to the application target in one of application methods 1 to 7 described above.

According to the present embodiment, the UE can appropriately select reported SD beam groups.

<Study D2>

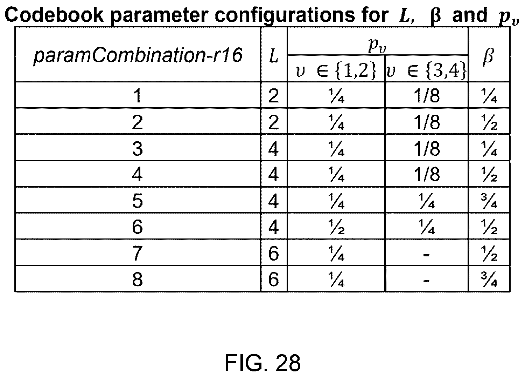

In the existing enhanced type 2 CB, the size (number) $M_v$ of FD bases is specific to a layer, and is $M_v$ = ceil $(p_v \times N_3/R)$. $M_v$ is determined by $p_v$ from parameter combinations (paramCombination). FIG. 28 shows codebook parameter combinations [L $p_v$ $\beta$] for paramCombination-r16 and layer v for the existing enhanced type 2 CB.

- Study D2-1: In existing specifications, paramCombination is defined for up to four layers. There is no definition of parameters for more than four ranks.
- Study D2-2: In existing specifications, the value of $p_v$ is different for a different layer, and thus when the rank is high, complexity of CSI increases.

<Embodiment D2>

In enhancement of the enhanced type 2 CB for the enhanced CSI-RS, in order to support ranks 5 to 8, $p_v$ for v = 5, 6, 7, 8 may be newly defined. $M_v$ for the size (number) of FD bases may follow at least one of the following some rules.

- Rule: For a plurality of specific different layers, the value of $M_v$ may be the same. For example, for layers u and v, $M_v = M_u$ may hold. In order to support/apply the same value of $M_v$ for a plurality of specific layers, the value of $p_v$ from paramCombination for the plurality of specific layers may be the same.

- Rule: For the sake of reduction of overhead, the value of $p_v$ smaller than the value of $p_v$ in existing specifications may be introduced. In order to secure high performance, the value of $p_v$ larger than the value of $p_v$ in existing specifications may be introduced.

- Rule: A state as to whether to support/apply the same value of $M_v$ for a plurality of different layers or support/apply different values of $M_v$ for a plurality of different layers may be defined in a specification (corresponding to a UE capability), or may be configured by an RRC IE. The state may follow at least one of the following some application methods.

    -- Application method 1: The state may be applied to a specific rank, or may be applied to all the ranks in common.
    -- Application method 2: The state may be applied to a specific number of CSI-RS ports, or may be applied to the entire number of CSI-RS ports in common.
    -- Application method 3: The state may be applied to a specific antenna configuration (n1-n2, ng-n1-n2, or ng1-ng2-n1-n2), or may be applied to a plurality of antenna configurations in common.
    -- Application method 4: The state may be applied to a specific parameter combination (paramCombination), or may be applied to all the parameter combinations in common.
    -- Application method 5: The state may be applied to a specific number $N_3$ of subbands, or may be applied to a range of all the values of the number of subbands in common.
    -- Application method 6: The state may be applied to a specific R value or for each different R value. For example, R may be 1 or 2.
    -- Application method 7: The state may follow two or more combinations of the above-mentioned some application methods.

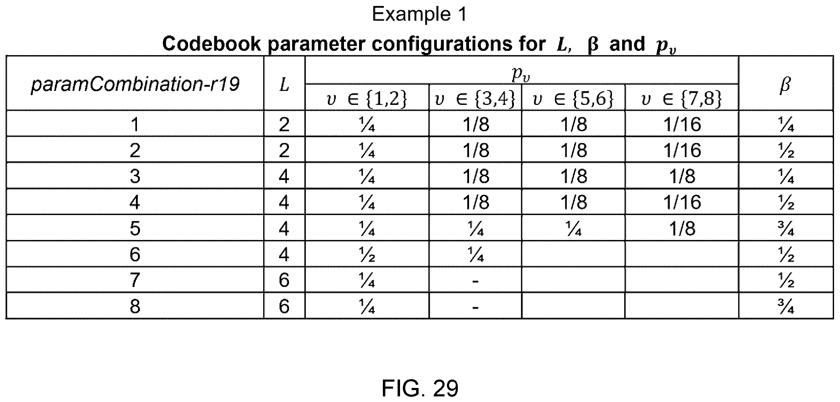

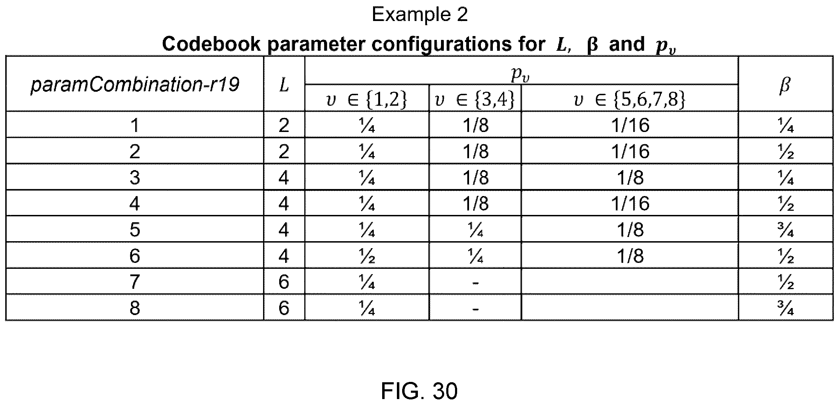

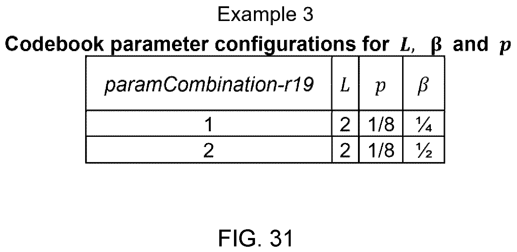

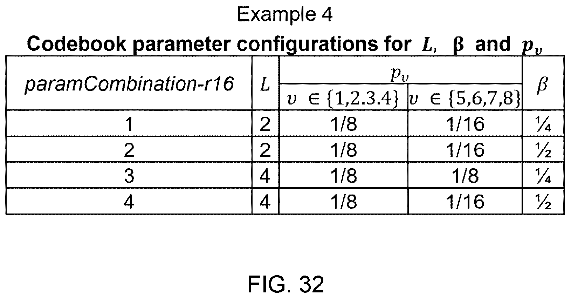

- A state as to whether to support/apply new parameter combinations (for example, paramCombination-r19) may be defined in a specification, or may be configured by an RRC IE. The state may be applied in accordance with one of application methods 1 to 7 described above. The new parameter combinations may follow one of example 1 (FIG. 29), example 2 (FIG. 30), example 3 (FIG. 31), and example 4 (FIG. 32).

According to the present embodiment, the UE can appropriately determine the size (number) of FD bases.

<Study D3>

As described above, in the existing enhanced type 2 CB, an FD beam report for $M_v$ vectors is reported/indicated by $i_{1,5}$ for $N_3 > 19$ and $i_{1,6,l}$ for $M_v > 1$ and $l = 1, ..., v$. $i_{1,5}$ indicates an index of an initial FD beam (base). $i_{1,6,l}$ indicates an index of an FD beam (base) selected for layer l. When the rank is high, and $i_{1,6,l}$ for each layer is reported (a different FD beam is reported for each layer), overhead increases.

<Embodiment D3>

When ranks 5 to 8 are supported in enhancement of the enhanced type 2 CB, an FD beam report for each layer may be enhanced for ranks 5 to 8. The enhancement may follow at least one of the following some examples.

- Example: For rank 5, $i_{1,6,5}$ is reported additionally to an existing report for rank 4.
- Example: For rank 6, $i_{1,6,5}$ and $i_{1,6,6}$ are reported additionally to an existing report for rank 4.
- Example: For rank 7, $i_{1,6,5}$, $i_{1,6,6}$, and $i_{1,6,7}$ are reported additionally to an existing report for rank 4.
- Example: For rank 8, $i_{1,6,5}$, $i_{1,6,6}$, $i_{1,6,7}$, and $i_{1,6,8}$ are reported additionally to an existing report for rank 4.

The same FD beam for a plurality of specific layers may be supported, and a report of $i_{1,6,l}$ for the plurality of specific layers need not be required. The same FD beam for the plurality of specific layers may be applied to any one of the ranks. Consequently, overhead of reporting an FD beam can be reduced. Mapping (relationship) as to which plurality of layers have the same FD beam may be defined in a specification, or may be additionally reported by the UE via a new parameter. A plurality of layers having the same FD beam may follow at least one of the following some examples.

- Example: When there are more than four ranks, the FD beams for layers 1, 2, 3, and 4 may be reported, and the FD beams for layers 5, 6, 7, and 8 need not be reported. It may be assumed that the FD beam for layer i (i > 4) is the same as the FD beam for layer j (j ≤ 4). For example, FD beam for layer 5 may be the same as FD beam for layer 1, FD beam for layer 6 may be the same as FD beam for layer 2, FD beam for layer 7 may be the same as FD beam for layer 3, and FD beam for layer 8 may be the same as FD beam for layer 4. Mapping between i and j may be defined in a specification, or may be additionally reported by the UE via a new parameter. In this case, $i_{1,6,l}$ may include $[i_{1,6,1}\ i_{1,6,2}\ i_{1,6,3}\ i_{1,6,4}]$.

- Example: When the rank is 8, the FD beams for layers 5 and 7 may be reported, and the FD beams for layers 6 and 8 need not be reported. It may be assumed that the FD beam for layer 6 is the same as the FD beam for layer 5. It may be assumed that the FD beam for layer 8 is the same as the FD beam for layer 7. In this case, $i_{1,6,l}$ may include $[i_{1,6,1}\ i_{1,6,2}\ i_{1,6,3}\ i_{1,6,4}\ i_{1,6,5}\ i_{1,6,7}]$.

A state as to whether to report the FD beam for each layer or omit a report of the FD beam of a specific layer may be defined in a specification (corresponding to a UE capability), or may be configured by an RRC IE. The state may follow at least one of application methods 1 to 7 described above (Embodiment DO/Embodiment D2).

A UE capability related to support of omission of a report of the FD beam for a specific layer may be introduced. The UE capability related to support of omission of a report of the FD beam for a specific layer may be introduced to the target in one of application methods 1 to 7 described above (Embodiment DO/Embodiment D2).

According to the present embodiment, the UE can appropriately select reported SD beam groups.

<Study D4>

In the existing enhanced type 2 CB, the maximum number of non-zero coefficients (NZCs) is reported. The (actual, reported) number of NZCs for layer l is reported in CSI part 1.

The number of NZCs for each layer is limited to the maximum value $K_0$ = ceil ($\beta \times 2LM_v$). $K_l^{NZ}$ = $\Sigma_{i=0}^{2L-1}\Sigma_{f=0}^{M\_v-1}k_{l,i,f}^{(3)}$, which is the number of NZCs for layer l, is limited to the maximum value $K_0$. $K^{NZ} = \Sigma_{l=1}^{v}K_l^{NZ}$, which is the total number of NZCs for all the layers, is limited to the maximum value $2K_0$. Thus, the maximum value of the total number of NZCs for rank v = 1 is $K_0$, and the maximum value of the total number of NZCs for rank v = 2, 3, 4 is $2K_0$.

In existing specifications, the maximum number of NZCs when a high rank (for example, rank 8) is supported is not defined. When the maximum number $2K_0$ of the total number of NZCs for all the layers is reused, performance of the high rank may degrade due to excessive limitation of the total number.

<Embodiment D4>

For layer l, when the number of FD bases is $M_l$, the maximum number of NZCs for layer l may be limited to $K_l$ = ceil($\beta \times 2LM_l$).

The maximum value (limit) of the total number of NZCs for all the layers of ranks 5 to 8 of the enhanced CSI-RS may be defined. The maximum value may follow at least one of the following some options.

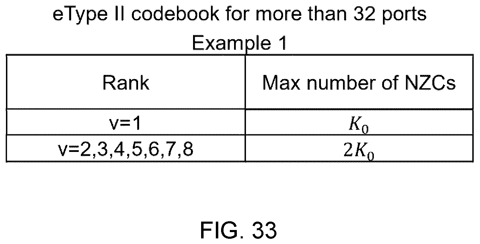

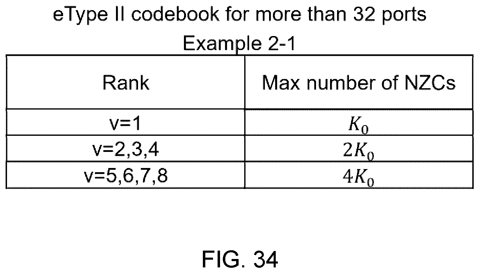

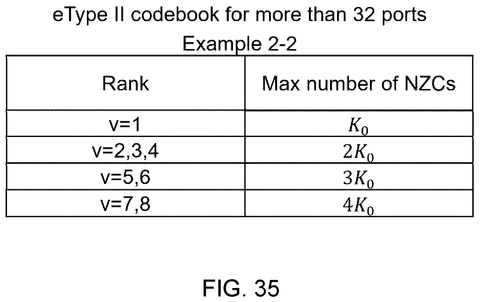

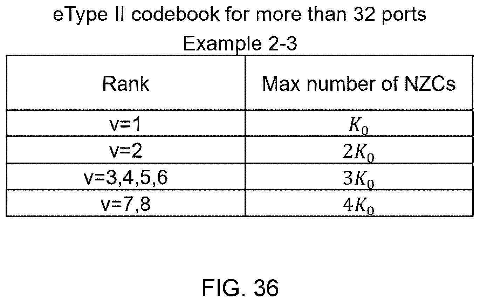

- Option 1: The maximum value of the total number of NZCs is $2K_0$, which is the same as the maximum value of the total number of NZCs for existing ranks 2 to 4 (example 1 of FIG. 33).
- Option 2: The maximum value of the total number of NZCs is associated with/dependent upon a rank. The maximum value of the total number of NZCs may be different for a different rank. For example, the maximum value may be $X*K_0$. Here, X may be associated with/dependent upon a rank. The option may be applied to ranks 1 to 4 of the enhanced CSI-RS. In example 2-1 of FIG. 34, the maximum value of the total number of NZCs for v = 5, 6, 7, 8 is defined. In example 2-2 of FIG. 35, the maximum value of the total number of NZCs for v = 5, 6 and the maximum value of the total number of NZCs for v = 7, 8 are defined. In example 2-3 of FIG. 36, the maximum value of the total number of NZCs for v = 2, the maximum value of the total number of NZCs for v = 3, 4, 5, 6, and the maximum value of the total number of NZCs for v = 7, 8 are defined.

A state as to which of the above-mentioned some options is applied may be defined in a specification (corresponding to a UE capability), or may be configured by an RRC IE. The state may be applied in accordance with at least one of application methods 1 to 7 described above (Embodiment DO/Embodiment D2).

A UE capability related to support of the maximum value of the total number of NZCs for all the layers for the enhanced CSI-RS may be introduced. The UE capability related to support of the maximum value of the total number of NZCs for all the layers for the enhanced CSI-RS may be introduced to the target in one of application methods 1 to 7 described above (Embodiment DO/Embodiment D2).

According to the present embodiment, the UE can appropriately limit the total number of NZCs.

<Study D5>

In the existing enhanced type 2 CB, a bitmap indicating the position of the NZC for layer l is reported by $i_{1,7,l}$.

When the rank is high, overhead of the CSI report increases. For example, in rank 8, eight bitmaps are required for each layer.

In the existing CB, the strongest coefficient indicator for layer l is reported by $i_{1,8,7}$.

<Embodiment D5>

For the sake of reduction of overhead of reporting the bitmaps for each layer, a method/rule of bitmap omission for each layer may be introduced.

For rank v, a new v-bit indicator $i_{1,9}$ for indicating which bitmaps of which layer are omitted may be reported. A state as to whether or not bitmap omission is enabled may be defined in a specification (corresponding to a UE capability), or may be configured by an RRC IE. The state may follow at least one of the following some options.

- Option 1: When all the NZCs for layer l are not reported, the bitmaps for layer l are omitted (not reported). For example, if the UE determines that all the NZCs for a certain layer have an amplitude value weaker (than a specific value), the UE may determine not to report the NZCs, and the bitmaps for the layer need not be reported. In this case, there is no reporting of $i_{1,8,l}$, $i_{2,3,l}$, $i_{2,4,l}$, and $i_{2,5,l}$ for the layer l.
- Option 2: When all the NZCs for layer l are reported, the bitmaps for layer l are omitted (not reported). For example, if the UE determines that all the NZCs for a certain layer have an amplitude value stronger (than a specific value), all the NZCs may be selected (may be reported) for the UE. In this case, there is reporting of $i_{1,8,l}$, $i_{2,3,l}$, $i_{2,4,l}$, and $i_{2,5,l}$ for the layer 1.
- Option 3: When $K^{NZ} = 2LM_1$, the bitmaps for all the layers are not omitted (not reported). A method of the omission may be applied in a case in which the maximum value of the total number of NZCs is defined as $X*K_0$ and the rank is X or lower. In this case, the NW can understand that the omission has occurred, based on the number of NZCs reported in CSI part 1. Thus, a report of $i_{1,9}$ need not be required.
- Option 4: Which bitmap omission rule of the above-mentioned options 1 to 3 is applied may be configured by an RRC IE.
- Option 5 (variation): A new 2v-bit indicator (2 bits for one layer) for indicating the bitmap omission rule to be applied for each layer by the UE may be reported. For example, a value 00 of the 2v-bit indicator may mean that there is no bitmap omission, a value 01 may mean the bitmap omission of option 1, and a value 10 may mean the bitmap omission of option 2.

A state as to which of the above-mentioned some options is applied may be defined in a specification (corresponding to a UE capability), or may be configured by an RRC IE. The state may be applied in accordance with at least one of application methods 1 to 7 described above (Embodiment DO/Embodiment D2).

Such a new indicator may be reported in CSI part 1. The indicator may affect the bit size of CSI part 2.

A UE capability related to support of bitmap omission may be introduced. A UE capability related to support of the new indicator (for example, the v-bit indicator $i_{1,9}$) for indicating which bitmaps of which layer are omitted may be introduced. A UE capability related to support of the new indicator (for example, the 2v-bit indicator $i_{1,9}$) for indicating the bitmap omission rule to be applied for each layer may be introduced.

According to the present embodiment, the UE can appropriately determine whether to report the bitmap indicating the position of the NZC.

<Study D6>

(When Embodiment D1/D2/D3/D5/D6 is applied,) $i_1$ and $i_2$ for ranks 5 to 8 are not clear.

<Embodiment D6>

For ranks 5 to 8, $i_1$ and $i_2$ may be enhanced. The enhancement may follow at least one of the following some examples.

- Example 1: $i_1$ and $i_2$ for ranks 5 to 8 may be given by the following expressions.

$i_1 = \{$

$\quad [i_{1,1}\ i_{1,2}\ i_{1,5}\ i_{1,6,1}\ i_{1,7,1}\ i_{1,8,1}\ i_{1,6,2}\ i_{1,7,2}\ i_{1,8,2}\ i_{1,6,3}\ i_{1,7,3}\ i_{1,8,3}$
$i_{1,6,4}\ i_{1,7,4}\ i_{1,8,4}\ i_{1,6,5}\ i_{1,7,5}\ i_{1,8,5}]\ v = 5$

$\quad [i_{1,1}\ i_{1,2}\ i_{1,5}\ i_{1,6,1}\ i_{1,7,1}\ i_{1,8,1}\ i_{1,6,2}\ i_{1,7,2}\ i_{1,8,2}\ i_{1,6,3}\ i_{1,7,3}\ i_{1,8,3}$
$i_{1,6,4}\ i_{1,7,4}\ i_{1,8,4}\ i_{1,6,5}\ i_{1,7,5}\ i_{1,8,5}\ i_{1,6,6}\ i_{1,7,6}\ i_{1,8,6}]\ v = 6$

$\quad [i_{1,1}\ i_{1,2}\ i_{1,5}\ i_{1,6,1}\ i_{1,7,1}\ i_{1,8,1}\ i_{1,6,2}\ i_{1,7,2}\ i_{1,8,2}\ i_{1,6,3}\ i_{1,7,3}\ i_{1,8,3}$
$i_{1,6,4}\ i_{1,7,4}\ i_{1,8,4}\ i_{1,6,5}\ i_{1,7,5}\ i_{1,8,5}\ i_{1,6,6}\ i_{1,7,6}\ i_{1,8,6}\ i_{1,6,7}\ i_{1,7,7}\ i_{1,8,7}]\ v$
$= 7$

$\quad [i_{1,1}\ i_{1,2}\ i_{1,5}\ i_{1,6,1}\ i_{1,7,1}\ i_{1,8,1}\ i_{1,6,2}\ i_{1,7,2}\ i_{1,8,2}\ i_{1,6,3}\ i_{1,7,3}\ i_{1,8,3}$
$i_{1,6,4}\ i_{1,7,4}\ i_{1,8,4}\ i_{1,6,5}\ i_{1,7,5}\ i_{1,8,5}\ i_{1,6,6}\ i_{1,7,6}\ i_{1,8,6}\ i_{1,6,7}\ i_{1,7,7}\ i_{1,8,7}$
$i_{1,6,8}\ i_{1,7,8}\ i_{1,8,8}]\ v = 8$

$\}$

$i_2 = \{$

$\quad [i_{2,3,1}\ i_{2,4,1}\ i_{2,5,1}\ i_{2,3,2}\ i_{2,4,2}\ i_{2,5,2}\ i_{2,3,3}\ i_{2,4,3}\ i_{2,5,3}\ i_{2,3,4}\ i_{2,4,4}$
$i_{2,5,4}\ i_{2,3,5}\ i_{2,4,5}\ i_{2,5,5}]\ v = 5$

$\quad [i_{2,3,1}\ i_{2,4,1}\ i_{2,5,1}\ i_{2,3,2}\ i_{2,4,2}\ i_{2,5,2}\ i_{2,3,3}\ i_{2,4,3}\ i_{2,5,3}\ i_{2,3,4}\ i_{2,4,4}$
$i_{2,5,4}\ i_{2,3,5}\ i_{2,4,5}\ i_{2,5,5}\ i_{2,3,6}\ i_{2,4,6}\ i_{2,5,6}]\ v = 6$

$\quad [i_{2,3,1}\ i_{2,4,1}\ i_{2,5,1}\ i_{2,3,2}\ i_{2,4,2}\ i_{2,5,2}\ i_{2,3,3}\ i_{2,4,3}\ i_{2,5,3}\ i_{2,3,4}\ i_{2,4,4}$
$i_{2,5,4}\ i_{2,3,5}\ i_{2,4,5}\ i_{2,5,5}\ i_{2,3,6}\ i_{2,4,6}\ i_{2,5,6}\ i_{2,3,7}\ i_{2,4,7}\ i_{2,5,7}]\ v = 7$

$\quad [i_{2,3,1}\ i_{2,4,1}\ i_{2,5,1}\ i_{2,3,2}\ i_{2,4,2}\ i_{2,5,2}\ i_{2,3,3}\ i_{2,4,3}\ i_{2,5,3}\ i_{2,3,4}\ i_{2,4,4}$
$i_{2,5,4}\ i_{2,3,5}\ i_{2,4,5}\ i_{2,5,5}\ i_{2,3,6}\ i_{2,4,6}\ i_{2,5,6}\ i_{2,3,7}\ i_{2,4,7}\ i_{2,5,7}\ i_{2,3,8}\ i_{2,4,8}$
$i_{2,5,8}]\ v = 8$

$\}$

- Example 2: Embodiment D3 may be applied, and $i_{1,6,l}$ need not be reported. $i_1$ for ranks 5 to 8 may be given by the following expression.

$i_1 = \{$

$\quad [i_{1,1}\ i_{1,2}\ i_{1,5}\ i_{1,6,1}\ i_{1,7,1}\ i_{1,8,1}\ i_{1,6,2}\ i_{1,7,2}\ i_{1,8,2}\ i_{1,6,3}\ i_{1,7,3}\ i_{1,8,3}$
$i_{1,6,4}\ i_{1,7,4}\ i_{1,8,4}\ i_{1,7,5}\ i_{1,8,5}]\ v = 5$

$\quad [i_{1,1}\ i_{1,2}\ i_{1,5}\ i_{1,6,1}\ i_{1,7,1}\ i_{1,8,1}\ i_{1,6,2}\ i_{1,7,2}\ i_{1,8,2}\ i_{1,6,3}\ i_{1,7,3}\ i_{1,8,3}$
$i_{1,6,4}\ i_{1,7,4}\ i_{1,8,4}\ i_{1,7,5}\ i_{1,8,5}\ i_{1,7,6}\ i_{1,8,6}]\ v = 6$

$\quad [i_{1,1}\ i_{1,2}\ i_{1,5}\ i_{1,6,1}\ i_{1,7,1}\ i_{1,8,1}\ i_{1,6,2}\ i_{1,7,2}\ i_{1,8,2}\ i_{1,6,3}\ i_{1,7,3}\ i_{1,8,3}$
$i_{1,6,4}\ i_{1,7,4}\ i_{1,8,4}\ i_{1,7,5}\ i_{1,8,5}\ i_{1,7,6}\ i_{1,8,6}\ i_{1,7,7}\ i_{1,8,7}]\ v = 7$

$\quad [i_{1,1}\ i_{1,2}\ i_{1,5}\ i_{1,6,1}\ i_{1,7,1}\ i_{1,8,1}\ i_{1,6,2}\ i_{1,7,2}\ i_{1,8,2}\ i_{1,6,3}\ i_{1,7,3}\ i_{1,8,3}$
$i_{1,6,4}\ i_{1,7,4}\ i_{1,8,4}\ i_{1,7,5}\ i_{1,8,5}\ i_{1,7,6}\ i_{1,8,6}\ i_{1,7,7}\ i_{1,8,7}\ i_{1,7,8}\ i_{1,8,8}]\ v = 8$

$\}$

- Example 3: Embodiment D1 may be applied, and the new indicator $i_{1,new}$ may be reported. $i_1$ for ranks 1 to 8 may be given by the following expression.

$$i_1 = \{$$

$$[i_{1,1} \ i_{1,2} \ i_{1,new} \ i_{1,5} \ i_{1,6,1} \ i_{1,7,1} \ i_{1,8,1}] \ v = 1$$

$$[i_{1,1} \ i_{1,2} \ i_{1,new} \ i_{1,5} \ i_{1,6,1} \ i_{1,7,1} \ i_{1,8,1} \ i_{1,6,2} \ i_{1,7,2} \ i_{1,8,2}] \ v = 2$$

$$[i_{1,1} \ i_{1,2} \ i_{1,new} \ i_{1,5} \ i_{1,6,1} \ i_{1,7,1} \ i_{1,8,1} \ i_{1,6,2} \ i_{1,7,2} \ i_{1,8,2} \ i_{1,6,3} \ i_{1,7,3}$$
$$i_{1,8,3}] \ v = 3$$

$$[i_{1,1} \ i_{1,2} \ i_{1,new} \ i_{1,5} \ i_{1,6,1} \ i_{1,7,1} \ i_{1,8,1} \ i_{1,6,2} \ i_{1,7,2} \ i_{1,8,2} \ i_{1,6,3} \ i_{1,7,3}$$
$$i_{1,8,3} \ i_{1,6,4} \ i_{1,7,4} \ i_{1,8,4}] \ v = 4$$

$$[i_{1,1} \ i_{1,2} \ i_{1,new} \ i_{1,5} \ i_{1,6,1} \ i_{1,7,1} \ i_{1,8,1} \ i_{1,6,2} \ i_{1,7,2} \ i_{1,8,2} \ i_{1,6,3} \ i_{1,7,3}$$
$$i_{1,8,3} \ i_{1,6,4} \ i_{1,7,4} \ i_{1,8,4} \ i_{1,6,5} \ i_{1,7,5} \ i_{1,8,5}] \ v = 5$$

$$[i_{1,1} \ i_{1,2} \ i_{1,new} \ i_{1,5} \ i_{1,6,1} \ i_{1,7,1} \ i_{1,8,1} \ i_{1,6,2} \ i_{1,7,2} \ i_{1,8,2} \ i_{1,6,3} \ i_{1,7,3}$$
$$i_{1,8,3} \ i_{1,6,4} \ i_{1,7,4} \ i_{1,8,4} \ i_{1,6,5} \ i_{1,7,5} \ i_{1,8,5} \ i_{1,6,6} \ i_{1,7,6} \ i_{1,8,6}] \ v = 6$$

$$[i_{1,1} \ i_{1,2} \ i_{1,new} \ i_{1,5} \ i_{1,6,1} \ i_{1,7,1} \ i_{1,8,1} \ i_{1,6,2} \ i_{1,7,2} \ i_{1,8,2} \ i_{1,6,3} \ i_{1,7,3}$$
$$i_{1,8,3} \ i_{1,6,4} \ i_{1,7,4} \ i_{1,8,4} \ i_{1,6,5} \ i_{1,7,5} \ i_{1,8,5} \ i_{1,6,6} \ i_{1,7,6} \ i_{1,8,6} \ i_{1,6,7} \ i_{1,7,7}$$
$$i_{1,8,7}] \ v = 7$$

$$[i_{1,1} \ i_{1,2} \ i_{1,new} \ i_{1,5} \ i_{1,6,1} \ i_{1,7,1} \ i_{1,8,1} \ i_{1,6,2} \ i_{1,7,2} \ i_{1,8,2} \ i_{1,6,3} \ i_{1,7,3}$$
$$i_{1,8,3} \ i_{1,6,4} \ i_{1,7,4} \ i_{1,8,4} \ i_{1,6,5} \ i_{1,7,5} \ i_{1,8,5} \ i_{1,6,6} \ i_{1,7,6} \ i_{1,8,6} \ i_{1,6,7} \ i_{1,7,7}$$
$$i_{1,8,7} \ i_{1,6,8} \ i_{1,7,8} \ i_{1,8,8}] \ v = 8$$

$$\}$$

- Example 4: Embodiment D1 may be applied, and the new indicator $i_{1,9}$ may be reported. $i_1$ for ranks 1 to 8 may be given by the following expression.

$$i_1 = \{$$

$$[i_{1,1}\ i_{1,2}\ i_{1,5}\ i_{1,9}\ i_{1,6,1}\ i_{1,7,1}\ i_{1,8,1}]\ v = 1$$

$$[i_{1,1}\ i_{1,2}\ i_{1,5}\ i_{1,9}\ i_{1,6,1}\ i_{1,7,1}\ i_{1,8,1}\ i_{1,6,2}\ i_{1,7,2}\ i_{1,8,2}]\ v = 2$$

$$[i_{1,1}\ i_{1,2}\ i_{1,5}\ i_{1,9}\ i_{1,6,1}\ i_{1,7,1}\ i_{1,8,1}\ i_{1,6,2}\ i_{1,7,2}\ i_{1,8,2}\ i_{1,6,3}\ i_{1,7,3}\ i_{1,8,3}]\ v = 3$$

$$[i_{1,1}\ i_{1,2}\ i_{1,5}\ i_{1,9}\ i_{1,6,1}\ i_{1,7,1}\ i_{1,8,1}\ i_{1,6,2}\ i_{1,7,2}\ i_{1,8,2}\ i_{1,6,3}\ i_{1,7,3}\ i_{1,8,3}\ i_{1,6,4}\ i_{1,7,4}\ i_{1,8,4}]\ v = 4$$

$$[i_{1,1}\ i_{1,2}\ i_{1,5}\ i_{1,9}\ i_{1,6,1}\ i_{1,7,1}\ i_{1,8,1}\ i_{1,6,2}\ i_{1,7,2}\ i_{1,8,2}\ i_{1,6,3}\ i_{1,7,3}\ i_{1,8,3}\ i_{1,6,4}\ i_{1,7,4}\ i_{1,8,4}\ i_{1,6,5}\ i_{1,7,5}\ i_{1,8,5}]\ v = 5$$

$$[i_{1,1}\ i_{1,2}\ i_{1,5}\ i_{1,9}\ i_{1,6,1}\ i_{1,7,1}\ i_{1,8,1}\ i_{1,6,2}\ i_{1,7,2}\ i_{1,8,2}\ i_{1,6,3}\ i_{1,7,3}\ i_{1,8,3}\ i_{1,6,4}\ i_{1,7,4}\ i_{1,8,4}\ i_{1,6,5}\ i_{1,7,5}\ i_{1,8,5}\ i_{1,6,6}\ i_{1,7,6}\ i_{1,8,6}]\ v = 6$$

$$[i_{1,1}\ i_{1,2}\ i_{1,5}\ i_{1,9}\ i_{1,6,1}\ i_{1,7,1}\ i_{1,8,1}\ i_{1,6,2}\ i_{1,7,2}\ i_{1,8,2}\ i_{1,6,3}\ i_{1,7,3}\ i_{1,8,3}\ i_{1,6,4}\ i_{1,7,4}\ i_{1,8,4}\ i_{1,6,5}\ i_{1,7,5}\ i_{1,8,5}\ i_{1,6,6}\ i_{1,7,6}\ i_{1,8,6}\ i_{1,6,7}\ i_{1,7,7}\ i_{1,8,7}]\ v = 7$$

$$[i_{1,1}\ i_{1,2}\ i_{1,5}\ i_{1,9}\ i_{1,6,1}\ i_{1,7,1}\ i_{1,8,1}\ i_{1,6,2}\ i_{1,7,2}\ i_{1,8,2}\ i_{1,6,3}\ i_{1,7,3}\ i_{1,8,3}\ i_{1,6,4}\ i_{1,7,4}\ i_{1,8,4}\ i_{1,6,5}\ i_{1,7,5}\ i_{1,8,5}\ i_{1,6,6}\ i_{1,7,6}\ i_{1,8,6}\ i_{1,6,7}\ i_{1,7,7}\ i_{1,8,7}\ i_{1,6,8}\ i_{1,7,8}\ i_{1,8,8}]\ v = 8$$

$$\}$$

<Further Enhanced Type 2 PS Codebook>

In the further enhanced type 2 PS CB, the PMI value corresponds to the codebook (CB) indices $i_1$ and $i_2$. $i_1$ and $i_2$ are given by the following expressions.

$$i_1 = \{$$

$$[i_{1,2}\ i_{1,6}\ i_{1,7,1}\ i_{1,8,1}]\ v = 1$$

$$[i_{1,2}\ i_{1,6}\ i_{1,7,1}\ i_{1,8,1}\ i_{1,7,2}\ i_{1,8,2}]\ v = 2$$

$$[i_{1,2}\ i_{1,6}\ i_{1,7,1}\ i_{1,8,1}\ i_{1,7,2}\ i_{1,8,2}\ i_{1,7,3}\ i_{1,8,3}]\ v = 3$$

$$[i_{1,2}\ i_{1,6}\ i_{1,7,1}\ i_{1,8,1}\ i_{1,7,2}\ i_{1,8,2}\ i_{1,7,3}\ i_{1,8,3}\ i_{1,7,4}\ i_{1,8,4}]\ v = 4$$

$$\}$$

$$i_2 = \{$$

$$[i_{2,3,1}\ i_{2,4,1}\ i_{2,5,1}]\ v = 1$$

$$[i_{2,3,1}\ i_{2,4,1}\ i_{2,5,1}\ i_{2,3,2}\ i_{2,4,2}\ i_{2,5,2}]\ v = 2$$

$$[i_{2,3,1}\ i_{2,4,1}\ i_{2,5,1}\ i_{2,3,2}\ i_{2,4,2}\ i_{2,5,2}\ i_{2,3,3}\ i_{2,4,3}\ i_{2,5,3}]\ v = 3$$

$$[i_{2,3,1}\ i_{2,4,1}\ i_{2,5,1}\ i_{2,3,2}\ i_{2,4,2}\ i_{2,5,2}\ i_{2,3,3}\ i_{2,4,3}\ i_{2,5,3}\ i_{2,3,4}\ i_{2,4,4}\ i_{2,5,4}]\ v = 4$$

$$\}$$

<Analysis E>

A codebook design in enhancement of the enhanced type 2 CB and the further enhanced type 2 PS CB for the enhanced CSI-RS is not sufficiently studied. The codebook design may be based on at least one of the enhanced type 2 CB (Rel. 16), the further enhanced type 2 PS CB (Rel. 17), and the enhanced type 2 CB for CJT (Rel. 18).

<Embodiment E0>

A state as to whether to support/apply enhancement of the further enhanced type 2 PS CB for the enhanced CSI-RS may be defined in a specification (corresponding to a UE capability), or may be configured by RRC signaling. The state may be applied according to one of the following some application methods/application targets.

- Application method 1: The state may be applied to a specific rank, or may be applied to all the ranks in common. For example, the state may be defined/configured for ranks 5 to 8, or may be defined/configured for a specific range of ranks. The specific range may be 1 to 4, or may be 1 to 2.
- Application method 2: The state may be applied to a specific number of CSI-RS ports, or may be applied to the entire number of CSI-RS ports in common. For example, the state may be defined/configured for the number of CSI-RS ports being larger than X, or may be defined/configured for the number of CSI-RS ports being smaller than X.
- Application method 3: The state may be applied to a specific antenna configuration (n1-n2, ng-n1-n2, or ng1-ng2-n1-n2), or may be applied to a plurality of antenna configurations in common. For example, the state may be defined/configured for $N_1 \geq X$, may be defined/configured for $N_2 \geq Y$, may be defined/configured for $N_1 \geq N_2$, or may be defined/configured for $N_2 = Y$.
- Application method 4: The state may be applied to a specific parameter combination (paramCombination), or may be applied to all the parameter combinations in common. For example, the state may be defined/configured only for paramCombination with an L value smaller than a specific L value, may be defined/configured only for paramCombination with a $\beta$ value smaller than a specific $\beta$ value, or may be defined/configured only for paramCombination with a $p_v$ value smaller than a specific $p_v$ value. For example, the specific L value may be 2.
- Application method 5: The state may be applied to a specific number $N_3$ of subbands, or may be applied to a range of all the values of the number of subbands in common. For example, the state may be defined/configured for $N_3 \leq Z$.
- Application method 6: The state may be applied to a specific R value or for each different R value. For example, R may be 1 or 2. For example, the state may be defined/configured only for R = 1.
- Application method 7: The state may be applied to a specific N value (valueOfN) or for each different N value. For example, N may be 2 or 4.
- Application method 8: The state may follow two or more combinations of the above-mentioned some application methods.

A UE capability related to support of enhancement of the further enhanced type 2 PS CB for the enhanced CSI-RS may be introduced. The UE capability related to support of enhancement of the further enhanced type 2 PS CB for the enhanced CSI-RS may be introduced to one of application methods 1 to 8 described above.

According to the present embodiment, the UE/base station can appropriately recognize a case of supporting/applying enhancement of the further enhanced type 2 PS CB for the enhanced CSI-RS.

<Study E1> (Related to Study D1/D2)

For ranks 1 to 4, when the existing further enhanced type 2 PS CB is enhanced for support of the enhanced CSI-RS, it is considered that overhead of the SD beam report by $i_{1,2}$ increases due to a value of the number $P_{CSI-RS}$, such as 48, 64, 72, 96, and 128, of CSI-RS ports being larger than an existing value. As described above, $i_{1,2} \in \{0, 1, ..., C(P_{CSI-RS}/2, L) - 1\}$ in the existing further enhanced type 2 PS CB. The feedback overhead is associated with $P_{CSI-RS}$ and L. L is associated with $P_{CSI-RS}$ and $\alpha$.

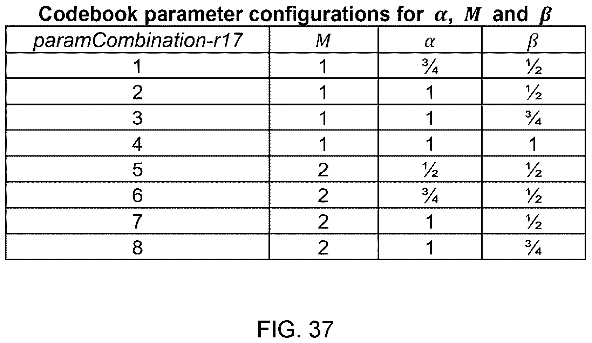

FIG. 37 shows codebook parameter combinations for the further enhanced type 2 PS CB. $\alpha$ is determined from the parameter combinations (paramCombination-r17). $\alpha$, M, and $\beta$ are common to a plurality of different ranks.

<Embodiment E1>

<<Embodiment E1.1>>

For the sake of reduction of $i_{1,2}$, L reported ports may be selected not from all the $P_{CSI-RS}$ ports but from a part or a subgroup of the $P_{CSI-RS}$ ports or $P_{CSI-RS}/2$ ports.

Selection of the L ports may follow at least one of the following some alternatives.

- Alternative 1: A part or a subgroup of the ports for selection may be defined in a specification, or may be configured by an RRC IE. For example, the UE selecting L ports from first or last $P_{CSI-RS}/M$ ports may be defined in a specification, or may be configured by an RRC IE. $i_{1,2} \in \{0, 1, ..., C(P_{CSI-RS}/M, L) - 1\}$ may hold, or $i_{1,2} \in \{0, 1, ..., C(P_{CSI-RS}/(2M), L) - 1\}$ may hold.
- Alternative 2: The $P_{CSI-RS}$ ports may be divided into M subgroups. The UE may select one subgroup, and report the selected subgroup by a new parameter $i_{1,new}$. $i_{1,new} \in \{0, 1, ... , M - 1\}$ may hold. The size (bit width) of $i_{1,new}$ may be $\log_2 M$. The UE may further report $i_{1,2}$ indicating L ports from the selected subgroup. $i_{1,2} \in \{0, 1, ..., C(P_{CSI-RS}/M, L) - 1\}$ may hold, or $i_{1,2} \in \{0, 1, ..., C(P_{CSI-RS}/(2M), L) - 1\}$ may hold. In alternative 2, the selected ports may be reported by two parameters $i_{1,2}$ and $i_{1,new}$. $i_{1,new}$ may be reported in CSI part 1. $i_{1,new}$ may be common to a plurality of layers.

A state as to whether existing port selection (principle/rule) is reused/repurposed or new port selection (principle/rule) is used may be defined in a specification (corresponding to a UE capability), or may be configured by an RRC IE. In the existing port selection, L reported ports may be selected from all the $P_{CSI-RS}$ ports. In the new port selection, L reported ports may be selected from a part or a subgroup of the $P_{CSI-RS}$ ports or the $P_{CSI-RS}/2$ ports. The state may be applied according to one of the following some application methods/application targets.

- Application method 1: The state may be applied to a specific rank, or may be applied to all the ranks in common.
- Application method 2: The state may be applied to a specific number of CSI-RS ports, or may be applied to the entire number of CSI-RS ports in common.
- Application method 3: The state may be applied to a specific antenna configuration (n1-n2, ng-n1-n2, or ng1-ng2-n1-n2), or may be applied to a plurality of antenna configurations in common.
- Application method 4: The state may be applied to a specific parameter combination (paramCombination), or may be applied to all the parameter combinations in common.
- Application method 5: The state may be applied to a specific number $N_3$ of subbands, or may be applied to a range of all the values of the number of subbands in common.
- Application method 6: The state may be applied to a specific R value or for each different R value. For example, R may be 1 or 2.
- Application method 7: The state may be applied to a specific N value (valueOfN) or for each different N value. For example, N may be 2 or 4.
- Application method 8: The state may follow two or more combinations of the above-mentioned some application methods.

A UE capability related to support of the new port selection and the report may be introduced. The UE capability related to support of the new port selection and the report may be introduced to the application target in one of application methods 1 to 8 described above.

<<Embodiment E1.2>>

For the enhanced CSI-RS, $\alpha$ or L and the parameter combinations (paramCombination) may follow at least one of the following some alternatives.

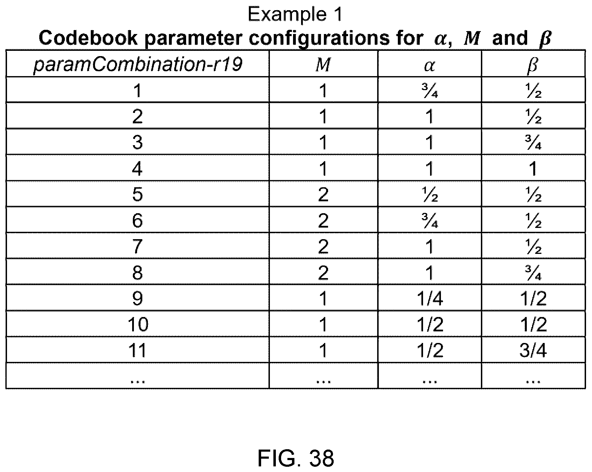

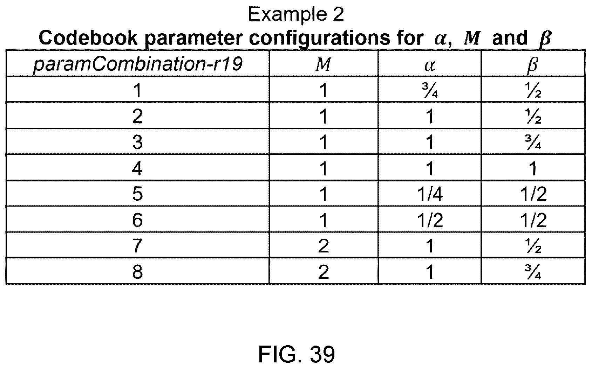

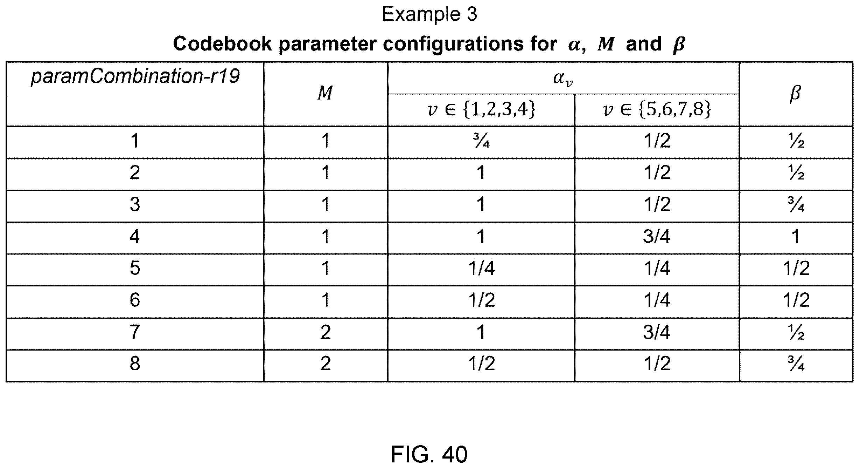

- Alternative 1: The same configuration as existing parameter combinations may be supported/applied for each application target. Alternatively, as in example 1 (FIG. 38) or example 2 (FIG. 39), the configuration of a part of the existing parameter combinations may be supported/applied. The application target may be the application target in one of application methods 1 to 8 described above (Embodiment EO/Embodiment E1.1).
- Alternative 2: New parameter combinations including at least one of an $\alpha$ value smaller than an existing value, an M value smaller than an existing value, and a $\beta$ value smaller than an existing value may be supported/applied to at least one of the enhanced CSI-RS and ranks (for example, 5 to 8) higher than existing ranks. The new parameter combinations may be supported/applied to each application target. The application target may be the application target in one of application methods 1 to 8 described above (Embodiment EO/Embodiment E1.1). The new parameter combinations may be based on a table of the existing parameter combinations, and may be defined by replacing some rows in the table. When the number of ports is large and the $\alpha$ value is smaller, the L value becomes smaller, and overhead of $i_{1,2}$ is reduced. In order to secure high performance, a larger value of the $\alpha$ value or the L value may be introduced.
- Variation: In a specific rank, the values of $\alpha$ for different layers may be different. For example, as in example 3 (FIG. 40), different values of $\alpha$ may be defined for layer $\{1, 2, 3, 4\}$ and layer $\{5, 6, 7, 8\}$. For example, different values of $\alpha$ may be

defined for layer {1, 2}, layer {3, 4}, layer {5, 6}, and layer {7, 8}.

Different parameter combinations may be configurable for different application targets. The application target may be the application target in one of application methods 1 to 8 described above (Embodiment EO/Embodiment E1.1).

According to the present embodiment, the UE can appropriately select reported SD beam groups.

<Study E2> (Related to Study D4)

In the existing further enhanced type 2 PS CB, the maximum number of non-zero coefficients (NZCs) is reported. The (actual, reported) number of NZCs for layer l is reported in CSI part 1.

The number of NZCs for each layer is limited to the maximum value $K_0 = \text{ceil}(\beta K_1 M)$. $K_l^{NZ} = \Sigma_{i=0}^{K\_1-1}\Sigma_{f=0}^{M-1}k_{l,i,f}$ (3), which is the number of NZCs for layer l, is limited to the maximum value $K_0$. $K^{NZ} = \Sigma_{l=1}^{v}K_l^{NZ}$, which is the total number of NZCs for all the layers, is limited to $2K_0$. Thus, the maximum value of the total number of NZCs for rank v = 1 is $K_0$, and the maximum value of the total number of NZCs for rank v = 2, 3, 4 is $2K_0$.

In existing specifications, the maximum number of NZCs when a high rank (for example, rank 8) is supported is not defined. When the maximum number $2K_0$ of the total number of NZCs for all the layers is reused, performance of the high rank may degrade due to excessive limitation of the total number.

<Embodiment E2>

The number of NZCs for layer l may be limited to the maximum number $K_l = \text{ceil}(\beta K_1 M)$. When $K_{1,v} = \alpha_v{}^*P_{CSI-RS}$ differs for each layer, it may be limited to $K_l = \text{ceil}(\beta K_{1,v}M)$. When $K_{1,l} = \alpha_l{}^*P_{CSI-RS}$ for layer l, it may be limited to $K_l = \text{ceil}(\beta K_{1,l}M)$.

The maximum value (limit) of the total number of NZCs for all the layers of ranks 5 to 8 of the enhanced CSI-RS may be defined. The maximum value may follow at least one of the following some options.

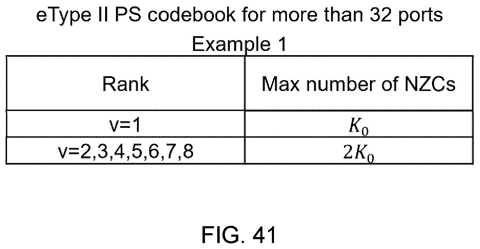

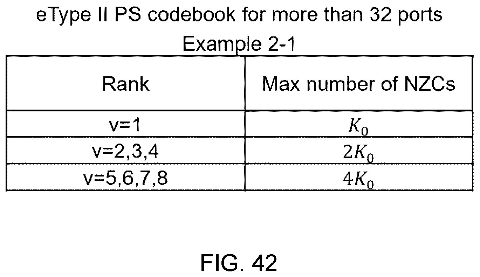

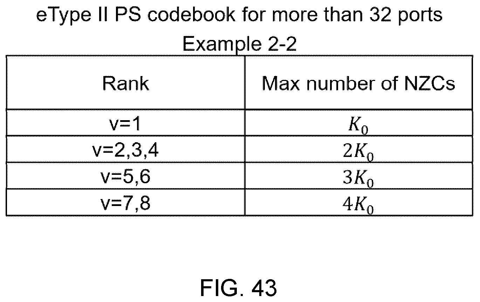

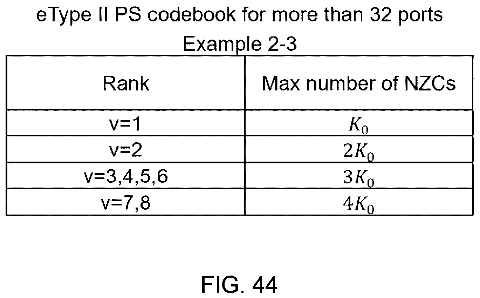

- Option 1: The maximum value of the total number of NZCs is $2K_0$, which is the same as the maximum value of the total number of NZCs for existing ranks 2 to 4 (example 1 of FIG. 41).
- Option 2: The maximum value of the total number of NZCs is associated with/dependent upon a rank. The maximum value of the total number of NZCs may be different for a different rank. For example, the maximum value may be $X{}^*K_0$. Here, X may be associated with/dependent upon a rank. The option may be applied to ranks 1 to 4 of the enhanced CSI-RS. In example 2-1 of FIG. 42, the maximum value of the total number of NZCs for v = 5, 6, 7, 8 is defined. In example 2-2 of FIG. 43, the maximum value of the total number of NZCs for v = 5, 6 and the maximum value of the total number of NZCs for v = 7, 8 are defined. In example 2-3 of FIG. 44, the maximum value of the total number of NZCs for v = 2, the maximum value of the total number of NZCs for v = 3, 4, 5, 6, and the maximum value of the total number of NZCs for v = 7, 8 are defined.

A state as to which of the above-mentioned some options is applied may be defined in a specification (corresponding to a UE capability), or may be configured by an RRC IE. The state may be applied in accordance with at least one of application methods 1 to 8 described above (Embodiment EO/Embodiment E1.1).

A UE capability related to support of the maximum value of the total number of NZCs for all the layers for the enhanced CSI-RS may be introduced. The UE capability related to support of the maximum value of the total number of NZCs for all the layers for the enhanced CSI-RS may be introduced to the target in one of application methods 1 to 8 described above (Embodiment EO/Embodiment E1.1).

According to the present embodiment, the UE can appropriately limit the total number of NZCs.

<Study E3> (Related to Study D5)

In the existing further enhanced type 2 PS CB, a bitmap indicating the position of the NZC for layer l is reported by $i_{1,7,l}$. When rank $v \leq 2$ and $K^{NZ} = K_1Mv$, $i_{1,7,l}$ for l = 1, ..., v is not reported. When reporting of all the NZCs in $v \leq 2$ is determined, the bitmap is omitted. When the maximum value of the total number of NZCs is maintained at $2K_0$, such a method cannot be applied to v > 2.

When the rank is high, overhead of the CSI report increases. For example, in rank 8, eight bitmaps are required for each layer.

In the existing CB, the strongest coefficient indicator for layer l is reported by $i_{1,8,7}$.

<Embodiment E3>

For the sake of reduction of overhead of reporting the bitmaps for each layer, a method/rule of bitmap omission for each layer may be introduced.

For rank v, a new v-bit indicator $i_{1,9}$ for indicating which bitmaps of which layer are omitted may be reported. A state as to whether or not bitmap omission is enabled may be defined in a specification (corresponding to a UE capability), or may be configured by an RRC IE. The state may follow at least one of the following some options.

- Option 1: When all the NZCs for layer l are not reported, the bitmaps for layer l are omitted (not reported). For example, if the UE determines that all the NZCs for a certain layer have an amplitude value weaker (than a specific value), the UE may determine not to report the NZCs, and the bitmaps for the layer need not be reported. In this case, there is no reporting of $i_{1,8,l}$, $i_{2,3,l}$, $i_{2,4,l}$, and $i_{2,5,l}$ for the layer l.
- Option 2: When all the NZCs for layer l are reported, the bitmaps for layer l are omitted (not reported). For example, if the UE determines that all the NZCs for a certain layer have an amplitude value stronger (than a specific value), all the NZCs may be selected (may be reported) for the UE. In this case, there is reporting of $i_{1,8,l}$, $i_{2,3,l}$, $i_{2,4,l}$, and $i_{2,5,l}$ for the layer l.
- Option 3: When $K^{NZ} = 2LM_1$, the bitmaps for all the layers are not omitted (not reported). A method of the omission may be applied in a case in which the maximum value of the total number of NZCs is defined as $X*K_0$ and the rank is X or lower. In this case, the NW can understand that the omission has occurred, based on the number of NZCs reported in CSI part 1. Thus, a report of $i_{1,9}$ need not be required.
- Option 4: Which bitmap omission rule of the above-mentioned options 1 to 3 is applied may be configured by an RRC IE.
- Option 5 (variation): A new 2v-bit indicator (2 bits for one layer) for indicating the bitmap omission rule to be applied for each layer by the UE may be reported. For example, a value 00 of the 2v-bit indicator may mean that there is no bitmap omission, a value 01 may mean the bitmap omission of option 1, and a value 10 may mean the bitmap omission of option 2.

A state as to which of the above-mentioned some options is applied may be defined in a specification (corresponding to a UE capability), or may be configured by an RRC IE. The state may be applied in accordance with at least one of application methods 1 to 7 described above (Embodiment DO/Embodiment D2).

Such a new indicator may be reported in CSI part 1. The indicator may affect the bit size of CSI part 2.

A UE capability related to support of bitmap omission may be introduced. A UE capability related to support of the new indicator (for example, the v-bit indicator $i_{1,9}$) for indicating which bitmaps of which layer are omitted may be introduced. A UE capability related to support of the new indicator (for example, the 2v-bit indicator $i_{1,9}$) for indicating the bitmap omission rule to be applied for each layer may be introduced.

According to the present embodiment, the UE can appropriately determine whether to report the bitmap indicating the position of the NZC.

<Study E4> (Related to Study D6)

In the existing further enhanced type 2 PS CB, (when Embodiment D1/D2/D3/D5/D6 is applied,) $i_1$ and $i_2$ for ranks 5 to 8 are not clear.

<Embodiment E4>

For ranks 5 to 8, $i_1$ and $i_2$ may be enhanced. The enhancement may follow at least one of the following some examples.

- Example 1: $i_1$ and $i_2$ for ranks 5 to 8 may be given by the following expressions.

$i_1$ = {

    $[i_{1,2} \; i_{1,6} \; i_{1,7,1} \; i_{1,8,1} \; i_{1,7,2} \; i_{1,8,2} \; i_{1,7,3} \; i_{1,8,3} \; i_{1,7,4} \; i_{1,8,4} \; i_{1,7,5}$
$i_{1,8,5}]$ v = 5

    $[i_{1,2} \; i_{1,6} \; i_{1,7,1} \; i_{1,8,1} \; i_{1,7,2} \; i_{1,8,2} \; i_{1,7,3} \; i_{1,8,3} \; i_{1,7,4} \; i_{1,8,4} \; i_{1,7,5} \; i_{1,8,5}$
$i_{1,7,6} \; i_{1,8,6}]$ v = 6

    $[i_{1,2} \; i_{1,6} \; i_{1,7,1} \; i_{1,8,1} \; i_{1,7,2} \; i_{1,8,2} \; i_{1,7,3} \; i_{1,8,3} \; i_{1,7,4} \; i_{1,8,4} \; i_{1,7,5} \; i_{1,8,5}$
$i_{1,7,6} \; i_{1,8,6} \; i_{1,7,7} \; i_{1,8,7}]$ v = 7

    $[i_{1,2} \; i_{1,6} \; i_{1,7,1} \; i_{1,8,1} \; i_{1,7,2} \; i_{1,8,2} \; i_{1,7,3} \; i_{1,8,3} \; i_{1,7,4} \; i_{1,8,4} \; i_{1,7,5} \; i_{1,8,5}$
$i_{1,7,6} \; i_{1,8,6} \; i_{1,7,7} \; i_{1,8,7} \; i_{1,7,8} \; i_{1,8,8}]$ v = 8

}

$i_2$ = {

    $[i_{2,3,1} \; i_{2,4,1} \; i_{2,5,1} \; i_{2,3,2} \; i_{2,4,2} \; i_{2,5,2} \; i_{2,3,3} \; i_{2,4,3} \; i_{2,5,3} \; i_{2,3,4} \; i_{2,4,4}$
$i_{2,5,4} \; i_{2,3,5} \; i_{2,4,5} \; i_{2,5,5}]$ v = 5

    $[i_{2,3,1} \; i_{2,4,1} \; i_{2,5,1} \; i_{2,3,2} \; i_{2,4,2} \; i_{2,5,2} \; i_{2,3,3} \; i_{2,4,3} \; i_{2,5,3} \; i_{2,3,4} \; i_{2,4,4}$
$i_{2,5,4} \; i_{2,3,5} \; i_{2,4,5} \; i_{2,5,5} \; i_{2,3,6} \; i_{2,4,6} \; i_{2,5,6}]$ v = 6

    $[i_{2,3,1} \; i_{2,4,1} \; i_{2,5,1} \; i_{2,3,2} \; i_{2,4,2} \; i_{2,5,2} \; i_{2,3,3} \; i_{2,4,3} \; i_{2,5,3} \; i_{2,3,4} \; i_{2,4,4}$
$i_{2,5,4} \; i_{2,3,5} \; i_{2,4,5} \; i_{2,5,5} \; i_{2,3,6} \; i_{2,4,6} \; i_{2,5,6} \; i_{2,3,7} \; i_{2,4,7} \; i_{2,5,7}]$ v = 7

    $[i_{2,3,1} \; i_{2,4,1} \; i_{2,5,1} \; i_{2,3,2} \; i_{2,4,2} \; i_{2,5,2} \; i_{2,3,3} \; i_{2,4,3} \; i_{2,5,3} \; i_{2,3,4} \; i_{2,4,4}$
$i_{2,5,4} \; i_{2,3,5} \; i_{2,4,5} \; i_{2,5,5} \; i_{2,3,6} \; i_{2,4,6} \; i_{2,5,6} \; i_{2,3,7} \; i_{2,4,7} \; i_{2,5,7} \; i_{2,3,8} \; i_{2,4,8}$
$i_{2,5,8}]$ v = 8

}

- Example 2: Embodiment E1 may be applied, and the new indicator $i_{1,new}$ may be reported. $i_1$ for ranks 1 to 8 may be given by the following expression.

$$i_1 = \{$$

$$[i_{1,2} \; i_{1,new} \; i_{1,6} \; i_{1,7,1} \; i_{1,8,1}] \quad v = 1$$

$$[i_{1,2} \; i_{1,new} \; i_{1,6} \; i_{1,7,1} \; i_{1,8,1} \; i_{1,7,2} \; i_{1,8,2}] \quad v = 2$$

$$[i_{1,2} \; i_{1,new} \; i_{1,6} \; i_{1,7,1} \; i_{1,8,1} \; i_{1,7,2} \; i_{1,8,2} \; i_{1,7,3} \; i_{1,8,3}] \quad v = 3$$

$$[i_{1,2} \; i_{1,new} \; i_{1,6} \; i_{1,7,1} \; i_{1,8,1} \; i_{1,7,2} \; i_{1,8,2} \; i_{1,7,3} \; i_{1,8,3} \; i_{1,7,4} \; i_{1,8,4}] \quad v = 4$$

$$[i_{1,2} \; i_{1,new} \; i_{1,6} \; i_{1,7,1} \; i_{1,8,1} \; i_{1,7,2} \; i_{1,8,2} \; i_{1,7,3} \; i_{1,8,3} \; i_{1,7,4} \; i_{1,8,4} \; i_{1,7,5} \; i_{1,8,5}] \quad v = 5$$

$$[i_{1,2} \; i_{1,new} \; i_{1,6} \; i_{1,7,1} \; i_{1,8,1} \; i_{1,7,2} \; i_{1,8,2} \; i_{1,7,3} \; i_{1,8,3} \; i_{1,7,4} \; i_{1,8,4} \; i_{1,7,5} \; i_{1,8,5} \; i_{1,7,6} \; i_{1,8,6}] \quad v = 6$$

$$[i_{1,2} \; i_{1,new} \; i_{1,6} \; i_{1,7,1} \; i_{1,8,1} \; i_{1,7,2} \; i_{1,8,2} \; i_{1,7,3} \; i_{1,8,3} \; i_{1,7,4} \; i_{1,8,4} \; i_{1,7,5} \; i_{1,8,5} \; i_{1,7,6} \; i_{1,8,6} \; i_{1,7,7} \; i_{1,8,7}] \quad v = 7$$

$$[i_{1,2} \; i_{1,new} \; i_{1,6} \; i_{1,7,1} \; i_{1,8,1} \; i_{1,7,2} \; i_{1,8,2} \; i_{1,7,3} \; i_{1,8,3} \; i_{1,7,4} \; i_{1,8,4} \; i_{1,7,5} \; i_{1,8,5} \; i_{1,7,6} \; i_{1,8,6} \; i_{1,7,7} \; i_{1,8,7} \; i_{1,7,8} \; i_{1,8,8}] \quad v = 8$$

$$\}$$

<Codebook for CJT>

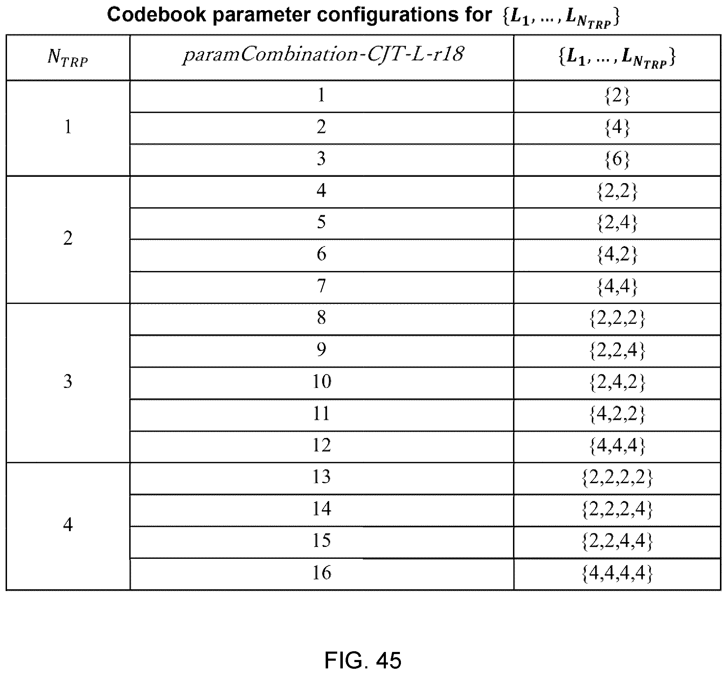

FIG. 45 shows codebook parameter combinations for $\{L_1, ..., L_{N\_TRP}\}$ in the enhanced type 2 CB for CJT. In the table, $N_{TRP}$, the parameter combinations (paramCombination-CJT-L-r18), and $\{L_1, ..., L_{N\_TRP}\}$ are associated.

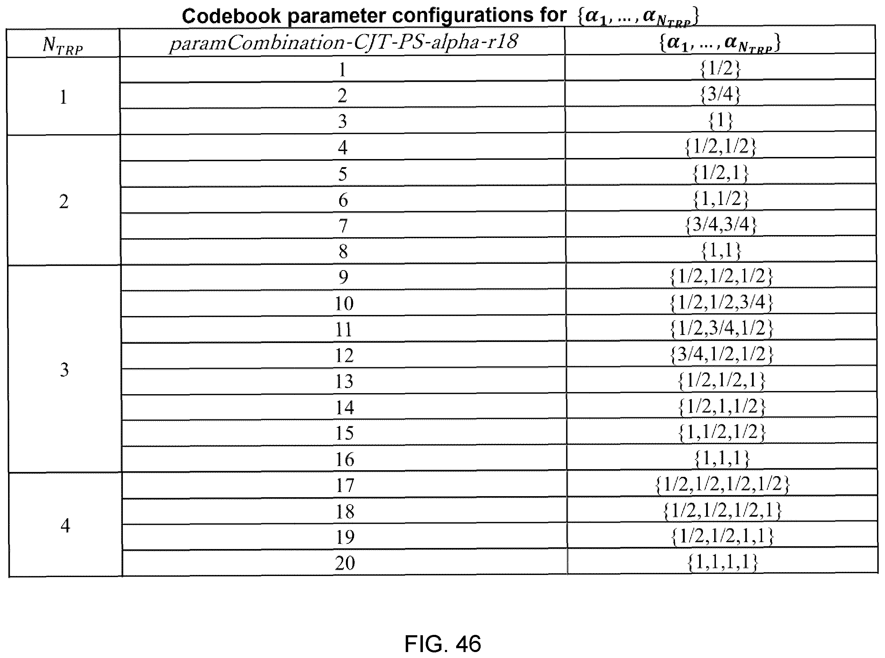

FIG. 46 shows codebook parameter combinations for $\{L_1, ..., L_{N\_TRP}\}$ in the further enhanced type 2 PS CB for CJT. In the table, $N_{TRP}$, the parameter combinations (paramCombination-CJT-PS-alpha-r18), and $\{\alpha_1, ..., \alpha_{N\_TRP}\}$ are associated.

<Analysis F>

In Rel. 18, multi-TRP CJT CSI (the enhanced type 2 CB and the further enhanced type 2 PS CB for CJT) in which up to four CSI-RS resources are configured for measurement/reporting of CSI is under study. On the other hand, in order to provide the enhanced CSI-RS, a configuration similar to the codebook for CJT is under study. In this case, in order to support the enhanced CSI-RS, the enhanced type 2 CB and the further enhanced type 2 PS CB for multi-TRP CJT, instead of the enhanced type 2 CB and the further enhanced type 2 PS CB for a single TRP, may be enhanced.

<Embodiment F0>

<<Embodiment F0A>>

When a plurality of CSI-RS resources (for example, up to four CSI-RS resources) for providing an enhanced CSI-RS configuration are configured, a state as to whether to support/apply enhancement of the enhanced type 2 CB for CJT may be defined in a specification (corresponding to a UE capability), or may be configured by RRC signaling. The state may be applied according to one of the following some application methods/application targets.

- Application method 1: The state may be applied to a specific rank, or may be applied to all the ranks in common. For example, the state may be defined/configured for ranks 5 to 8, or may be defined/configured for a specific range of ranks. The specific range may be 1 to 4, or may be 1 to 2.
- Application method 2: The state may be applied to a specific number of CSI-RS ports, or may be applied to the entire number of CSI-RS ports in common. For example, the state may be defined/configured for the number of CSI-RS ports being larger than X, or may be defined/configured for the number of CSI-RS ports being smaller than X.
- Application method 3: The state may be applied to a specific antenna configuration (n1-n2, ng-n1-n2, or ng1-ng2-n1-n2), or may be applied to a plurality of antenna configurations in common. For example, the state may be defined/configured for $N_1 \geq X$, may be defined/configured for $N_2 \geq Y$, may be defined/configured for $N_1 \geq N_2$, or

may be defined/configured for $N_2 = Y$.

- Application method 4: The state may be applied to a specific parameter combination (paramCombination), or may be applied to all the parameter combinations in common. For example, the state may be defined/configured only for paramCombination with an L value smaller than a specific L value, may be defined/configured only for paramCombination with a $\beta$ value smaller than a specific $\beta$ value, or may be defined/configured only for paramCombination with a $p_v$ value smaller than a specific $p_v$ value. For example, the specific L value may be 2.
- Application method 5: The state may be applied to a specific number $N_3$ of subbands, or may be applied to a range of all the values of the number of subbands in common. For example, the state may be defined/configured for $N_3 \leq Z$.
- Application method 6: The state may be applied to a specific R value or for each different R value. For example, R may be 1 or 2. For example, the state may be defined/configured only for R = 1.
- Application method 7: The state may be applied to a specific number ($N_{TRP}$) of CSI-RS resources or for each different number of CSI-RS resources. For example, it may be applied only to $N_{TRP} = 4$.
- Application method 8: The state may follow two or more combinations of the above-mentioned some application methods.

A UE capability related to support of enhancement of the enhanced type 2 CB for CJT for the enhanced CSI-RS may be introduced. The UE capability related to support of enhancement of the enhanced type 2 CB for CJT for the enhanced CSI-RS may be introduced to one of application methods 1 to 8 described above.

According to the present embodiment, the UE/base station can appropriately recognize a case in which enhancement of the enhanced type 2 CB for CJT for the enhanced CSI-RS is supported/configured.

<<Embodiment F0B>>

When a plurality of CSI-RS resources (for example, up to four CSI-RS resources) for providing an enhanced CSI-RS configuration are configured, a state as to whether to support/apply enhancement of the further enhanced type 2 PS CB for CJT may be defined in a specification (corresponding to a UE capability), or may be configured by RRC signaling. The state may be applied in accordance with one of the application methods/application targets described above (Embodiment F0A).

A UE capability related to support of enhancement of the further enhanced type 2 PS CB for CJT for the enhanced CSI-RS may be introduced. The UE capability related to support of enhancement of the further enhanced type 2 PS CB for CJT for the enhanced CSI-RS may be introduced to one of application methods 1 to 8 described above.

According to the present embodiment, the UE/base station can appropriately recognize a case in which enhancement of the further enhanced type 2 PS CB for CJT for the enhanced CSI-RS is supported/configured.

<Study F1>

Regarding selection/reporting of the SD beam, a difference of single TRP CSI for the enhanced CSI-RS from multi-TRP CSI may be that the same SD beam is selected from all the ports/TRPs. In the single TRP CSI for the enhanced CSI-RS, only one value of $i_{1,1} = [i_{1,1,1} \ldots i_{1,1,N}]$ may be required, and only one value of $i_{1,2} = [i_{1,2,1} \ldots i_{1,2,N}]$ may be required.

<Embodiment F1>

When N CSI-RS resources for providing the enhanced CSI-RS configuration are configured based on the enhanced type 2 CB for CJT or the further enhanced type 2 PS CB for CJT, only one index from N indices $\{i_{1,1,1}, \ldots, i_{1,1,N}\}$ may be selected/reported for $i_{1,1}$, and only one index from N indices $\{i_{1,2,1}, \ldots, i_{1,2,N}\}$ may be selected/reported for $i_{1,2}$ (new SD beam selection/new port selection). The N indices for $i_{1,1}/i_{1,2}$ may correspond to the N CSI-RS resources. Selection from the N indices may follow at least one of the following some alternatives.

- Alternative 1: Selection of a first, last, or specific CSI-RS resource may be defined in a specification. Which CSI-RS resource is selected may be configured by an RRC IE.
- Alternative 2: The CSI-RS resource selected by the UE may be reported via $i_{1,new}$. The UE may select one from N values $\{0, 1, \ldots, N - 1\}$ for $i_{1,new}$. The size (bit width) of $i_{1,new}$ may be $\log_2 N$. In alternative 2, the SD beam or the CSI-RS port may be reported by three parameters $i_{1,1}$, $i_{1,2}$, and $i_{1,new}$. $i_{1,new}$ may be reported in CSI part 1. $i_{1,new}$ may be common to a plurality of layers.

It may be assumed that the selected/reported values of $i_{1,1,n}$ and $i_{1,2,n}$ are applied to all the N CSI-RS resources.

A state as to whether alternative 1 is applied or alternative 2 is applied may be defined in a specification (corresponding to a UE capability), or may be configured by an RRC IE. The state may be applied in accordance with one of application methods 1 to 8 described above (Embodiment F0A).

A UE capability related to support of the new SD beam selection or the new port selection and the report may be introduced. The UE capability related to support of the new SD beam selection or the new port selection and the report may be introduced to the application target in one of application methods 1 to 8 described above (Embodiment F0A).

According to the present embodiment, the UE can appropriately report the CSI-RS resources corresponding to the reported SD beams/ports.

<Study F2>

When the enhanced CSI-RS based on the codebook for CJT is supported, it is considered that some unnecessary functions are disabled and some parameters/configurations are limited.

<Embodiment F2>

When N CSI-RS resources for providing the enhanced CSI-RS configuration are configured based on the enhanced type 2 CB for CJT or the further enhanced type 2 PS CB for CJT, the configuration need not be expected or may be limited in accordance with at least one of the following some options.

- Option 1: The UE does not expect the configuration of $N_L > 1$ combinations from the values of $\{L_1, ..., L_{TRP}\}$. Thus, the UE need not be required to report a combination selected from $N_L$ combinations. Option 1 may follow at least one of the following some options 1-x.

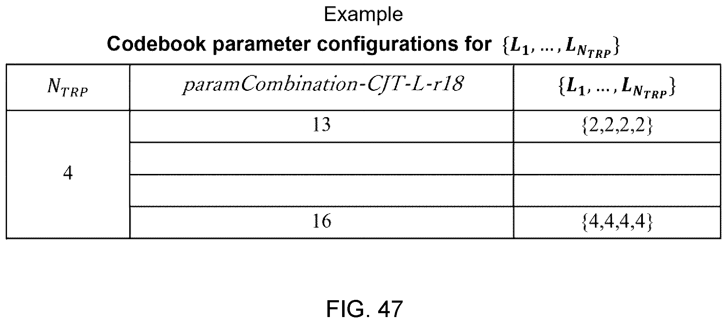

  -- Option 1-1: The UE can be configured with only one combination of the values of $\{L_1, ..., L_{TRP}\}$. $L_n$ for a plurality of values of n may have the same value. The UE can be configured with only one combination of the values of $\{\alpha_1, ..., \alpha_{TRP}\}$. $\alpha_n$ for a plurality of values of n may have the same value. In the example of FIG. 47, when $N_{TRP} = 4$ is supported/applied, two combinations of the values of $\{L_1, ..., L_{TRP}\}$ may be supported/applied.
  -- Option 1-2: The UE can be configured with only the configuration of one L value. The L value can be applied to N CSI-RS resources. The UE can be configured with only the configuration of one $\alpha$ value. The $\alpha$ value can be applied to N CSI-RS resources. In this case, Embodiment D2 or Embodiment E1.2 may be reused/repurposed for the parameter combinations. For the enhanced CSI-RS, the N CSI-RS resources may have the same number of ports and the configuration related to the SD/FD beams. Consequently, a parameter configuration for a single TRP can be reused/repurposed, instead of using a parameter configuration for a multi-TRP set to the same value.

- Option 2: restrictedCMR-Selection may be configured/assumed. The UE need not be permitted to select a part of a plurality of configured CSI-RS resources. In this case, the UE need not be required to report the selected CSI-RS resources.
- Option 3: For the codebook mode configuration, configuration of mode 1 need not be expected, and mode 2 may be configured/assumed.

According to the present embodiment, the UE can be configured with appropriate parameters.

<Embodiment F3>

In a case in which N CSI-RS resources for providing the enhanced CSI-RS configuration are configured based on the enhanced type 2 CB for CJT, Embodiment D3/D4/D5/D6 may be applied.

In a case in which N CSI-RS resources for providing the enhanced CSI-RS configuration are configured based on the further enhanced type 2 PS CB for CJT, Embodiment E2/E3/E4 may be applied.

According to the present embodiment, the UE can appropriately use the codebook for CJT for the enhanced CSI-RS.

<Analysis G>

As described above (CSI processing criteria), CPU occupation ($O_{CPU}$, the number of CPUs consumed) differs depending on a CSI type.

<Embodiment G1>

In the CSI processing for the enhanced CSI-RS, CPU occupation may be defined for at least one of the following some codebook types.

- Type 1 single-panel CB for the enhanced CSI-RS.
- Type 1 multi-panel CB for the enhanced CSI-RS.
- Type 2 CB for the enhanced CSI-RS (based on the existing type 2 CB).
- Type 2 PS CB for the enhanced CSI-RS (based on the existing type 2 PS CB).
- Type 2 CB for the enhanced CSI-RS, based on the enhanced type 2 CB for CJT.
- Type 2 PS CB for the enhanced CSI-RS, based on the further enhanced type 2 PS CB for CJT.

One or more CPU occupation rules may be defined. The rule(s) may depend on at least one of the following some cases, or may differ depending on a value of at least one of the following some cases.

- Codebook type.
- Number of CSI-RS ports. Number of CSI-RS ports for each CSI-RS resource. Number of CSI-RS ports of all the CSI-RS resources.
- Number of CSI-RS resources. Number of CSI-RS resources for each value of the number of CSI-RS ports.
- Antenna configuration (n1-n2, ng-n1-n2, or ng1-ng2-n1-n2).
- Rank configuration.
- Parameter combination (paramCombination) configuration.
- Report quantity (reportQuantity) configuration.
- Two or more combinations of the above-mentioned some cases.

According to the present embodiment, the UE/base station can appropriately determine/recognize CPU occupation of the CSI processing for the enhanced CSI-RS.

<Embodiment G2>

The CPU occupation rule may follow at least one of the following some options.

- Option 1: $O_{CPU} = K_S$. $K_S$ may be the number of CSI-RS resources for channel measurement. $K_S$ may be 1. Supported values of $K_S$ may depend on the codebook type. For example, $K_S \geq 1$ may be supported for the type 1 CB (type 1 single-panel CB/type 1 multi-panel CB), and only $K_S = 1$ may be supported for the type 2 CB (enhanced type 2 CB/further enhanced type 2 PS CB).
- Option 2: $O_{CPU} = X*K_S$ or $O_{CPU} = \Sigma_{i=0}^{K\_S} X_i$. $K_S$ may be the number of CSI-RS resources for channel measurement. X or $X_i$ may be reported by a UE capability. X or $X_i$ may depend on at least one of some cases in Embodiment G1. $K_S$ may be 1. For example, X may be 1 for CSI-RS resources using more than 32 and 64 or less ports, and X may be 2 for CSI-RS resources using more than 64 ports. For example, X may be 1 for CSI-RS resources using 128 or less ports and the type 1 CB, X may be 2 for CSI-RS resources using more than 32 and 64 or less ports and the type 2 CB/type 2 PS CB, and X may be 3 for CSI-RS resources using more than 64 ports and the type 2 CB/type 2 PS CB.
- Option 2a: $O_{CPU} = X*M$. M may be the number of CSI-RS ports configured for channel measurement. M may be defined in a specification, may be reported by a UE capability, or may be configured by a higher layer parameter. For example, M may be 32.
- Option 3: $O_{CPU} = X + K_S$ or $O_{CPU} = K_S + \Sigma_{i=0}^{K\_S} X_i$. $K_S$ may be the number of CSI-RS resources for channel measurement. X or $X_i$ may be reported by a UE capability. X or $X_i$ may depend on at least one of some cases in Embodiment G1.
- Option 4: The CPU occupation rule may be a reuse/repurposing of the above-described CPU occupation rule defined for the CJT CSI, or may be an update/enhancement of the above-described CPU occupation rule defined for the CJT CSI. For example, $O_{CPU}$ may be $Y_1*X*N_{TRP}$, or $O_{CPU}$ may be $(X + Y_2)*N_{TRP}$. For example, for the CSI-RS having more than 32 ports, $Y_1$ or $Y_2$ may be reported by a UE capability. For example, for the CSI-RS having 32 or less ports, $Y_1$ may be 1, or $Y_2$ may be 0.

According to the present embodiment, the UE/base station can use an appropriate CPU occupation rule for the enhanced CSI-RS.

<CSI Computation Time>

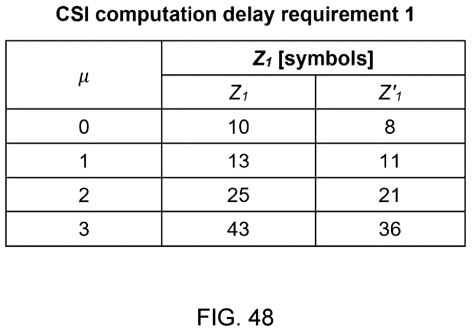

CSI computation delay requirement 1 (FIG. 48) described above (UE CSI computation time) indicates $(Z_1, Z'_1)$ [symbols] for $\mu \in \{0, 1, 2, 3\}$.

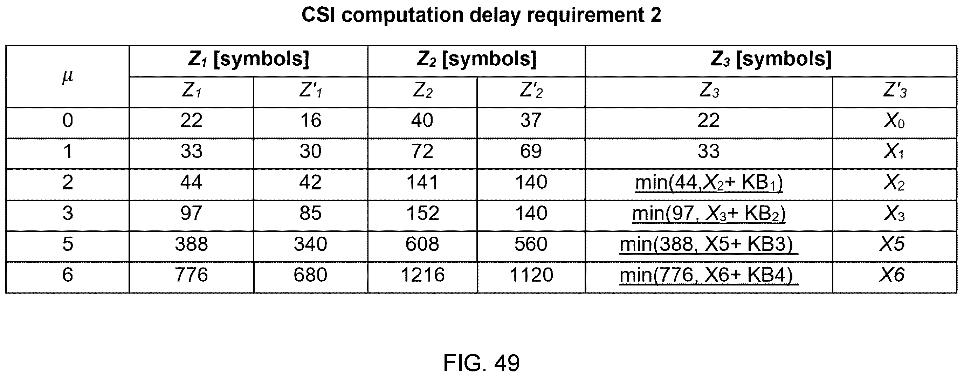

CSI computation delay requirement 2 (FIG. 49) described above (UE CSI computation time) indicates $(Z_1, Z'_1)$, $(Z_2, Z'_2)$, and $(Z_3, Z'_3)$ [symbols] for $\mu \in \{0, 1, 2, 3, 4, 5, 6\}$.

<Embodiment G3>

In the CSI processing for the enhanced CSI-RS, the CSI computation time may be defined for at least one of the following some codebook types.

- Type 1 single-panel CB for the enhanced CSI-RS.
- Type 1 multi-panel CB for the enhanced CSI-RS.
- Type 2 CB for the enhanced CSI-RS (based on the existing type 2 CB).
- Type 2 PS CB for the enhanced CSI-RS (based on the existing type 2 PS CB).
- Type 2 CB for the enhanced CSI-RS, based on the enhanced type 2 CB for CJT.
- Type 2 PS CB for the enhanced CSI-RS, based on the further enhanced type 2 PS CB for CJT.

One or more CSI computation times may be defined. The rule(s) may depend on at least one of the following some cases, or may differ depending on a value of at least one of the following some cases.

- Codebook type.
- Number of CSI-RS ports. Number of CSI-RS ports for each CSI-RS resource. Number of CSI-RS ports of all the CSI-RS resources.
- Number of CSI-RS resources. Number of CSI-RS resources for each value of the number of CSI-RS ports.
- Antenna configuration (n1-n2, ng-n1-n2, or ng1-ng2-n1-n2).
- Rank configuration.
- Parameter combination (paramCombination) configuration.
- Report quantity (reportQuantity) configuration.
- Two or more combinations of the above-mentioned some cases.

According to the present embodiment, the UE/base station can appropriately determine/recognize the CSI computation time for the enhanced CSI-RS.

<Embodiment G4>

The CSI computation time may follow at least one of the following some options.

- Option 1: $(Z(m), Z'(m))$ reuses/repurposes $(Z_2, Z'_2)$ of CSI computation delay requirement 2 described above.
- Option 2: $(Z(m), Z'(m))$ reuses/repurposes $(Z_2 + r, Z'_2 + r)$ defined for the codebook for CJT described above. The value of r may depend on at least one of some cases in Embodiment G3. The value of r may be reported by the UE as a UE capability for each of some cases in Embodiment G3.
- Option 3: $(Z(m), Z'(m))$ reuses/repurposes $(Z_2 + r + s, Z'_2 + r + s)$ defined for the codebook for CJT described above. s may be a new parameter for the codebook for the enhanced CSI-RS. The value of s may depend on at least one of some cases in Embodiment G3. The value of s may be reported by the UE as a UE capability for each of some cases in Embodiment G3.
- Option 4: In option 2/3, the UE may report a value of at least one of r and s. A candidate of the value of at least one of r and s may be 0.
- Option 5: The UE may report which option of options 1 to 4 is to be supported as a UE capability.

According to the present embodiment, the UE/base station can determine appropriate CSI computation time for the enhanced CSI-RS.

<Supplements>

{Notification of Information to UE}
Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.
When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

{Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

{Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:

- Support of specific processing/operation/control/information of at least one of the above-described embodiments.
- Support of 48, 64, 72, 96, or 128 ports for CSI measurement.
- Support of a configuration of at least one of $(N_1, N_2)$ and $(O_1, O_2)$ for more than 32 ports (48, 64, 72, 96, or 128 ports). The UE supports a configuration of at least one of $(N_1, N_2)$ and $(O_1, O_2)$ for a certain type of codebook/CSI.
- Support of a configuration of at least one of ng-n1-n2 and $(O_1, O_2)$ for more than 32 ports (48, 64, 72, 96, or 128 ports). Support of a configuration of at least one of ng-n1-n2 and $(O_1, O_2)$ for a certain type of codebook/CSI.
- Support of a configuration of at least one of ng1-ng2-n1-n2 and $(O_1, O_2)$ for more than 32 ports (48, 64, 72, 96, or 128 ports). Support of a configuration of at least one of ng1-ng2-n1-n2 and $(O_1, O_2)$ for a certain type of codebook/CSI.
- The UE supports $(O_1, O_2)$ specific to a rank or $(O_1, O_2)$ common to a rank.
- Support of different (SD) beam selection for a different layer for each of at least one of the rank, the number of CSI-RS ports, the antenna configuration, and the UE. The UE supports a different beam defined/configured for a different layer. Support of a report of $i_{1,3}$ for selection of a different beam for a different layer.
- Support of codebook mode 1 or 2 for each of at least one of the rank, the number of CSI-RS ports, the antenna configuration, and the UE.
- Support of codebook structure A or B for each of at least one of the rank, the number of CSI-RS ports, the antenna configuration, and the UE. Support of an additional report of a phase difference over a plurality of antenna ports/plurality of port groups.
- Support of a different range of (SD) beam selection for each of at least one of the rank, the number of CSI-RS ports, the antenna configuration, and the UE.
- Support of a type 1 single-panel codebook/type 1 multi-panel codebook for each of at least one of the rank, the number of CSI-RS ports, the antenna configuration, and the UE.
- Support of at least one of a type 1 single-panel codebook, a type 1 multi-panel codebook, a specific codebook type, and a specific codebook mode for each of at least one of the rank, the number of CSI-RS ports, the antenna configuration, and the UE. For example, support of a specific codebook type of ranks 1 to 4. For example, support of a specific codebook type of ranks 5 to 8.
- Support of selection of a different (SD) beam for a different layer for each of at least one of the rank, the number of CSI-RS ports, the antenna configuration, and the UE. Support of a different beam defined for a different layer. Support of a report of $i_{1,3}$ for selection of a different beam for a different layer.
- Support of an inter-panel phase difference report, and a maximum number of reported phase difference values. Whether the maximum number is common to two polarizations of one panel or is specific to a polarization for each panel.
- Support of omission of a phase difference between a plurality of polarizations for a specific layer for each of at least one of the rank, the number of CSI-RS ports, the antenna configuration, and the UE.
- Whether a reported phase difference between a plurality of polarizations is common to all the panels or is specific to a panel/polarization.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of operations of the above-described embodiments, any RRC parameter for a specific release (for example, Rel. 18/19), or the like.

When not supporting at least one of the specific UE capabilities or not configured with the specific information, the UE may apply operation of Rel. 15/16, for example.

(Supplementary Note)

Regarding one embodiment of the present disclosure, the following supplementary notes of the invention will be given.

{Supplementary Note 1}

A terminal including:

a receiving section that receives a configuration of an enhanced codebook based on an enhanced type 2 codebook for a channel state information (CSI)-reference signal (RS) using more than 32 ports; and
a control section that controls, based on the configuration, a report of a precoding matrix indicator (PMI) based on the enhanced codebook.

{Supplementary Note 2}

The terminal according to supplementary note 1, wherein the control section determines support or application of the enhanced codebook, based on at least one of a rank, a number of CSI-RS ports, an antenna configuration, a parameter combination, a number of subbands, and a ratio of a channel quality indicator (CQI) subband size to a PMI subband size.

{Supplementary Note 3}

The terminal according to supplementary note 1 or 2, wherein the control section selects a beam to be reported from a part of a plurality of beams configured by the configuration.

{Supplementary Note 4}

The terminal according to any one of supplementary notes 1 to 3, wherein the configuration includes a parameter combination for ranks 5 to 8.

(Supplementary Note)

Regarding one embodiment of the present disclosure, the following supplementary notes of the invention will be given.

{Supplementary Note 1}

A terminal including:

a receiving section that receives a configuration of an enhanced codebook based on an enhanced type 2 codebook for a channel state information (CSI)-reference signal (RS) using more than 32 ports and a rank higher than 4; and
a control section that controls, based on the configuration, a report of a precoding matrix indicator (PMI) based on the enhanced codebook.

{Supplementary Note 2}

The terminal according to supplementary note 1, wherein a number of non-zero coefficients for one layer is limited based on a number of frequency domain bases for the one layer.

{Supplementary Note 3}

The terminal according to supplementary note 1 or 2, wherein the report includes an indicator indicating a layer corresponding to omission of a report of a bitmap indicating a position of a non-zero coefficient.

{Supplementary Note 4}

The terminal according to any one of supplementary notes 1 to 3, wherein the report includes an indicator indicating a beam for ranks 5 to 8.

(Supplementary Note)

Regarding one embodiment of the present disclosure, the following supplementary notes of the invention will be given.

{Supplementary Note 1}

A terminal including:

a receiving section that receives a configuration of an enhanced codebook based on a further enhanced type 2 port selection codebook for a channel state information (CSI)-reference signal (RS) using more than 32 ports; and
a control section that controls, based on the configuration, a report of a precoding matrix indicator (PMI) based on the enhanced codebook.

{Supplementary Note 2}

The terminal according to supplementary note 1, wherein the control section determines support or application of the enhanced codebook, based on at least one of a rank, a number of CSI-RS ports, an antenna configuration, a parameter combination, a number of subbands, a ratio of a channel quality indicator (CQI) subband size to a PMI subband size, and a window size of a frequency domain base.

{Supplementary Note 3}

The terminal according to supplementary note 1 or 2, wherein the control section selects a port to be reported from a part of a plurality of CSI-RS ports configured by the configuration.

{Supplementary Note 4}

The terminal according to any one of supplementary notes 1 to 3, wherein the configuration includes a parameter combination for ranks 5 to 8.

(Supplementary Note)

Regarding one embodiment of the present disclosure, the following supplementary notes of the invention will be given.

{Supplementary Note 1}

A terminal including:

a receiving section that receives a configuration of an enhanced codebook based on a codebook for coherent joint transmission for a channel state information (CSI)-reference signal (RS) using more than 32 ports; and
a control section that controls, based on the configuration, a report of a precoding matrix indicator (PMI) based on the enhanced codebook.

{Supplementary Note 2}

The terminal according to supplementary note 1, wherein the control section determines support or application of the enhanced codebook, based on at least one of a rank, a number of CSI-RS ports, an antenna configuration, a parameter combination, a number of subbands, a ratio of a channel quality indicator (CQI) subband size to a PMI subband size, and a number of CSI-RS resources.

{Supplementary Note 3}

The terminal according to supplementary note 1 or 2, wherein the control section selects a resource to be reported from a part of a plurality of CSI-RS resources configured by the configuration.

{Supplementary Note 4}

The terminal according to any one of supplementary notes 1 to 3, wherein the configuration includes a limited parameter combination.

(Supplementary Note)

Regarding one embodiment of the present disclosure, the following supplementary notes of the invention will be given.

{Supplementary Note 1}

A terminal including: a receiving section that receives a configuration of a report of channel state information (CSI) for a CSI-reference signal (RS) using more than 32 ports; and
a control section that determines, based on the configuration, at least one of a number of CSI processing units occupied in CSI processing and CSI computation time.

{Supplementary Note 2}

The terminal according to supplementary note 1, wherein the control section determines at least one of the number of CSI processing units and the CSI computation time, based on at least one of a codebook type, a number of CSI-RS ports, a number of CSI-RS resources, an antenna configuration, a rank, a parameter combination, and report quantity.

{Supplementary Note 3}

The terminal according to supplementary note 1 or 2, wherein the control section determines the number of CSI processing units, based on at least one of a codebook type, a number of CSI-RS resources, and a value reported as capability information.

{Supplementary Note 4}

The terminal according to any one of supplementary notes 1 to 3, wherein the control section determines the CSI computation time, based on a subcarrier spacing and a value reported as capability information.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

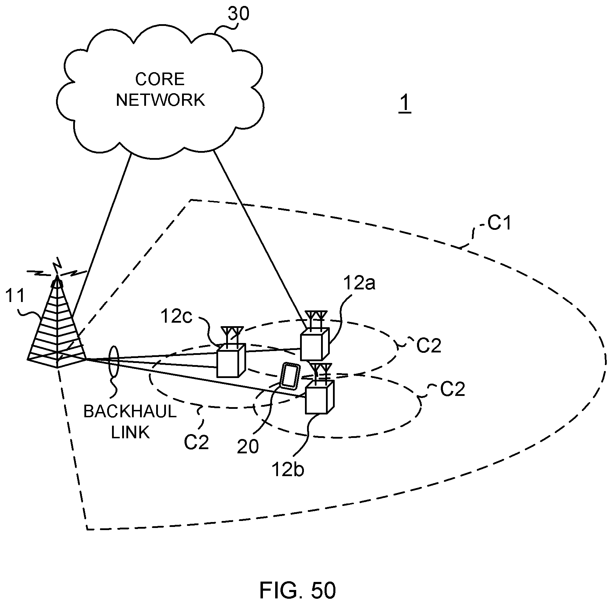

FIG. 50 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

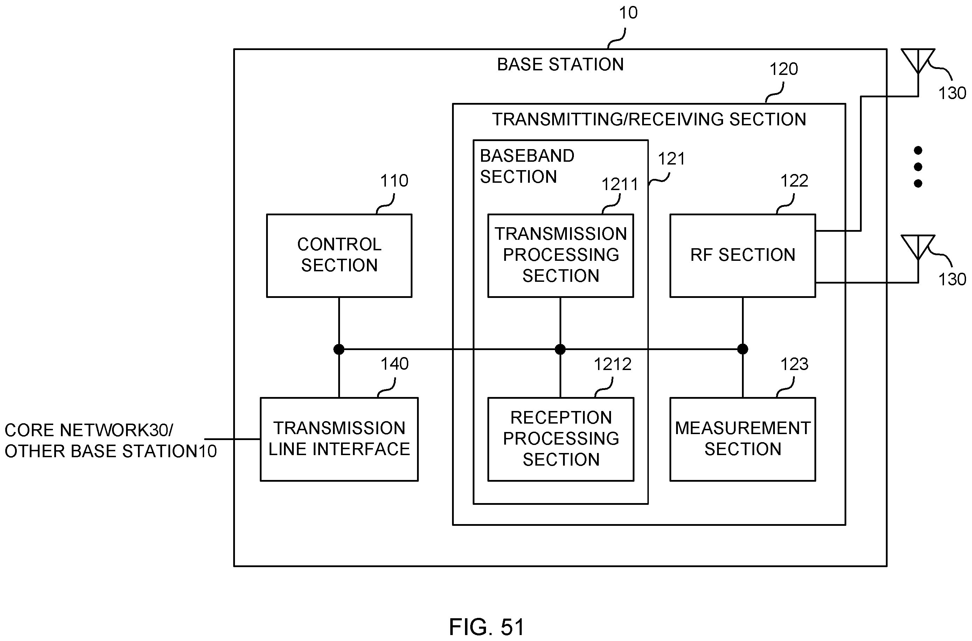

FIG. 51 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit a configuration of an enhanced codebook based on an enhanced type 2 codebook for a channel state information (CSI)-reference signal (RS) using more than 32 ports. The control section 110 may control reception of a report of a precoding matrix indicator (PMI) based on the enhanced codebook, based on the configuration.

The transmitting/receiving section 120 may transmit a configuration of an enhanced codebook based on an enhanced type 2 codebook for a channel state information (CSI)-reference signal (RS) using more than 32 ports and a rank higher than 4. The control section 110 may control reception of a report of a precoding matrix indicator (PMI) based on the enhanced codebook, based on the configuration.

The transmitting/receiving section 120 may transmit a configuration of an enhanced codebook based on a further enhanced type 2 port selection codebook for a channel state information (CSI)-reference signal (RS) using more than 32 ports. The control section 110 may control reception of a report of a precoding matrix indicator (PMI) based on the enhanced codebook, based on the configuration.

The transmitting/receiving section 120 may transmit a configuration of an enhanced codebook based on a codebook for coherent joint transmission for a channel state information (CSI)-reference signal (RS) using more than 32 ports. The control section 110 may control reception of a report of a precoding matrix indicator (PMI) based on the enhanced codebook, based on the configuration.

The transmitting/receiving section 120 may transmit a configuration of a report of channel state information (CSI) for a CSI-reference signal (RS) using more than 32 ports. The control section 110 may determine at least one of a number of CSI processing units occupied in CSI processing and CSI computation time, based on the configuration.

(User Terminal)

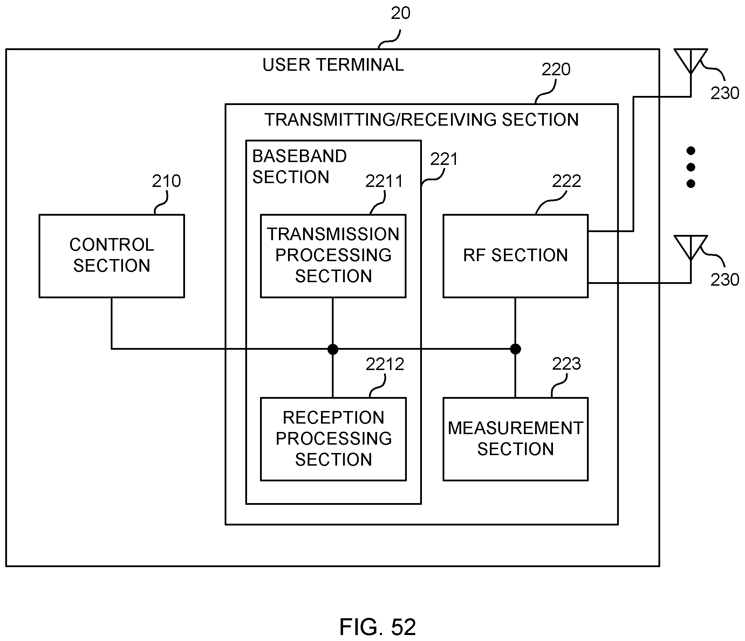

FIG. 52 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI computation, based on a resource for channel measurement. The resource for channel measurement may be, for example, a non zero power (NZP) CSI-RS resource. The measurement section 223 may derive interference measurement for CSI computation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a configuration (for example, a CSI report configuration) of an enhanced codebook based on an enhanced type 2 codebook for a channel state information (CSI)-reference signal (RS) using more than 32 ports. The control section 210 may control a report (for example, a CSI report, PUSCH transmission) of a precoding matrix indicator (PMI) based on the enhanced codebook, based on the configuration (Embodiment D0 to Embodiment D2).

The control section 210 may determine support or application of the enhanced codebook, based on at least one of a rank, the number (for example, $P_{CSI-RS}$) of CSI-RS ports, an antenna configuration (for example, n1-n2, ng-n1-n2, or ng1-ng2-n1-n2), a parameter combination, the number (for example, $N_3$) of subbands, and a ratio (for example, R) of a channel quality indicator (CQI) subband size to a PMI subband size.

The control section 210 may select a beam to be reported from a part of a plurality of beams configured by the configuration.

The configuration may include a parameter combination for ranks 5 to 8.

The transmitting/receiving section 220 may receive a configuration (for example, a CSI report configuration) of an enhanced codebook based on an enhanced type 2 codebook for a channel state information (CSI)-reference signal (RS) using more than 32 ports and a rank higher than 4. The control section 210 may control a report (for example, a CSI report, PUSCH transmission) of a precoding matrix indicator (PMI) based on the enhanced codebook, based on the configuration (Embodiment D3 to Embodiment D6).

The number of non-zero coefficients for one layer may be limited based on the number (for example, $M_l$) of frequency domain bases for the one layer.

The report may include an indicator (for example, $i_{1,9}$) indicating a layer corresponding to omission of a report of a bitmap indicating a position of a non-zero coefficient.

The report may include an indicator (for example, $i_{1,new}$) indicating a beam for ranks 5 to 8.

The transmitting/receiving section 220 may receive a configuration (for example, a CSI report configuration) of an enhanced codebook based on a further enhanced type 2 port selection codebook for a channel state information (CSI)-reference signal (RS) using more than 32 ports. The control section 210 may control a report (for example, a CSI report, PUSCH transmission) of a precoding matrix indicator (PMI) based on the enhanced codebook, based on the configuration (Embodiment Ex).

The control section 210 may determine support or application of the enhanced codebook, based on at least one of a rank, a number of CSI-RS ports, an antenna configuration, a parameter combination, a number of subbands, a ratio of a channel quality indicator (CQI) subband size to a PMI subband size, and a window size (for example, N, valueOfN) of a frequency domain base.

The control section 210 may select a port to be reported from a part of a plurality of CSI-RS ports configured by the configuration.

The configuration may include a parameter combination for ranks 5 to 8.

The transmitting/receiving section 220 may receive a configuration (for example, a CSI report configuration) of an enhanced codebook based on a codebook for coherent joint transmission for a channel state information (CSI)-reference signal (RS) using more than 32 ports. The control section 210 may control a report (for example, a CSI report, PUSCH transmission) of a precoding matrix indicator (PMI) based on the enhanced codebook, based on the configuration (Embodiment Fx).

The control section 210 may determine support or application of the enhanced codebook, based on at least one of a rank, a number of CSI-RS ports, an antenna configuration, a parameter combination, a number of subbands, a ratio of a channel quality indicator (CQI) subband size to a PMI subband size, and the number (for example, $N_{TRP}$) of CSI-RS resources.

The control section 210 may select a resource to be reported from a part of a plurality of CSI-RS resources configured by the configuration.

The configuration may include a limited parameter combination.

The transmitting/receiving section 220 may receive a configuration (for example, a CSI report configuration) of a report of channel state information (CSI) for a CSI-reference signal (RS) using more than 32 ports. The control section 210 may determine at least one of the number (for example, $O_{CPU}$) of CSI processing units (CPUs) occupied in CSI processing and CSI computation time (for example, $Z(m)$, $Z'(m)$), based on the configuration (Embodiment Gx).

The control section 210 may determine at least one of the number of CSI processing units and the CSI computation time, based on at least one of a codebook type, a number of CSI-RS ports, a number of CSI-RS resources, an antenna configuration, a rank, a parameter combination, and report quantity (for example, reportQuantity) .

The control section 210 may determine the number of CSI processing units, based on at least one of a codebook type, a number of CSI-RS resources, and a value reported as capability information.

The control section 210 may determine the CSI computation time, based on a subcarrier spacing and a value reported as capability information.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

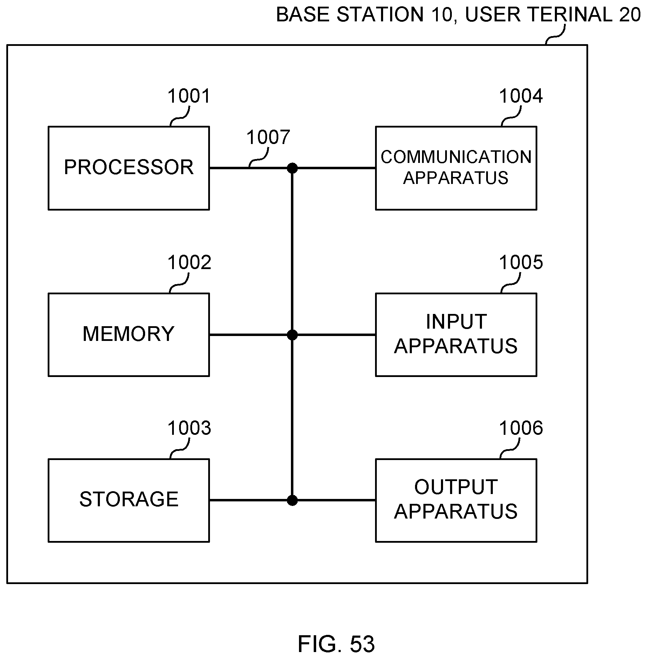

For example, a base station, a user terminal, and so on according to one embodiment of the present disclosure may function as a computer that executes the processes of the radio communication method of the present disclosure. FIG. 53 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

(Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

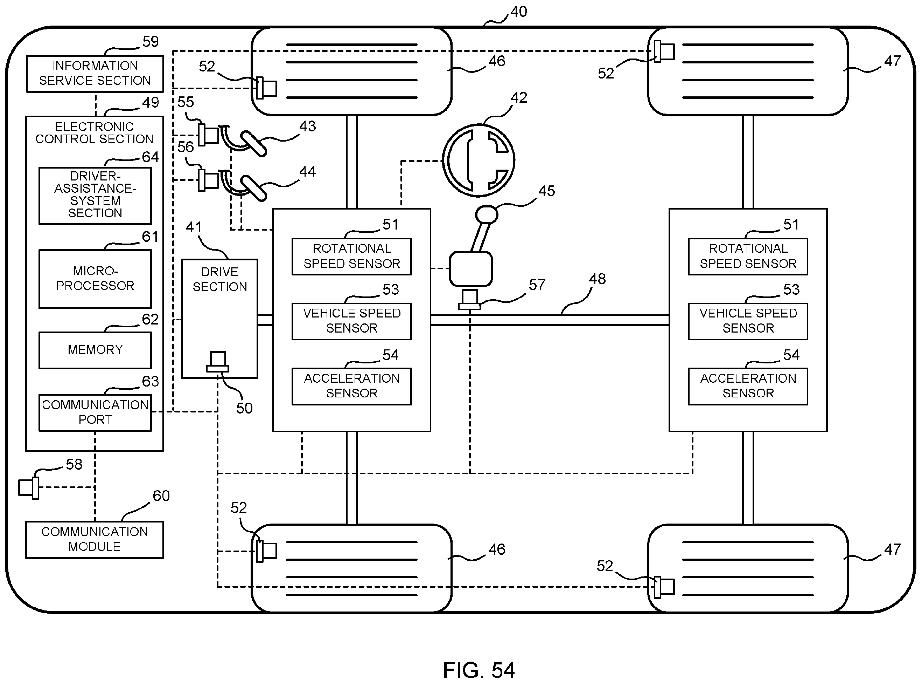

FIG. 54 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

**Claims**

1. A terminal comprising:

   a receiving section that receives a configuration of an enhanced codebook based on an enhanced type 2 codebook for a channel state information (CSI)-reference signal (RS) using more than 32 ports; and
   a control section that controls, based on the configuration, a report of a precoding matrix indicator (PMI) based on the enhanced codebook.

2. The terminal according to claim 1, wherein
   the control section determines support or application of the enhanced codebook, based on at least one of a rank, a number of CSI-RS ports, an antenna configuration, a parameter combination, a number of subbands, and a ratio of a channel quality indicator (CQI) subband size to a PMI subband size.

3. The terminal according to claim 1, wherein
the control section selects a beam to be reported from a part of a plurality of beams configured by the configuration.

4. The terminal according to claim 1, wherein
the configuration includes a parameter combination for ranks 5 to 8.

5. A radio communication method for a terminal, comprising:

receiving a configuration of an enhanced codebook based on an enhanced type 2 codebook for a channel state information (CSI)-reference signal (RS) using more than 32 ports; and
controlling, based on the configuration, a report of a precoding matrix indicator (PMI) based on the enhanced codebook.

6. A base station comprising:

a transmitting section that transmits a configuration of an enhanced codebook based on an enhanced type 2 codebook for a channel state information (CSI)-reference signal (RS) using more than 32 ports; and
a control section that controls, based on the configuration, reception of a report of a precoding matrix indicator (PMI) based on the enhanced codebook.

| Row | Ports $X$ | Density $\rho$ | cdm-Type | $(\bar{k}, \bar{l})$ | CDM group index j | $k'$ | $l'$ |
|---|---|---|---|---|---|---|---|
| 1 | 1 | 3 | No CDM | $(k_0, l_0)$, $(k_0 + 4, l_0)$, $(k_0 + 8, l_0)$ | 0,0,0 | 0 | 0 |
| 2 | 1 | 1, 0.5 | No CDM | $(k_0, l_0)$, | 0 | 0 | 0 |
| 3 | 2 | 1, 0.5 | FD-CDM2 | $(k_0, l_0)$, | 0 | 0, 1 | 0 |
| 4 | 4 | 1 | FD-CDM2 | $(k_0, l_0)$, $(k_0 + 2, l_0)$ | 0,1 | 0, 1 | 0 |
| 5 | 4 | 1 | FD-CDM2 | $(k_0, l_0)$, $(k_0, l_0 + 1)$ | 0,1 | 0, 1 | 0 |
| 6 | 8 | 1 | FD-CDM2 | $(k_0, l_0)$, $(k_1, l_0)$, $(k_2, l_0)$, $(k_3, l_0)$ | 0,1,2,3 | 0, 1 | 0 |
| 7 | 8 | 1 | FD-CDM2 | $(k_0, l_0)$, $(k_1, l_0)$, $(k_0, l_0 + 1)$, $(k_1, l_0 + 1)$ | 0,1,2,3 | 0, 1 | 0 |
| 8 | 8 | 1 | CDM4 (FD2,TD2) | $(k_0, l_0)$, $(k_1, l_0)$ | 0,1 | 0, 1 | 0, 1 |
| 9 | 12 | 1 | FD-CDM2 | $(k_0, l_0)$, $(k_1, l_0)$, $(k_2, l_0)$, $(k_3, l_0)$, $(k_4, l_0)$, $(k_5, l_0)$ | 0,1,2,3,4,5 | 0, 1 | 0 |
| 10 | 12 | 1 | CDM4 (FD2,TD2) | $(k_0, l_0)$, $(k_1, l_0)$, $(k_2, l_0)$ | 0,1,2 | 0, 1 | 0, 1 |
| 11 | 16 | 1, 0.5 | FD-CDM2 | $(k_0, l_0)$, $(k_1, l_0)$, $(k_2, l_0)$, $(k_3, l_0)$, $(k_0, l_0 + 1)$, $(k_1, l_0 + 1)$, $(k_2, l_0 + 1)$, $(k_3, l_0 + 1)$ | 0,1,2,3, 4,5,6,7 | 0, 1 | 0 |
| 12 | 16 | 1, 0.5 | CDM4 (FD2,TD2) | $(k_0, l_0)$, $(k_1, l_0)$, $(k_2, l_0)$, $(k_3, l_0)$ | 0,1,2,3 | 0, 1 | 0, 1 |
| 13 | 24 | 1, 0.5 | FD-CDM2 | $(k_0, l_0)$, $(k_1, l_0)$, $(k_2, l_0)$, $(k_0, l_0 + 1)$, $(k_1, l_0 + 1)$, $(k_2, l_0 + 1)$, $(k_0, l_1)$, $(k_1, l_1)$, $(k_2, l_1)$, $(k_0, l_1 + 1)$, $(k_1, l_1 + 1)$, $(k_2, l_1 + 1)$ | 0,1,2,3,4,5, 6,7,8,9,10,11 | 0, 1 | 0 |
| 14 | 24 | 1, 0.5 | CDM4 (FD2,TD2) | $(k_0, l_0)$, $(k_1, l_0)$, $(k_2, l_0)$, $(k_0, l_1)$, $(k_1, l_1)$, $(k_2, l_1)$ | 0,1,2,3,4,5 | 0, 1 | 0, 1 |
| 15 | 24 | 1, 0.5 | CDM8 (FD2,TD4) | $(k_0, l_0)$, $(k_1, l_0)$, $(k_2, l_0)$ | 0,1,2 | 0, 1 | 0, 1, 2, 3 |
| 16 | 32 | 1, 0.5 | FD-CDM2 | $(k_0, l_0)$, $(k_1, l_0)$, $(k_2, l_0)$, $(k_3, l_0)$, $(k_0, l_0 + 1)$, $(k_1, l_0 + 1)$, $(k_2, l_0 + 1)$, $(k_3, l_0 + 1)$, $(k_0, l_1)$, $(k_1, l_1)$, $(k_2, l_1)$, $(k_3, l_1)$, $(k_0, l_1 + 1)$, $(k_1, l_1 + 1)$, $(k_2, l_1 + 1)$, $(k_3, l_1 + 1)$ | 0,1,2,3, 4,5,6,7, 8,9,10,11, 12,13,14,15 | 0, 1 | 0 |
| 17 | 32 | 1, 0.5 | CDM4 (FD2,TD2) | $(k_0, l_0)$, $(k_1, l_0)$, $(k_2, l_0)$, $(k_3, l_0)$, $(k_0, l_1)$, $(k_1, l_1)$, $(k_2, l_1)$, $(k_3, l_1)$ | 0,1,2,3,4,5,6,7 | 0, 1 | 0, 1 |
| 18 | 32 | 1, 0.5 | CDM8 (FD2,TD4) | $(k_0, l_0)$, $(k_1, l_0)$, $(k_2, l_0)$, $(k_3, l_0)$ | 0,1,2,3 | 0, 1 | 0, 1, 2, 3 |

FIG. 1

EP 4 757 397 A1

FIG. 2A

| Index | $w_f(0)$ | $w_t(0)$ |
|---|---|---|
| 0 | 1 | 1 |

FIG. 2B

| Index | $[w_f(0) \quad w_f(1)]$ | $w_t(0)$ |
|---|---|---|
| 0 | $[+1 \quad +1]$ | 1 |
| 1 | $[+1 \quad -1]$ | 1 |

FIG. 2C

| Index | $[w_f(0) \quad w_f(1)]$ | $[w_t(0) \quad w_t(1)]$ |
|---|---|---|
| 0 | $[+1 \quad +1]$ | $[+1 \quad +1]$ |
| 1 | $[+1 \quad -1]$ | $[+1 \quad +1]$ |
| 2 | $[+1 \quad +1]$ | $[+1 \quad -1]$ |
| 3 | $[+1 \quad -1]$ | $[+1 \quad -1]$ |

FIG. 2D

| Index | $[w_f(0) \quad w_f(1)]$ | $[w_t(0) \quad w_t(1) \quad w_t(2) \quad w_t(3)]$ |
|---|---|---|
| 0 | $[+1 \quad +1]$ | $[+1 \quad +1 \quad +1 \quad +1]$ |
| 1 | $[+1 \quad -1]$ | $[+1 \quad +1 \quad +1 \quad +1]$ |
| 2 | $[+1 \quad +1]$ | $[+1 \quad -1 \quad +1 \quad -1]$ |
| 3 | $[+1 \quad -1]$ | $[+1 \quad -1 \quad +1 \quad -1]$ |
| 4 | $[+1 \quad +1]$ | $[+1 \quad +1 \quad -1 \quad -1]$ |
| 5 | $[+1 \quad -1]$ | $[+1 \quad +1 \quad -1 \quad -1]$ |
| 6 | $[+1 \quad +1]$ | $[+1 \quad -1 \quad -1 \quad +1]$ |
| 7 | $[+1 \quad -1]$ | $[+1 \quad -1 \quad -1 \quad +1]$ |

| # of ports | Freq. density (RE/RB/port) | Component resource (F, T) | CDM |
|---|---|---|---|
| 1 | 1/2, 1, 3 | N/A | N/A |
| 2 | 1/2, 1 | (2, 1) | FD2 |
| 4 | 1 | (4, 1) or (2, 2) | FD2 |
| 8 | 1 | (2, 1) or (2, 2) | FD2 |
| 8 | 1 | (2, 2) | FD2TD2 |
| 12 | 1 | (2, 1) | FD2 |
| 12 | 1 | (2, 2) | FD2TD2 |
| 16 | 1/2, 1 | (2, 2) | FD2, FD2TD2 |
| 24 | 1/2, 1 | (2, 2) or (2, 4) | FD2, FD2TD2 |
| 24 | 1/2, 1 | (2, 4) | FD2TD4 |
| 32 | 1/2, 1 | (2, 2) or (2, 4) | FD2, FD2TD2 |
| 32 | 1/2, 1 | (2, 4) | FD2TD4 |

FIG. 3

FIG. 4

FIG. 5A

FIG. 5B

CSI-RS

EP 4 757 397 A1

FIG. 6A

| Index | $w_t(0)$ | $w_t(1)$ |
|---|---|---|
| 0 | +1 | +1 |
| 1 | +1 | -1 |

FIG. 6B

| Index | $w_t(0)$ | $w_t(1)$ | $w_t(2)$ |
|---|---|---|---|
| 0 | $\exp(j0 \cdot 0)$ | $\exp(j0 \cdot 1)$ | $\exp(j0 \cdot 2)$ |
| 1 | $\exp(j2\pi/3 \cdot 0)$ | $\exp(j2\pi/3 \cdot 1)$ | $\exp(j2\pi/3 \cdot 2)$ |
| 2 | $\exp(j4\pi/3 \cdot 0)$ | $\exp(j4\pi/3 \cdot 1)$ | $\exp(j4\pi/3 \cdot 2)$ |

FIG. 6C

| Index | $w_t(0)$ | $w_t(1)$ | $w_t(2)$ | $w_t(3)$ |
|---|---|---|---|---|
| 0 | +1 | +1 | +1 | +1 |
| 1 | +1 | +j | -1 | -j |
| 2 | +1 | -1 | +1 | -1 |
| 3 | +1 | -j | -1 | +j |

FIG. 7A

When CSI-RSs for previous release overlap with some CSI-RSs for new release

FIG. 7B

When CSI-RSs for previous release overlap with all CSI-RSs for new release

CSI-RS for Previous Release

CSI-RS for New Release

FIG. 8

FIG. 9

FIG. 10

FIG. 11

OFDM SYMBOL →

SUBCARRIER

Legacy CSI-RS Resource → CSI-RS Port #0-#31

Additional CSI-RS Resource → CSI-RS Port #32-#63

FIG. 12

OFDM SYMBOL

SUBCARRIER

Legacy CSI-RS Resource → CSI-RS Port #0-#31 ⟶ Different Scrambling IDs

Additional CSI-RS Resource → CSI-RS Port #32-#63

FIG. 13

EP 4 757 397 A1

TIME

FREQUENCY

slot/sub-slot/sub-frame

CSI-RS resource #1 (port #0-#31)

CSI-RS resource #2 (port #32-#63)

FIG. 14

FIG. 15

slot/sub-slot/sub-frame

PRB

TIME

FREQUENCY

CSI-RS resource #1 (port #0-#31)

CSI-RS resource #2 (port #32-#63)

## Supported configurations of $(N_1, N_2)$ and $(O_1, O_2)$

| Number of CSI-RS antenna ports, $P_{CSI\text{-}RS}$ | $(N_1, N_2)$ | $(O_1, O_2)$ |
|---|---|---|
| 4 | (2,1) | (4,1) |
| 8 | (2,2) | (4,4) |
| | (4,1) | (4,1) |
| 12 | (3,2) | (4,4) |
| | (6,1) | (4,1) |
| 16 | (4,2) | (4,4) |
| | (8,1) | (4,1) |
| 24 | (4,3) | (4,4) |
| | (6,2) | (4,4) |
| | (12,1) | (4,1) |
| 32 | (4,4) | (4,4) |
| | (8,2) | (4,4) |
| | (16,1) | (4,1) |

FIG. 16

## Supported configurations of $\left(N_g, N_1, N_2\right)$ and $\left(O_1, O_2\right)$

| Number of CSI-RS antenna ports, $P_{\text{CSI-RS}}$ | $\left(N_g, N_1, N_2\right)$ | $\left(O_1, O_2\right)$ |
|---|---|---|
| 8 | (2,2,1) | (4,1) |
| | (2,4,1) | (4,1) |
| 16 | (4,2,1) | (4,1) |
| | (2,2,2) | (4,4) |
| 32 | (2,8,1) | (4,1) |
| | (4,4,1) | (4,1) |
| | (2,4,2) | (4,4) |
| | (4,2,2) | (4,4) |

FIG. 17

## Supported configurations of $(N_1, N_2)$ and $(O_1, O_2)$

| Number of CSI-RS antenna ports, $P_{CSI-RS}$ | $(N_1, N_2)$ | $(O_1, O_2)$ |
|---|---|---|
| 48 | (24,1) | (4,1) |
| | (12,2) | (4,4) |
| | (8,3) | (4,4) |
| | (6,4) | (4,4) |
| 64 | (32,1) | (4,1) |
| | (16,2) | (4,4) |
| | (8,4) | (4,4) |
| 72 | (36,1) | (4,1) |
| | (18,2) | (4,4) |
| | (12,3) | (4,4) |
| | (9,4) | (4,4) |
| 96 | (48,1) | (4,1) |
| | (24,2) | (4,4) |
| | (16,3) | (4,4) |
| | (12,4) | (4,4) |
| | (8,6) | (4,1) |
| 128 | (64,1) | (4,1) |
| | (32,2) | (4,4) |
| | (16,4) | (4,4) |
| | (8,8) | (4,4) |

FIG. 18

| Number of CSI-RS antenna ports, $P_{\text{CSI-RS}}$ | $N_g$ | $(N_1, N_2)$ | $(O_1, O_2)$ |
|---|---|---|---|
| 48 | 6 | (2,2),(4,1) [legacy 8 ports] | |
| | 4 | (3,2),(6,1) [legacy 12 ports] | |
| 64 | *16 | *(2,1) [legacy 4 ports] | |
| | *8 | *(2,2),(4,1) | |
| | *4 | *(4,2),(8,1) [legacy 16 ports] | |
| | 2 | (4,4),(8,2),(16,1) [legacy 32 ports] | |
| 72 | *18 | *(2,1) | |
| | 6 | (3,2),(6,1) | |
| 96 | *24 | *(2,1) | |
| | *12 | *(2,2),(4,1) | |
| | *8 | *(3,2),(6,1) | |
| | 6 | (4,2),(8,1) | |
| | 4 | (4,3),(6,2),(12,1) [legacy 24 ports] | |
| 128 | *32 | *(2,1) | |
| | *16 | *(2,2),(4,1) | |
| | *8 | *(4,2),(8,1) | |
| | 4 | (4,4),(8,2),(16,1) | |

FIG. 19

| Number of CSI-RS antenna ports, $P_{CSI-RS}$ | $\left(N_g, N_1, N_2\right)$ | $\left(O_1, O_2\right)$ |
|---|---|---|
| 48 | (6,2,2) | (4,4) |
| | (6,4,1) | (4,1) |
| | (4,3,2) | (4,4) |
| | (4,6,1) | (4,1) |
| 64 | *(16,2,1) | *(4,1) |
| | *(8,2,2) | *(4,4) |
| | *(8,4,1) | *(4,1) |
| | *(4,4,2) | *(4,4) |
| | *(4,8,1) | *(4,1) |
| | (2,4,4) | (4,4) |
| | (2,8,1) | (4,4) |
| | (2,16,1) | (4,1) |
| 72 | *(18,2,1) | *(4,1) |
| | (6,3,2) | (4,4) |
| | (6,6,1) | (4,1) |
| 96 | *(24,2,1) | *(4,1) |
| | *(12,2,2) | *(4,4) |
| | *(12,4,1) | *(4,1) |
| | *(8,3,2) | *(4,4) |
| | *(8,6,1) | *(4,1) |
| | (6,4,2) | (4,4) |
| | (6,8,1) | (4,1) |
| | (4,4,3) | (4,4) |
| | (4,6,2) | (4,4) |
| | (4,12,1) | (4,1) |
| 128 | *(32,2,1) | *(4,1) |
| | *(16,2,2) | *(4,4) |
| | *(16,4,1) | *(4,1) |
| | *(8,4,2) | *(4,4) |
| | *(8,8,1) | *(4,1) |
| | (4,4,4) | (4,4) |
| | (4,8,2) | (4,4) |
| | (4,16,1) | (4,1) |

FIG. 20

## FIG. 21A

(2,8,2), 64 ports

\ Horizontally polarized antenna element

./ Vertically polarized antenna element

## FIG. 21B

(4,8,2), 128 ports

EP 4 757 397 A1

| Number of CSI-RS antenna ports, $P_{\text{CSI-RS}}$ | $\left(N_{g1}, N_{g2}\right)$ | $\left(N_1, N_2\right)$ | $\left(O_1, O_2\right)$ |
|---|---|---|---|
| 64 | *(16,1) | *(2,1) | *(4,1) |
| | *(8,2) | *(2,1) | *(4,1) |
| | *(4,4) | *(2,1) | *(4,1) |
| | *(8,1) | *(2,2) | *(4,4) |
| | *(4,2) | *(2,2) | *(4,4) |
| | *(8,1) | *(4,1) | *(4,1) |
| | *(4,2) | *(4,1) | *(4,1) |
| | *(4,1) | *(4,2) | *(4,4) |
| | *(2,2) | *(4,2) | *(4,4) |
| | *(4,1) | *(8,1) | *(4,1) |
| | *(2,2) | *(8,1) | *(4,1) |
| | (2,1) | (4,4) | (4,4) |
| | (2,1) | (8,2) | (4,4) |
| | (2,1) | (16,1) | (4,1) |

FIG. 22

| Number of CSI-RS antenna ports, $P_{\text{CSI-RS}}$ | $\left(N_{g1}, N_{g2}, N_1, N_2\right)$ | $\left(O_1, O_2\right)$ |
|---|---|---|
| 64 | *(16,1,2,1) | *(4,1) |
| | *(8,2,2,1) | *(4,1) |
| | *(4,4,2,1) | *(4,1) |
| | *(8,1,2,2) | *(4,4) |
| | *(4,2,2,2) | *(4,4) |
| | *(8,1,4,1) | *(4,1) |
| | *(4,2,4,1) | *(4,1) |
| | *(4,1,4,2) | *(4,4) |
| | *(2,2,4,2) | *(4,4) |
| | *(4,1,8,1) | *(4,1) |
| | *(2,2,8,1) | *(4,1) |
| | (2,1,4,4) | (4,4) |
| | (2,1,8,2) | (4,4) |
| | (2,1,16,1) | (4,1) |

FIG. 23

FIG. 24A

(2,2,8,2), 128 ports

EP 4 757 397 A1

FIG. 24B

(4,1,8,2), 128 ports

Supported configurations of $(N_1, N_2)$ and $(O_1, O_2)$

| Number of CSI-RS antenna ports, $P_{CSI\text{-}RS}$ | $(N_1, N_2)$ | $(O_1, O_2)$ |
|---|---|---|
| 64 | (32,1) | (4,1) |
| | (16,2) | (4,4) |
| | (8,4) | (4,4) |

FIG. 25

Supported configurations of $(N_1, N_2)$ and $(O_1, O_2)$

| Number of CSI-RS antenna ports, $P_{CSI\text{-}RS}$ | $\left( N_g, N_1, N_2 \right)$ | $\left( O_1, O_2 \right)$ |
|---|---|---|
| 64 | (2,4,1) | (4,4) |
| | (2,8,2) | (4,4) |
| | (2,16,1) | (4,1) |

FIG. 26

Supported configurations of $(N_1, N_2)$ and $(O_1, O_2)$

| Number of CSI-RS antenna ports, $P_{CSI\text{-}RS}$ | $\left(N_{g1}, N_{g2}, N_1, N_2\right)$ | $\left(O_1, O_2\right)$ |
|---|---|---|
| 64 | (2,1,4,4) | (4,4) |
| | (2,1,8,2) | (4,4) |
| | (2,1,16,1) | (4,1) |

FIG. 27

EP 4 757 397 A1

Codebook parameter configurations for $L$, $\beta$ and $p_v$

| paramCombination-r16 | $L$ | $p_v$ | | $\beta$ |
| --- | --- | --- | --- | --- |
| | | $v \in \{1,2\}$ | $v \in \{3,4\}$ | |
| 1 | 2 | ¼ | 1/8 | ¼ |
| 2 | 2 | ¼ | 1/8 | ½ |
| 3 | 4 | ¼ | 1/8 | ¼ |
| 4 | 4 | ¼ | 1/8 | ½ |
| 5 | 4 | ¼ | ¼ | ¾ |
| 6 | 4 | ½ | ¼ | ½ |
| 7 | 6 | ¼ | - | ½ |
| 8 | 6 | ¼ | - | ¾ |

FIG. 28

Example 1

**Codebook parameter configurations for** $L$, $\beta$ **and** $p_v$

| paramCombination-r19 | $L$ | $p_v$ | | | | $\beta$ |
|---|---|---|---|---|---|---|
| | | $v \in \{1,2\}$ | $v \in \{3,4\}$ | $v \in \{5,6\}$ | $v \in \{7,8\}$ | |
| 1 | 2 | ¼ | 1/8 | 1/8 | 1/16 | ¼ |
| 2 | 2 | ¼ | 1/8 | 1/8 | 1/16 | ½ |
| 3 | 4 | ¼ | 1/8 | 1/8 | 1/8 | ¼ |
| 4 | 4 | ¼ | 1/8 | 1/8 | 1/16 | ½ |
| 5 | 4 | ¼ | ¼ | ¼ | 1/8 | ¾ |
| 6 | 4 | ½ | ¼ | | | ½ |
| 7 | 6 | ¼ | - | | | ½ |
| 8 | 6 | ¼ | - | | | ¾ |

FIG. 29

EP 4 757 397 A1

Example 2

**Codebook parameter configurations for $L$, $\beta$ and $p_v$**

| paramCombination-r19 | $L$ | $p_v$ | | | $\beta$ |
|---|---|---|---|---|---|
| | | $v \in \{1,2\}$ | $v \in \{3,4\}$ | $v \in \{5,6,7,8\}$ | |
| 1 | 2 | ¼ | 1/8 | 1/16 | ¼ |
| 2 | 2 | ¼ | 1/8 | 1/16 | ½ |
| 3 | 4 | ¼ | 1/8 | 1/8 | ¼ |
| 4 | 4 | ¼ | 1/8 | 1/16 | ½ |
| 5 | 4 | ¼ | ¼ | 1/8 | ¾ |
| 6 | 4 | ½ | ¼ | 1/8 | ½ |
| 7 | 6 | ¼ | - | | ½ |
| 8 | 6 | ¼ | - | | ¾ |

FIG. 30

Example 3

**Codebook parameter configurations for** $L$, $\beta$ **and** $p$

| paramCombination-r19 | $L$ | $p$ | $\beta$ |
|:---:|:---:|:---:|:---:|
| 1 | 2 | 1/8 | ¼ |
| 2 | 2 | 1/8 | ½ |

FIG. 31

Example 4

**Codebook parameter configurations for** $L,$ $\beta$ **and** $p_v$

| paramCombination-r16 | $L$ | $p_v$ | | $\beta$ |
|---|---|---|---|---|
| | | $\upsilon \in \{1,2.3.4\}$ | $\upsilon \in \{5,6,7,8\}$ | |
| 1 | 2 | 1/8 | 1/16 | ¼ |
| 2 | 2 | 1/8 | 1/16 | ½ |
| 3 | 4 | 1/8 | 1/8 | ¼ |
| 4 | 4 | 1/8 | 1/16 | ½ |

FIG. 32

eType II codebook for more than 32 ports
Example 1

| Rank | Max number of NZCs |
|---|---|
| v=1 | $K_0$ |
| v=2,3,4,5,6,7,8 | $2K_0$ |

FIG. 33

eType II codebook for more than 32 ports

Example 2-1

| Rank | Max number of NZCs |
|---|---|
| v=1 | $K_0$ |
| v=2,3,4 | $2K_0$ |
| v=5,6,7,8 | $4K_0$ |

FIG. 34

eType II codebook for more than 32 ports

Example 2-2

| Rank | Max number of NZCs |
|---|---|
| v=1 | $K_0$ |
| v=2,3,4 | $2K_0$ |
| v=5,6 | $3K_0$ |
| v=7,8 | $4K_0$ |

FIG. 35

eTYpe II codebook for more than 32 ports
Example 2-3

| Rank | Max number of NZCs |
|---|---|
| v=1 | $K_0$ |
| v=2 | $2K_0$ |
| v=3,4,5,6 | $3K_0$ |
| v=7,8 | $4K_0$ |

FIG. 36

## Codebook parameter configurations for $\alpha$, $M$ and $\beta$

| paramCombination-r17 | $M$ | $\alpha$ | $\beta$ |
|---|---|---|---|
| 1 | 1 | 3/4 | 1/2 |
| 2 | 1 | 1 | 1/2 |
| 3 | 1 | 1 | 3/4 |
| 4 | 1 | 1 | 1 |
| 5 | 2 | 1/2 | 1/2 |
| 6 | 2 | 3/4 | 1/2 |
| 7 | 2 | 1 | 1/2 |
| 8 | 2 | 1 | 3/4 |

FIG. 37

Example 1

**Codebook parameter configurations for** $\alpha$, $M$ **and** $\beta$

| paramCombination-r19 | M | $\alpha$ | $\beta$ |
|---|---|---|---|
| 1 | 1 | ¾ | ½ |
| 2 | 1 | 1 | ½ |
| 3 | 1 | 1 | ¾ |
| 4 | 1 | 1 | 1 |
| 5 | 2 | ½ | ½ |
| 6 | 2 | ¾ | ½ |
| 7 | 2 | 1 | ½ |
| 8 | 2 | 1 | ¾ |
| 9 | 1 | 1/4 | 1/2 |
| 10 | 1 | 1/2 | 1/2 |
| 11 | 1 | 1/2 | 3/4 |
| ... | ... | ... | ... |

FIG. 38

Example 2
## Codebook parameter configurations for $\alpha$, $M$ and $\beta$

| paramCombination-r19 | M | $\alpha$ | $\beta$ |
|---|---|---|---|
| 1 | 1 | ¾ | ½ |
| 2 | 1 | 1 | ½ |
| 3 | 1 | 1 | ¾ |
| 4 | 1 | 1 | 1 |
| 5 | 1 | 1/4 | 1/2 |
| 6 | 1 | 1/2 | 1/2 |
| 7 | 2 | 1 | ½ |
| 8 | 2 | 1 | ¾ |

FIG. 39

Example 3

**Codebook parameter configurations for $\alpha$, $M$ and $\beta$**

| paramCombination-r19 | $M$ | $\alpha_v$ | | $\beta$ |
|---|---|---|---|---|
| | | $v \in \{1,2,3,4\}$ | $v \in \{5,6,7,8\}$ | |
| 1 | 1 | ¾ | 1/2 | ½ |
| 2 | 1 | 1 | 1/2 | ½ |
| 3 | 1 | 1 | 1/2 | ¾ |
| 4 | 1 | 1 | 3/4 | 1 |
| 5 | 1 | 1/4 | 1/4 | 1/2 |
| 6 | 1 | 1/2 | 1/4 | 1/2 |
| 7 | 2 | 1 | 3/4 | ½ |
| 8 | 2 | 1/2 | 1/2 | ¾ |

FIG. 40

eTYPE II PS codebook for more than 32 ports

Example 1

| Rank | Max number of NZCs |
|---|---|
| v=1 | $K_0$ |
| v=2,3,4,5,6,7,8 | $2K_0$ |

FIG. 41

eType II PS codebook for more than 32 ports

Example 2-1

| Rank | Max number of NZCs |
|---|---|
| v=1 | $K_0$ |
| v=2,3,4 | $2K_0$ |
| v=5,6,7,8 | $4K_0$ |

FIG. 42

EP 4 757 397 A1

eType II PS codebook for more than 32 ports

Example 2-2

| Rank | Max number of NZCs |
|---|---|
| v=1 | $K_0$ |
| v=2,3,4 | $2K_0$ |
| v=5,6 | $3K_0$ |
| v=7,8 | $4K_0$ |

FIG. 43

eType II PS codebook for more than 32 ports
Example 2-3

| Rank | Max number of NZCs |
|---|---|
| v=1 | $K_0$ |
| v=2 | $2K_0$ |
| v=3,4,5,6 | $3K_0$ |
| v=7,8 | $4K_0$ |

FIG. 44

**Codebook parameter configurations for** $\{L_1, \dots, L_{N_{TRP}}\}$

| $N_{TRP}$ | $paramCombination\text{-}CJT\text{-}L\text{-}r18$ | $\{L_1, \dots, L_{N_{TRP}}\}$ |
|---|---|---|
| 1 | 1 | {2} |
|  | 2 | {4} |
|  | 3 | {6} |
| 2 | 4 | {2,2} |
|  | 5 | {2,4} |
|  | 6 | {4,2} |
|  | 7 | {4,4} |
| 3 | 8 | {2,2,2} |
|  | 9 | {2,2,4} |
|  | 10 | {2,4,2} |
|  | 11 | {4,2,2} |
|  | 12 | {4,4,4} |
| 4 | 13 | {2,2,2,2} |
|  | 14 | {2,2,2,4} |
|  | 15 | {2,2,4,4} |
|  | 16 | {4,4,4,4} |

FIG. 45

## Codebook parameter configurations for $\{\alpha_1, \ldots, \alpha_{N_{TRP}}\}$

| $N_{TRP}$ | paramCombination-CJT-PS-alpha-r18 | $\{\alpha_1, \ldots, \alpha_{N_{TRP}}\}$ |
|---|---|---|
| 1 | 1 | $\{1/2\}$ |
| | 2 | $\{3/4\}$ |
| | 3 | $\{1\}$ |
| 2 | 4 | $\{1/2, 1/2\}$ |
| | 5 | $\{1/2, 1\}$ |
| | 6 | $\{1, 1/2\}$ |
| | 7 | $\{3/4, 3/4\}$ |
| | 8 | $\{1, 1\}$ |
| 3 | 9 | $\{1/2, 1/2, 1/2\}$ |
| | 10 | $\{1/2, 1/2, 3/4\}$ |
| | 11 | $\{1/2, 3/4, 1/2\}$ |
| | 12 | $\{3/4, 1/2, 1/2\}$ |
| | 13 | $\{1/2, 1/2, 1\}$ |
| | 14 | $\{1/2, 1, 1/2\}$ |
| | 15 | $\{1, 1/2, 1/2\}$ |
| | 16 | $\{1, 1, 1\}$ |
| 4 | 17 | $\{1/2, 1/2, 1/2, 1/2\}$ |
| | 18 | $\{1/2, 1/2, 1/2, 1\}$ |
| | 19 | $\{1/2, 1/2, 1, 1\}$ |
| | 20 | $\{1, 1, 1, 1\}$ |

FIG. 46

Example
## Codebook parameter configurations for $\{L_1, ..., L_{N_{TRP}}\}$

| $N_{TRP}$ | $paramCombination\text{-}CJT\text{-}L\text{-}r18$ | $\{L_1, ..., L_{N_{TRP}}\}$ |
|---|---|---|
| 4 | 13 | $\{2,2,2,2\}$ |
| | | |
| | | |
| | 16 | $\{4,4,4,4\}$ |

FIG. 47

EP 4 757 397 A1

## CSI computation delay requirement 1

| $\mu$ | $Z_1$ [symbols] | |
|---|---|---|
| | $Z_1$ | $Z'_1$ |
| 0 | 10 | 8 |
| 1 | 13 | 11 |
| 2 | 25 | 21 |
| 3 | 43 | 36 |

FIG. 48

**CSI computation delay requirement 2**

| $\mu$ | $Z_1$ [symbols] | | $Z_2$ [symbols] | | $Z_3$ [symbols] | |
|---|---|---|---|---|---|---|
| | $Z_1$ | $Z'_1$ | $Z_2$ | $Z'_2$ | $Z_3$ | $Z'_3$ |
| 0 | 22 | 16 | 40 | 37 | 22 | $X_0$ |
| 1 | 33 | 30 | 72 | 69 | 33 | $X_1$ |
| 2 | 44 | 42 | 141 | 140 | min(44,$X_2$+ KB$_1$) | $X_2$ |
| 3 | 97 | 85 | 152 | 140 | min(97, $X_3$+ KB$_2$) | $X_3$ |
| 5 | 388 | 340 | 608 | 560 | min(388, X5+ KB3) | X5 |
| 6 | 776 | 680 | 1216 | 1120 | min(776, X6+ KB4) | X6 |

FIG. 49

EP 4 757 397 A1

FIG. 50

FIG. 51

FIG. 52

EP 4 757 397 A1

BASE STATION 10, USER TERINAL 20

| 1001 | 1004 |
|---|---|
| PROCESSOR | COMMUNICATION APPARATUS |
| 1002 | 1005 |
| MEMORY | INPUT APPARATUS |
| 1003 | 1006 |
| STORAGE | OUTPUT APPARATUS |

1007

FIG. 53

FIG. 54

## INTERNATIONAL SEARCH REPORT

| International application No. |
| --- |
| **PCT/JP2023/028619** |

| A. | CLASSIFICATION OF SUBJECT MATTER |
| --- | --- |

*H04W 24/10*(2009.01)i; *H04W 16/28*(2009.01)i; *H04W 72/232*(2023.01)i
FI:   H04W24/10; H04W16/28; H04W72/232

According to International Patent Classification (IPC) or to both national classification and IPC

| B. | FIELDS SEARCHED |
| --- | --- |

Minimum documentation searched (classification system followed by classification symbols)

H04W4/00-99/00, H04B7/24-7/26

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2015-536099 A (INTERDIGITAL PATENT HOLDINGS INC.) 17 December 2015 (2015-12-17)<br>    claims, paragraphs [0110], [0300] | 1, 3, 5, 6 |
| A | | 2, 4 |
| Y | WO 2021/024326 A1 (NTT DOCOMO, INC.) 11 February 2021 (2021-02-11)<br>    paragraphs [0128], [0135] | 1, 3, 5, 6 |
| Y | APPLE INC. Views on Rel-18 MIMO CSI enhancement. 3GPP TSG RAN WG1 #113 R1-2305228. Internet <URL:https://www.3gpp.org/ftp/tsg_ran/WG1_RL1/TSGR1_113/Docs/R1-2305228.zip>. 15 May 2023<br>    p. 1 | 1, 3, 5, 6 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 February 2024** | **20 February 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2023/028619**

| Patent document cited in search report | | | Publication date (day/month/year) | Patent family member(s) | | | Publication date (day/month/year) |
|---|---|---|---|---|---|---|---|
| JP | 2015-536099 | A | 17 December 2015 | US | 2014/0098689 | A1 | |
| | | | | claims, paragraphs [0101], [0180] | | | |
| | | | | WO | 2014/052806 | A1 | |
| WO | 2021/024326 | A1 | 11 February 2021 | US | 2022/0279360 | A1 | |
| | | | | paragraphs [0151], [0158] | | | |

Form PCT/ISA/210 (patent family annex) (July 2022)

**REFERENCES CITED IN THE DESCRIPTION**

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010